# EUROPÄISCHE PATENTSCHRIFT

(11) **EP 4 380 717 B1**
(45) Veröffentlichungstag und Bekanntmachung des Hinweises auf die Patenterteilung: **31.12.2025**
(21) Anmeldenummer: 22751721.6
(22) Anmeldetag: 20.07.2022
(51) Int. Cl.: B01D 53/22, C10L 3/10

(54) **APPARAT UND VERFAHREN ZUR SIMULTANEN BEHANDLUNG VERSCHIEDENER SCHWANKENDER GASSTRÖME**
APPARATUS AND METHOD FOR SIMULTANEOUSLY TREATING DIFFERENT FLUCTUATING GAS STREAMS
APPAREIL ET PROCÉDÉ DE TRAITEMENT SIMULTANÉ DE DIFFÉRENTS FLUX DE GAZ DIVERS

(30) Priorität: 03.08.2021 EP 21189420
(43) Veröffentlichungstag der Anmeldung: 12.06.2024
(73) Patentinhaber: Evonik Operations GmbH, 45128 Essen (DE)
(72) Erfinder: PRISKE, Markus, 5020 Salzburg (AT)
(74) Vertreter: Evonik Patent Association
(86) Internationale Anmeldenummer: PCT/EP2022/070296
(87) Internationale Veröffentlichungsnummer: WO 2023/011919

(56) Entgegenhaltungen:
- US-A1- 2020 047 113
- US-A1- 2020 254 383
- US-A1- 2020 269 188

## Beschreibung

Die vorliegende Erfindung betrifft eine neue Apparatur und ein Verfahren zur simultanen Auftrennung mehrerer Gasströme mit unterschiedlichen Zusammensetzungen mittels Gasseparationsmembranen, wobei die jeweils der Apparatur bzw. dem Verfahren zugeführten Gasströme in ihren jeweiligen Volumenströmen und Zusammensetzungen Schwankungen unterliegen können.

Eine simultane Auftrennung mehrerer Gasströme mit unterschiedlichen und schwankenden Zusammensetzungen kann zum Beispiel notwendig sein bei der ex-situ Methanisierung von Biogasen oder vergleichbaren Gasen mit Wasserstoff, wenn der Wasserstoffstrom nur in schwankenden Mengen zur Verfügung steht, wie dies häufig bei Wasserstoff aus Elektrolysen welche mit Strom aus erneuerbaren Quellen wie Windkraft betrieben wurden der Fall ist. In der WO2015 / 0I7875 wird ein Prozess beschrieben in dem eine gleichzeitige oder abwechselnde Auftrennung von Biogas und Produktgas der Methanisierung erfolgt. Das Problem der wechselnd hohen Edukt- und Produktströme wird über aufwendige Gas- bzw. Flüssigspeicher gelöst.

Alternative Ansätze für die Behandlung unterschiedlicher, schwankender Gasströme mit Gasseparationsmembranen sind Verfahren, in denen entweder separate Trenneinheiten für die verschiedenen Gasströme vorgesehen werden oder in denen die Ströme gemischt und als ein Mischstrom der Trenneinheit zugeführt werden, womit das angestrebte Trennergebnis nicht oder nur mit deutlichem Mehraufwand erreicht werden kann. Zudem müssen Schwankungen in den Gasströmen bzgl. Menge oder Zusammensetzung mit ggf. starken Eingriffen in Betriebsparameter wie Druck, Temperatur und Membranfläche kompensiert werden. Das Vorsehen entsprechender Überkapazitäten oder Gasspeicher ist teuer.

So wird z.B. in der US 2020/0254383 eine Anlage zur Auftrennung von Gasgemischen offenbart, welche nur eine Feedgasleitung aufweist. Diese Anlage ist nicht in der Lage zwei verschiedene, schwankende Gasströme mit unterschiedlichen Zusammensetzungen und Volumenströmen effizient und ohne aufwendige Steuerungs- und Regelungstechnik zu behandeln.

Es besteht daher ein hoher Bedarf an effizienten Apparaturen und Verfahren zur simultanen Auftrennung mehrerer Gasströme mit unterschiedlichen Zusammensetzungen.

Aufgabe der vorliegenden Erfindung war es daher eine neue Apparatur und ein neues Verfahren bereitzustellen, welche die Nachteile der Apparaturen und Verfahren des Standes der Technik nicht oder nur in verringertem Maße aufweisen.

Eine spezielle Aufgabe der vorliegenden Erfindung bestand darin, eine neue Apparatur und ein neues Verfahren bereitzustellen, mit denen die Behandlung unterschiedlicher, schwankender Gasströme möglichst einfach, bevorzugt mit möglichst reduzierten Überkapazitäten bzgl. Membranfläche und / oder Gasspeicher und / oder Kompressorleistung und / oder Temperaturregelung und/oder Druckregelung, erreicht werden kann.

Eine weitere spezielle Aufgabe der vorliegenden Erfindung bestand darin, eine neue Apparatur und ein neues Verfahren bereitzustellen, welche ohne aufwendige Steuerungs- und Regelungstechnik auskommen.

Eine weitere spezielle Aufgabe der vorliegenden Erfindung bestand darin, eine neue Apparatur und ein neues Verfahren bereitzustellen, welche eine sehr hohe Flexibilität im Hinblick auf die Verwendung der nach der Auftrennung erhaltenen Gasströme aufweisen.

Eine weitere spezielle Aufgabe der vorliegenden Erfindung bestand darin, eine neue Apparatur und ein neues Verfahren bereitzustellen, welche für den Einsatz regenerativer Energien, welche nur in stark schwankenden Mengen verfügbar sind, geeignet sind und dadurch einen Beitrag zum Klimaschutz zu leisten.

Eine weitere spezielle Aufgabe der vorliegenden Erfindung bestand darin, eine neue Apparatur und ein neues Verfahren bereitzustellen, welche es erlauben, ggf. stark gegenläufig schwankende Gasströme für möglichst jeden Betriebspunkt, mit einer möglichst einfachen Apparatur auf die gewünschten Zielreinheiten der jeweiligen Produktströme zu bringen.

Weitere nicht explizit genannte Aufgaben ergeben sich aus dem Gesamtzusammenhang der nachfolgenden Beschreibung, Beispiele, Ansprüche und Abbildungen.

Die Erfinder haben nun überraschend gefunden, dass die genannten Aufgaben mit einer Apparatur nach Anspruch 1 und einem Verfahren nach Anspruch 16 gelöst werden können. Bevorzugte Ausführungsformen werden in den abhängigen Ansprüchen beansprucht.

Die erfindungsgemäße Apparatur und das Verfahren zeichnen sich dadurch aus, dass zwei oder mehr Feedgasströme, welche sich in ihrer Zusammensetzung unterscheiden, einer Membrantrennstufe zugeführt werden, wobei
- die Membrantrennstufe einen Membranblock oder mehrere Membranblöcke enthält,
- der Membranblock oder die Membranblöcke jeweils mehrere, parallel verschaltete, Membrantrenneinheiten umfasst / umfassen,
- die Feedgasströme, an räumlich voneinander getrennten Stellen, einer Gasverteilung so zugeführt werden, dass zwei oder, bevorzugt, mehr als zwei Membrantrenneinheiten zwischen den Anschlussstellen der Feedgasströme angeordnet sind.

Beispielhaft, an einem Membranblock dem zwei Feedgasströme 1 und 2 zugeführt werden, näher erläutert, bedeutet dies, dass durch das erfindungsgemäße Gasverteilungssystem einer oder mehreren Membrantrenneinheit(en) des Membranblocks der Feedgasstrom 1 mit einer Zusammensetzung 1 und einer oder mehreren davon unterschiedlichen Membrantrenneinheit(en) des Membranblocks der Feedgasstrom 2 mit der Zusammensetzung 2 zugeführt wird/werden. Wiederum weiteren, von den zuvor genannten Membrantrenneinheiten unterschiedlichen, Membrantrenneinheiten des Membranblocks können, durch das erfindungsgemäße Gasverteilungssystem, auch Mischgasströme, enthaltend ein, bevorzugt bestehend aus einem, Gemisch der Feedgasströme 1 und 2, zugeführt werden. Bevorzugt werden möglichst wenigen, besonders bevorzugt keiner, Membrantrenneinheit(en) des Membranblocks Mischgasströme und möglichst vielen Membrantrenneinheiten des Membranblocks entweder der Feedstrom 1 oder der Feedstrom 2 zugeführt.

Durch das erfindungsgemäße Gasverteilungssystem kann die Anzahl der Membrantrenneinheiten denen die jeweilig unterschiedlichen Gasströme zugeführt werden eingestellt oder auch aktiv gesteuert bzw. geregelt werden. Bevorzugt erfolgt die Einstellung durch den Volumenstrom oder Massenstrom der jeweiligen Feedgasströme und/oder durch den Eingangsdruck der Feedgasströme relativ zueinander. Das bedeutet z.B., dass wenn der Volumenstrom und/oder der Massenstrom und/oder der Druck eines Feedgasstroms abnimmt, dieser Feedgasstrom in den jeweiligen Membranblöcken weniger Membrantrenneinheiten und gleichzeitig ein anderer Feedgasstrom dafür mehr Membrantrenneinheiten zugeführt wird. Erfolgt die Steuerung über die Drücke der Feedgasströme, so ist der erfindungsgemäß anwendbare Bereich des Differenzdrucks zwischen den Feedgasströmen dadurch limitiert, dass die jeweiligen Differenzdrücke der Feedgasströme darin resultieren, dass jeder Feedgasstrom mindestens einer Membrantrenneinheit des Membranblocks zugeführt wird. Wird der Differenzdruck nämlich zu groß, könnte der Feedgasstrom mit dem geringeren Druck vollständig aus der Membrantrennstufe verdrängt werden.

Die erfindungsgemäße Apparatur und das erfindungsgemäße Verfahren weisen den Vorteil auf, dass, bei gegenläufigem Kapazitätsbedarf der aufzutrennenden Feedgasströme, flexibel und schnell reagiert werden kann und die Trennkapazitäten in den Trennstufen und Membranblöcken immer optimal genutzt werden können. Ein besonders großer Vorteil der erfindungsgemäßen Apparatur und des erfindungsgemäßen Verfahrens besteht darin, dass die Steuerung und Regelung ohne großen apparativen und regelungstechnischen Aufwand, wie z.B. eine hohe Anzahl von automatischen Ventilen, erreicht werden kann und mehr von einem Feedgasstrom als von einem anderen Feedgasstrom behandelt werden kann.

Das erfindungsgemäße Gasverteilungssystem hat zudem den Vorteil, dass es derart ausgestaltet werden kann, dass die aufzureinigenden Gasströme ohne bzw. lediglich mit einer geringen Vermischung den jeweiligen Membrantrenneinheiten zugeführt werden können. Dies ermöglicht eine Beschickung der verschiedenen Membrantrenneinheiten mit aufzutrennenden Feedgasströmen in deren ursprünglicher bzw. weitgehend ursprünglicher Zusammensetzung. Ein solches System hat wiederum den Vorteil, dass unterschiedliche Feedgasströme innerhalb einer Installation weitestgehend separat behandelt werden können.

Durch die Möglichkeit den einzelnen Membrantrenneinheiten unterschiedlichen Gasströme in deren ursprünglicher bzw. weitgehend ursprünglicher Zusammensetzung zuzuführen, werden in den unterschiedlichen Membrantrenneinheiten in Zusammensetzung und/oder Volumenstrom unterschiedliche Permeat- und Retentatströme erhalten.

Die erfindungsgemäße Apparatur und das erfindungsgemäße Verfahren kommen ohne aufwendige Zusatzgerätschaften bzw. mit deutlich weniger bzw. mit kleineren Zusatzgerätschaften, wie z.B. Pufferbehälter und/oder Druckspeicher zum Abfangen von Schwankungen der unterschiedlichen aufzureinigenden Gasströme, aus. Sie weisen somit erhebliche wirtschaftliche Vorteile auf. Die erfindungsgemäße Apparatur bzw. das Verfahren zeichnen sich insbesondere dadurch aus, dass diese Schwankungen mit minimalem apparativem Aufwand ausgeglichen werden können, so dass in ihrem Volumenstrom, und/oder ihrer Zusammensetzung konstante Produktströme erhalten werden können.

Sinkt z.B. der Druck des ersten Feedgasstroms, im Rahmen des erfindungsgemäß zulässigen Bereichs für den Differenzdruck zum zweiten Feedgasstrom, ab, so führt dies in der erfindungsgemäßen Vorrichtung bzw. dem erfindungsgemäßen Verfahren lediglich dazu, dass dieser Feedgasstrom weniger Membrantrenneinheiten und der zweite Feedgasstrom dafür mehr Membrantrenneinheiten zugeführt wird. Keine Membrantrenneinheit muss unter Teillast gefahren werden, die Permeat- und Retentatdrücke können konstant gehalten werden.

Würde man hingegen eine Apparatur, wie im Vergleichsbeispiel gezeigt, verwenden, d.h. den ersten Feedgasstrom einer ersten Membrantrennstufe und den zweiten Feedgasstrom einer zweiten Membrantrennstufe zuführen, und würde der Druck im ersten Feedgasstrom sinken, so würde dies ein gleichzeitiges Absinken des Drucks der Retentatgasströme der ersten Membrantrennstufe nach sich ziehen, und ein zweiter Kompressor zur Rekomprimierung dieser Retentatgasströme müsste verwendet werden.

Sinkt die Menge des ersten Feedgasstroms ab, so führt dies in der erfindungsgemäßen Vorrichtung bzw. dem erfindungsgemäßen Verfahren lediglich dazu, dass dieser Feedgasstrom weniger Membrantrenneinheiten und gleichzeitig der zweite Feedgasstrom mehr Membrantrenneinheiten zugeführt wird. Keine Membrantrenneinheit muss unter Teillast gefahren werden, die Permeat- und Retentatdrücke können konstant gehalten werden. Würde man hingegen eine Apparatur, wie im Vergleichsbeispiel gezeigt, verwenden, d.h. den ersten Feedgasstrom einer ersten Membrantrennstufe und den zweiten Feedgasstrom einer zweiten Membrantrennstufe zuführen, und die Menge im ersten Feedgasstrom würde sinken, so müsste die Trennkapazität der ersten Membrantrennstufe angepasst werden. Mögliche Maßnahmen wären das Wegschalten von Membrantrenneinheiten durch Ventile, Anpassung der Betriebstemperatur, Erhöhung des Permeatdrucks oder Reduzierung des Retentatdrucks. Eine Reduzierung des Retentatdrucks ließe sich noch mit relativ geringem Aufwand umsetzten, jedoch würde ein Absinken des Drucks der Retentatgasströme häufig einen zweiten Kompressor oder Booster zur Rekomprimierung der Retentatgasströme notwendig machen, da bei weiterer Verwendung des Retentats häufig ein konstanter Druck der Retentatgasströme benötigt wird.

Die erfindungsgemäße Apparatur und das erfindungsgemäße Verfahren sind insbesondere vorteilhaft zur Steigerung des Einsatzes regenerativer Energien, da diese häufig nur in stark schwankenden Mengen verfügbar sind. Sie leisten dadurch einen wichtigen Beitrag zum Klimaschutz.

Weitere nicht explizit genannte Vorteile ergeben sich aus dem Gesamtzusammenhang der nachfolgenden Beschreibung, Beispiele, Ansprüche und Abbildungen.

Einzelne Merkmale, die nachfolgend im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden, sofern sie unter den Schutzumfang der Ansprüche fallen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Gegenstand der vorliegenden Erfindung ist eine Anlage zur Auftrennung von Gasgemischen, enthaltend
a. eine erste Feedgasleitung (7), die geeignet bzw. derart ausgestaltet ist, einen ersten Feedgasstrom zu transportieren, und eine zweite Feedgasleitung (8) die geeignet bzw. derart ausgestaltet ist, einen zweiten, in der Zusammensetzung vom ersten Feedgasstrom unterschiedlichen, Feedgasstrom zu transportieren,
b. Eine Membrantrennstufe, umfassend einen Membranblock (1) oder mehrere Membranblöcke (1), wobei der Membranblock (1) / die Membranblöcke (1) jeweils mehrere parallel verschaltete Membrantrenneinheiten (2) umfasst / umfassen,
   wobei
   ∘ jede Membrantrenneinheit (2) jeweils einen Gaseinlass (3) und Gasseparationsmembranen aufweist und das durch den Gaseinlass (3) zugeführte Gasgemisch mittels der Gasseparationsmembranen in einen Retentatgasstrom und einen Permeatgasstrom auftrennt, und
   ∘ jede Membrantrenneinheit (2) jeweils einen Retentatgasauslass (30) für den Retentatgasstrom, welcher bevorzugt an eine Retentatgasleitung (9) angeschlossen oder mittels einer oder mehreren Retentatverbindungsleitung(en) (32) mit einem oder zwei Retentatgasauslass/-auslässen (30) der benachbarten Membrantrenneinheit(en) (2) des gleichen Membranblocks (1) verbunden ist, und einen Permeatgasauslass (31) für den Permeatgasstrom, der bevorzugt an eine Permeatgasleitung (10) angeschlossen oder mittels einer oder mehreren Permeatverbindungsleitung(en) (33) mit einem oder zwei Permeatgasauslass/- auslässen (31) der benachbarten Membrantrenneinheit(en) (2) des gleichen Membranblocks (1) verbunden ist,
   aufweist,
   und
c. eine Gasverteilung, die derart ausgestaltet ist, dass
   - sie Verbindungsleitungen (18), die jeweils die Gaseinlässe (3) zweier benachbarter Membrantrenneinheiten (2) eines Membranblocks (1), bevorzugt direkt und unmittelbar, miteinander verbinden, umfasst, und/oder eine oder mehrere Verteilleitung(en) (4), die jeweils mehrere Abzweigungen (5) enthält/enthalten, die jeweils mittels separater Zuführleitungen (6) mit den Gaseinlässen (3) der einzelnen Membrantrenneinheiten (2) eines Membranblocks (1) verbunden sind, umfasst, wobei eine oder mehrere Abzweigung(en) (5) zusätzlich auch noch eine Anschlussmöglichkeit für eine Feedgasleitung aufweisen können, so dass mittels der Abzweigung(en) (5) jeweils gleichzeitig eine Feedgasleitung und eine Zuführleitung (6) an die jeweilige Verteilleitung (4) angeschlossen sein können,
   - sie, sofern die Membrantrennstufe mehrere Membranblöcke (1) umfasst, Rohrleitungen, bevorzugt Rohrleitungen (19a, 19b, 20a, 20b) umfasst, die die Membranblöcke (1) der Membrantrennstufe miteinander verbinden,
   - die erste Feedgasleitung (7), die zweite Feedgasleitung (8), sowie optional weitere Feedgasleitungen, unabhängig voneinander, an räumlich voneinander getrennten Stellen, jeweils an eine Verteilleitung (4) oder eine Verbindungsleitung (18) oder eine Abzweigung (5), oder, sofern vorhanden, an eine Rohrleitung die die Membranblöcke (1) der Membrantrennstufe miteinander verbindet, bevorzugt eine Rohrleitung (19a, 19b, 20a oder 20b), oder an einen Gaseinlass (3) einer Membrantrenneinheit (2), bevorzugt unmittelbar und direkt, angeschlossen sind, wobei die Anschlussstellen derart angeordnet sind, dass zwei oder mehr als zwei Abzweigungen (5) und/oder zwei oder mehr als zwei Gaseinlässe (3) zwischen den Anschlussstellen der ersten Feedgasleitung (7) und der zweiten Feedgasleitung (8) angeordnet sind.

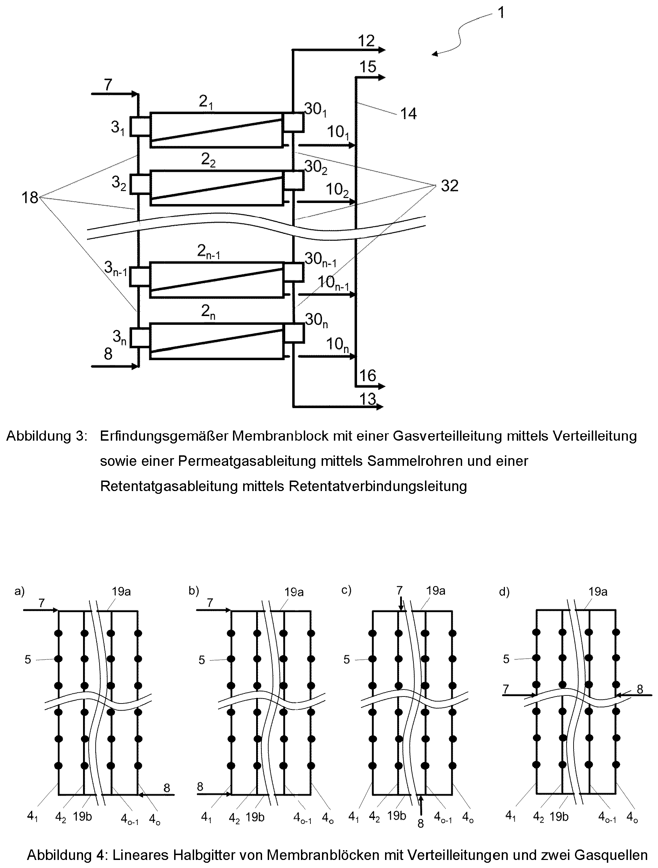

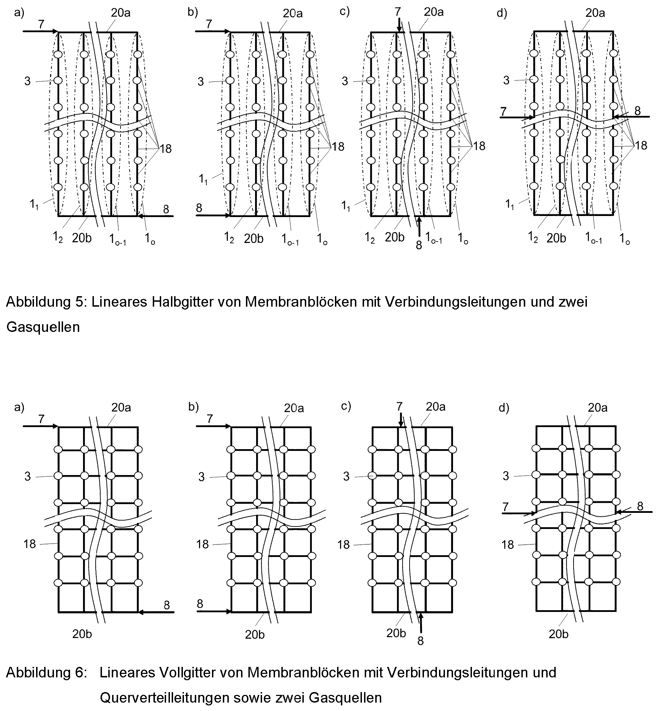

Die Anzahl der Abzweigungen (5) und/oder Gaseinlässe (3) zwischen den Anschlussstellen der ersten Feedgasleitung (7) und der zweiten Feedgasleitung (8) beträgt bevorzugt mindestens 3, besonders bevorzugt mindestens 4, ganz besonders bevorzugt mindestens 5, speziell bevorzugt mindestens 7 und ganz speziell bevorzugt mindestens 9. Die Obergrenze kann z.B. der Anzahl der Membrantrenneinheiten pro Block entsprechen, kann sich aber bei mehreren Membranblöcken pro Membrantrennstufe auch noch weiter erhöhen, wie z.B. in Abbildung 4a und 5a gezeigt.

Werden einer erfindungsgemäßen Membrantrennstufe mehr als zwei Feedgasleitungen zugeführt, werden die Anschlussstellen der Feedgasleitungen räumlich bevorzugt derart angeordnet, dass zwei oder mehr als zwei Abzweigungen (5) und/oder zwei oder mehr als zwei Gaseinlässe (3) zwischen den Anschlussstellender von jeweils zwei Feedgasleitungen angeordnet sind. Beispiele dafür finden sich in den Abbildungen 4 bis 9.

Unter einer **"Leitung"** werden im Rahmen der vorliegenden Erfindung Rohrleitungen verstanden, durch die Gasströme fließen.

Unter **"einer Rohrleitung, die unmittelbar und direkt an eine andere Rohrleitung angeschlossen ist",** ist im Rahmen der vorliegenden Erfindung zu verstehen, dass ein Gasstrom, in dem Moment, in dem er aus der ersten, der beiden unmittelbar und direkt aneinander angeschlossenen Rohrleitungen austritt, in die zweite, der unmittelbar und direkt aneinander angeschlossenen Rohrleitungen eintritt, d.h. keine dritte Rohrleitung, zwischen der ersten und zweiten Rohrleitung passieren muss.

Eine **Membrantrenneinheit** ist im Wesentlichen charakterisiert durch das Vorhandensein technisch nutzbarer Anschlüsse für das druckseitige Zuführen eines zu trennenden Gasstroms (Gaseinlass (3)), dem so genanntem Feed bzw. Feedstrom bzw. Feedgas bzw. Feedgasstrom, zum Membranmaterial sowie für das Abführen von Gas(en) druckseitig, dem so genannten Retentat bzw. Retentatgas bzw. Retentatgasstrom bzw. Retentatstrom, und für das Abführen von Gas(en), welche(s) durch das Membranmaterial permeiert ist/sind, dem sogenannten Permeat bzw. Permeatgas bzw. Permeatgasstrom bzw. Permeatstrom. Im Fall einer Triebkrafterzeugung durch Spülgas gibt es die permeatseitige Anschlussmöglichkeit für ein solches. Bevorzugt ist, dass druckseitige Konzentrations-, Druck- und Temperaturprofile entlang der jeweiligen Hauptströmungsrichtung kontinuierlich sind, und dass das Permeat ohne Zwischenschritt in einem gemeinsamen Permeatraum wie z.B. einem Gehäuse oder einem Permeatrohr der jeweiligen Membrantrenneinheit anfällt.

Bevorzugte **Membrantrenneinheit** sind nachfolgende Ausführungsformen
A. ein Gasseparationsmodul
B. ein, mit einer Gasseparationskartusche oder mehreren seriell verschalteten Gasseparationskartuschen bestücktes, Gehäuse, wobei in der Ausführungsform mit mehreren seriell verschalteten Gasseparationskartuschen die Membrantrenneinheit bevorzugt derart ausgestaltet ist, dass entweder der Retentatgasauslass der jeweiligen Gasseparationskartusche mit dem Gaseinlass der jeweils stromabwärts folgenden Gasseparationskartusche, mittels einer Gasleitung, direkt verknüpft ist und die Permeate aller Gasseparationskartuschen in einem direkt kommunizierenden Gasraum, z.B. dem Gehäuseraum, anfallen, oder der Retentatgasauslass der jeweiligen Gasseparationskartusche mit dem Gaseinlass der jeweils stromabwärts folgenden Gasseparationskartusche mittels eines kommunizierenden Gasraums, wie z.B. dem Gehäuseraum, verknüpft ist und jede Kartusche ein Permeatsammelrohr aufweist, welches mit dem Permeatsammelrohr der jeweils stromabwärts folgenden Gasseparationskartusche, mittels einer Gasleitung, direkt verknüpft ist
C. mehrere, seriell verschaltete, Gasseparationsmodule, wobei der Retentatgasauslass des jeweiligen Gasseparationsmoduls mit dem Gaseinlass des jeweils stromabwärts folgenden Gasseparationsmoduls, mittels einer Gasleitung, direkt verknüpft ist und die Membrantrenneinheit derart ausgestaltet ist, z.B. mittels eines Permeatrohrs der jeweiligen Membrantrenneinheit, dass die Permeate aller Gasseparationsmodule der Membrantrenneinheit zusammengeführt werden,
D. mehrere, seriell verschaltete, mit einer Gasseparationskartusche oder mehreren seriell verschalteten Gasseparationskartuschen bestückte, Gehäuse, wobei jedes einzelne Gehäuse bevorzugt wie für Ausführungsform B. beschrieben ausgestaltet ist und die seriell verschalteten Gehäuse derart ausgestaltet sind, dass der Retentatgasauslass des jeweiligen Gehäuses mit dem Gaseinlass des jeweils stromabwärts folgenden Gehäuses, mittels einer Gasleitung, direkt verknüpft ist und die Membrantrenneinheit derart ausgestaltet ist, z.B. mittels eines Permeatrohrs der jeweiligen Membrantrenneinheit, das die Permeate aller Gehäuse der Membrantrenneinheit zusammengeführt werden.

Bevorzugte Gasseparationskartuschen sowie, mit einer oder mehreren, seriell verschalteten Gasseparationskartuschen bestückte, Gehäuse, werden in der EP 3307424 B1offenbart.

**Gasseparationsmodule** unterscheiden sich dadurch von **Gasseparationskartuschen,** dass sie eine komplette Separationseinheit, inklusive druckfestem Gehäuse darstellen. Kartuschen hingegen werden in separate, druckfeste Gehäuse, bevorzugt in fest in die Separationsanlage eingebaute Gehäuse, eingesetzt, dabei kann/können in das Gehäuse eine Kartusche aber auch mehrere seriell hintereinander geschaltete Kartuschen eingesetzt werden. Kartuschen haben den Vorteil, dass bei ihrem Austausch niedrigere Kosten anfallen als bei Modulen, da das kostspielige, druckfeste Gehäuse nicht mit ersetzt werden muss.

Während im Bereich der Biogasaufbereitung in der Regel kleinvolumige Kartuschen oder Module verwendet werden, werden z.B. im Bereich der Aufreinigung von Erdgas großvolumige Kartuschen oder Module benötigt, um große Gasmengen bewältigen zu können. Ferner werden in diesem Einsatzgebiet Kartuschen und Module benötigt, die bei höheren Feedgasdrücken, vorzugsweise von 30 bis 100 bar, verwendet werden können. Gasseparationsmodule und -kartuschen können Flachmembranen enthalten, die z.B. um ein zentral angeordnetes Permeatrohr gewickelt sind.

Daneben gibt es Kartuschen bzw. Module umfassend Hohlfasermembranen. Beispiele dafür finden sich in US 3422008, US 3455460, US 3475331, US 4207192, US 4210536, US 4220489, US 4430219, US 4631128, US 4715953, US 4865736, US 4881955, US 5084073, US 5160042, US 5299749, US 5411662, US 5702601, US 5837032, US 5837033, US 5897729, US 7410580, US 7998254, US 8747980, US 8778062.

In Rahmen der vorliegenden Erfindung können im Prinzip alle dem Fachmann bekannten Membrantrenneinheiten verwendet werden. Bevorzugte Membrantrenneinheiten werden in der US 2016/0151744, der US 10,933,378 und der US2018/0221824 beschrieben.

Eine erfindungsgemäße Membrantrennstufe umfasst einen **"Membranblock"** oder mehrere **"Membranblöcke",** wobei der Membranblock bzw. die Membranblöcke wiederum jeweils mehrere parallel verschaltete **Membrantrenneinheiten** umfassen. Bevorzugt umfasst jeder Membranblock einer erfindungsgemäßen Membrantrennstufe mindestens zwei, besonders bevorzugt mehr als 5, ganz besonders bevorzugt mehr als 10 Membrantrenneinheiten. Die Anzahl Membrantrenneinheiten pro Membranblock richtet sich nach den Gasquellen und insbesondere dem zu verarbeitenden Gasvolumen. Der Einsatz von mehreren hundert Membrantrenneinheiten ist im Bereich der Gasseparation mit Membranen möglich.

Die erfindungsgemäße Anlage umfasst zudem eine **"Gasverteilung".** Bevorzugt ist die Gasverteilung derart ausgestaltet, dass die Feedgasströme mittels der Gasverteilung derart den Membrantrenneinheiten des Membranblocks bzw. der jeweiligen Membranblöcke zugeführt werden, dass sie innerhalb eines Membranblocks in einer Rohrleitung aufeinander zufließen und/oder in einer oder mehreren Rohrleitungen, die die Membranblöcke einer Membrantrennstufe miteinander verbinden, aufeinander zufließen.

**"In einer Rohrleitung aufeinander zufließen"** umfasst dabei folgende Ausführungsformen (nicht abschließende Auflistung):
- zwei Gasströme fließen in ein und demselben Rohr aufeinander zu,
- an einen Gaseinlass einer Membrantrenneinheit eines Membranblocks einer erfindungsgemäßen Membrantrennstufe, sind zwei Verbindungsleitungen angeschlossen. Zwei Feedgasströme fließen durch diese beiden Verbindungsleitungen aufeinander zu und treffen sich im Gaseinlass
- in einer erfindungsgemäßen Verteilleitung, die Abzweigungen enthält, fließen zwei Feedgasströme aufeinander zu und treffen zwischen zwei Abzweigungen oder treffen an einer Abzweigung aufeinander
- in einer erfindungsgemäßen Gasleitung, die mehrere Membranblöcke einer Membrantrennstufe miteinander verbindet, und daher Abzweigung zu den jeweiligen Membranblöcken aufweist, fließen zwei Feedgasströme aufeinander zu und treffen zwischen zwei Abzweigungen oder an einer Abzweigung aufeinander.

Besonders bevorzugt werden die Feedgasströme, mittels der Gasverteilung, derart den Membrantrenneinheiten des Membranblocks bzw. der jeweiligen Membranblöcke zugeführt, dass mindestens zwei Membrantrenneinheiten eines Membranblocks, besonders bevorzugt jeweils mindestens zwei Membrantrenneinheiten von mehreren Membranblöcken einer Membrantrennstufe, ganz besonders bevorzugt jeweils mindestens zwei Membrantrenneinheiten in allen Membranblöcken einer Membrantrennstufe, jeweils in ihrer Zusammensetzung unterschiedliche Gasströme zugeführt werden.

In den beiden zuvor beschriebenen, bevorzugten Ausführungsformen sind Anschlussstellen der ersten Feedgasleitung (7) und der zweiten Feedgasleitung (8) daher, besonders bevorzugt, unabhängig voneinander, räumlich derart angeordnet,
dass der erste Feedgasstrom und der zweite Feedgasstrom, innerhalb eines Membranblocks (1) oder mehrerer Membranblöcke (1) der Membrantrennstufe, bevorzugt in einer oder mehreren Verteilleitung(en) (4) und/oder in Verbindungsleitung(en) (18) und/oder innerhalb der Rohrleitung bzw. den Rohrleitungen, die die Membranblöcke (1) der Membrantrennstufe miteinander verbindet/verbinden, bevorzugt innerhalb der Rohrleitung bzw. den Rohrleitungen (19a, 19b, 20a, 20b), aufeinander zufließen,
   und/oder
dass in einem Membranblock (1), bevorzugt in mehreren Membranblöcken (1), besonders bevorzugt in allen Membranblöcken (1), der Membrantrennstufe jeweils mindestens zwei verschiedenen Membrantrenneinheiten (2) Gasströme zugeführt werden, die sich in ihrer Zusammensetzung unterscheiden.

Die erfindungsgemäße Gasverteilung ist bevorzugt derart ausgestaltet, dass die Feedgasströme, wie zuvor beschrieben, aufeinander zufließen, so dass es Kontaktstellen in der erfindungsgemäßen Anlage gibt, an denen die, der Gasverteilung zugeführten, Feedgasströme aufeinandertreffen. An diesen Kontaktstellen kann es zu gewissen Durchmischungen der Feedgasströme kommen. Erfindungsgemäß bevorzugt, soll die Durchmischung weitgehend unterbunden und/oder geregelt werden können. Dies kann durch geeignete, ergänzende, konstruktive Maßnahmen der erfindungsgemäßen Anlage an den potenziellen Kontaktpunkten erfolgen. Bevorzugte konstruktive Maßnahmen sind Reduzierung der Leitungsquerschnitte und/oder Verlängerung der Leitungsabschnitte und/oder Einbringen von statischen Mischern und/oder Einsatz von Molchen in den Gasleitungen. Als Molche können passive Molche, d.h. Molche deren Position in den Gasleitungen der Gasverteilung durch die Eigenschaften der Feedgasströme, z.B. deren Druck oder Volumenstrom, gesteuert wird, oder aktiv gesteuerte Molche, d.h. Molche deren Position in den Gasleitungen der Gasverteilung, z.B. mittels eines Magneten, unabhängig von den Eigenschaften der Feedströme festgelegt wird, verwendet werden. Bevorzugt werden passive Molche eingesetzt.

Die in den Membrantrenneinheiten eines Membranblocks erzeugten Permeatströme können
- vollständig zu einem Permeatgasstrom zusammengeführt und danach entnommen, weiterverarbeitet oder verworfen werden, oder
- zum Teil zusammengeführt werden, wodurch mehrere Permeatgasströme erhalten werden, welche danach unabhängig voneinander entnommen, weiterverarbeitet oder verworfen werden, oder
- zum Teil zusammengeführt werden, wodurch ein oder mehrere Permeatgasstrom/- strömen erhalten wird/werden, welche(r) danach, unabhängig voneinander, entnommen, weiterverarbeitet oder verworfen wird/werden, und zum Teil einzeln entnommen, weiterverarbeitet oder verworfen werden, oder
- alle einzeln entnommen, weiterverarbeitet oder verworfen werden.

Bevorzugt werden die Permeatgasströme derart zusammengeführt, dass die erhaltene Anzahl der Permeatgasströme der Anzahl der Feedgasströme entspricht und die Zusammensetzung der Permeatgasströme maximal unterschiedlich ist. Besonders bevorzugt werden alle Permeatgasströme der Membrantrenneinheiten eines Membranblocks, denen ein identischer Feedgasstrom zugeführt wurde, zusammengeführt. Dies führt zu maximal unterschiedlichen Permeatgasströmen, wie in Beispiel 1 gezeigt werden wird. Werden einigen Membrantrenneinheiten eines Membranblocks Mischgasströme aus verschiedenen Feedgasströmen zugeführt, so werden die in diesen Membrantrenneinheiten erhaltenen Permeatströme bevorzugt aufgeteilt und die Teilströme jeweils mit einem der zuvor beschriebenen Permeatgasströme, die aus den Membrantrenneinheiten gewonnen wurden, denen ein reiner Feedgasstrom zugeführt wurde, zusammengeführt, wie in Beispiel 2 gezeigt werden wird.

Analog kann mit den Retentatströmen verfahren werden. Das führt zu einer sehr hohen Flexibilität der erfindungsgemäßen Apparatur und des Verfahrens im Hinblick auf die erhaltenen Gasströme, aus einem einzigen System.

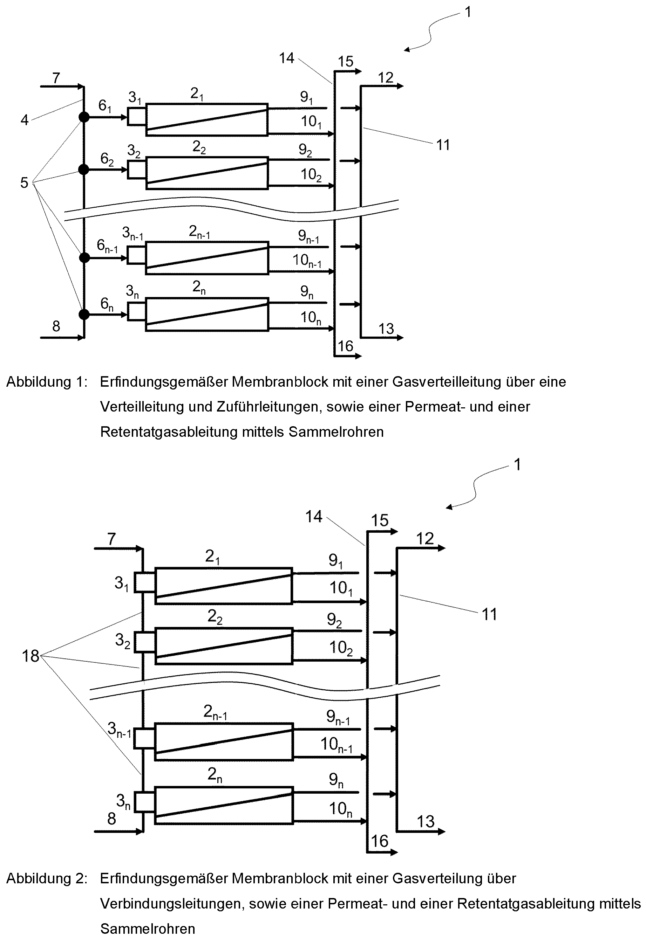

Bevorzugte Ausgestaltungsformen der erfindungsgemäßen Anlage und des Verfahrens, sowie das allgemeine erfindungsgemäße Grundprinzip, werden/wird nachfolgend anhand der speziellen Ausführungsformen gemäß Abbildungen 1 bis 11 näher erläutert.

In einer ersten bevorzugten Ausführungsform enthält die erfindungsgemäße Membrantrennstufe einen Membranblock (1) oder mehrere Membranblöcke (1), mit jeweils einer Verteilleitung (4), mit mehreren Abzweigungen (5), und Zuführleitungen (6), wobei jeweils eine Zuführleitung (6) jeweils eine Abzweigung (5) mit einem Gaseinlass (3) einer Membrantrenneinheit (2) verbindet,
und
die erste Feedgasleitung (7) und zweite Feedgasleitung (8) , getrennt und unabhängig voneinander, bevorzugt an strömungswegweise möglichst weit voneinander entfernten Stellen, mit der /den Verteilleitung(en) (4) und/oder Abzweigungen (5), besonders bevorzugt mit den jeweils gegenüberliegenden Enden der Verteilleitung(en) (4), verbunden sind.

Ein Beispiel dieser ersten bevorzugten Ausführungsform der erfindungsgemäßen Anlage bzw. des Verfahrens ist in Abbildung 1 dargestellt. Dieses umfasst einen Membranblock (1), umfassend mehrere, parallel verschaltete Membrantrenneinheiten (2₁) bis (2ₙ), wobei der Index n der fortlaufenden Nummer und die Zahl n der Anzahl der parallel verschalteten Membrantrenneinheiten des Membranblocks (1) entspricht, mit jeweils einem Gaseinlass (3₁) bis (3ₙ). Die Gaseinlässe (3₁) bis (3ₙ) der Membrantrenneinheiten (2₁) bis (2ₙ), sind mittels einer erfindungsgemäßen Gasverteilung miteinander verbunden.

Die Gasverteilung umfasst
- eine Verteilleitung (4) mit mehreren Abzweigungen (5),
- Zuführleitungen (6₁) bis (6ₙ), die die jeweiligen Abzweigungen (5) mit den Gaseinlässen (3₁) bis (3₁) der Membrantrenneinheiten (2₁) bis (2ₙ) verbinden,

und ist in Abbildung 1 derart ausgestaltet, dass die erste Feedgasleitung (7) und die zweite Feedgasleitung (8), getrennt voneinander, mit den jeweils gegenüberliegenden Enden der Verteilleitung (4), verbunden sind.

Als Abwandlung zu Abbildung 1 kann/können die erste Feedgasleitung (7) und/oder die zweite Feedgasleitung (8), getrennt voneinander, auch an einer anderen Stelle mit der Verteilleitung (4) oder einer Abzweigung (5) verbunden werden, wobei die Anbindungsstellen bevorzugt strömungswegweise möglichst weit voneinander entfernt liegen. Besonders bevorzugt werden die erste Feedgasleitung (7) und/oder die zweite Feedgasleitung (8) mit je einem Ende der Verteilleitung (4) verbunden.

Wird das erfindungsgemäße Verfahren in einer Anlage gemäß Abbildung 1 ausgeführt, fließen im erfindungsgemäßen Membranblock (1) der erste und der zweite Feedgasstrom, die sich in ihrer Zusammensetzung unterscheiden, in der Verteilleitung (4) aufeinander zu und treffen dort aufeinander. Nur an der Stelle an der die beiden Gasströme sich treffen, findet eine Vermischung der Gasströme statt.

Zur Veranschaulichung des erfindungsgemäßen Grundprinzips wird folgendes Beispiel unter vereinfachenden Annahmen betrachtet. Zu den wesentlichen vereinfachenden Annahmen gehören:
- ein symmetrischer und identischer Aufbau aller sich wiederholenden Apparateabschnitte
- der Druckverlust beim Strömen der beiden unterschiedlichen Feedgasströme hängt nicht von Dichte, Viskosität und Temperatur ab
- der druckseitige Druckverlust für alle Membrantrenneinheiten ist identisch

Bei gleichem Druck und Volumenstrom des ersten und zweiten Feedgasstroms treffen sich die beiden Gasströme in diesem Beispiel in der Mitte der Verteilleitung (4). Das bedeutet, dass der erste Feedgasstrom den Membrantrenneinheiten (2₁) und (2₂) zugeführt und dort in Retentatströme sowie Permeatströme aufgetrennt wird. Entsprechend wird der zweite Feedgasstrom den Membrantrenneinheiten (2ₙ₋₁) und (2ₙ) zugeführt und dort in Retentatströme sowie Permeatströme aufgetrennt, welche sich in ihrer Zusammensetzung von den Permeat- und Retentatgasströmen, welche in den Membrantrenneinheiten (2₁) und (2₂) erzeugt werden, unterscheiden. Weiteren in der Mitte des Membranblocks (1) angeordneten Membrantrenneinheiten wird ggf. ein Gemisch aus dem ersten und zweiten Feedgasstrom zugeführt. Sinkt nun z.B. der Druck oder der Volumenstrom des ersten Feedgasstroms, so verschiebt sich der Punkt des Zusammentreffens der beiden Feedgasströme in der Verteilleitung (4) in Richtung des Endes der Verteilleitung, an welchem der erste Feedgasstrom zugeführt wird. Dadurch wird der zweite Feedgasstrom nun zu mehr Membrantrenneinheiten und der erste Feedgasstrom zu weniger Membrantrenneinheiten zugeführt.

Bevorzugt wird, durch Reduzierung der Leitungsquerschnitte und/oder Verlängerung der Leitungsabschnitte der Verteilleitung (4) und/oder Einbringen von statischen Mischern und/oder Einsatz von Molchen zwischen den unterschiedlichen Gasströmen in der Verteilleitung (4), an potenziellen Kontaktpunkten der Feedgasströme deren Durchmischung auf das gewünschte Maß reduziert bzw. verhindert. Bevorzugt werden passive Molche eingesetzt.

Die Retentatströme aus den Membrantrenneinheiten (2₁) bis (2₁) werden im Verfahren und der Anlage gemäß Abbildung 1 in Retentatgasleitungen (9₁) bis (9ₙ) einem Retentatgassammelrohr (11) zugeführt. An dessen, in der Nähe von Membrantrenneinheit (2₁) angeordnetem, ersten Ende wird durch entsprechend eingestellte Entnahmemenge ein, hauptsächlich mit dem Retentatgas des ersten Feedgasstroms angereicherter, erster Retentatgasstrom erhalten, der einer ersten Retentatgasableitung (12) zugeführt wird. An dem, in der Nähe der Membrantrenneinheit (2ₙ) angeordneten, zweiten Ende des Retentatgassammelrohres (11) wird ein, hauptsächlich mit dem Retentatgas des zweiten Feedgasstroms angereicherter, zweiter Retentatgasstrom erhalten, der einer zweiten Retentatgasableitung (13) zugeführt wird.

Analog werden die Permeatströme der Membrantrenneinheiten (2₁) bis (2ₙ) in Permeatgasleitungen (10₁) bis (10ₙ) im Membranblock (1) in Abbildung 1 einem Permeatgassammelrohr (14) zugeführt. An dessen, in der Nähe von Membrantrenneinheit (2₁) angeordnetem, ersten Ende wird durch entsprechend eingestellte Entnahmemengen ein, hauptsächlich mit dem Permeatgas des ersten Feedgasstroms angereicherter, erster Permeatgasstrom erhalten, der der ersten Permeatgasableitung (15) zugeführt wird. An dem, in der Nähe von Membrantrenneinheit (2ₙ) angeordnetem, zweiten Ende des Permeatgassammelrohres (14) wird ein, hauptsächlich mit dem Permeatgas des zweiten Feedgasstroms angereicherter, zweiter Permeatgasstrom erhalten, der der zweiten Permeatgasableitung (16) zugeführt wird.

Ähnlich wie in der Verteilleitung (4) können auch im Retentatsammelrohr (11) ergänzende Maßnahmen, an den potentiellen Kontaktpunkten der Retentatströme der verschiedenen Membrantrenneinheiten, insbesondere an dem Kontaktpunkt an dem sich die hauptsächlich mit dem Retentatgas des ersten Feedgasstroms angereicherten Retentatströme mit den hauptsächlich mit dem Retentatgas des zweiten Feedgasstroms angereicherten Retentatströme treffen, umgesetzt werden, um eine Vermischung der jeweiligen Ströme zu minimieren oder zu verhindern bzw. um die entsprechenden Entnahmemengen einzustellen. Geeignete Maßnahmen währen Reduzierung der Leitungsquerschnitte und/oder Verlängerung der Leitungsabschnitte und/oder Einsatz von Molchen, wobei hier vorzugsweise aktiv gesteuerte Molche zum Einsatz kommen.

Analog können auch im Permeatsammelrohr (14) ergänzende Maßnahmen, an den potentiellen Kontaktpunkten der Permeatströme der verschiedenen Membrantrenneinheiten, insbesondere, an dem Kontaktpunkt an dem sich die hauptsächlich mit dem Permeatgas des ersten Feedgasstroms angereicherten Permeatströme mit den hauptsächlich mit dem Permeatgas des zweiten Feedgasstroms angereicherten Permeatströme treffen, umgesetzt werden, um eine Vermischung der jeweiligen Ströme zu minimieren oder zu verhindern bzw. um die entsprechenden Entnahmemengen einzustellen.

Geeignete Maßnahmen währen Reduzierung der Leitungsquerschnitte und/oder Verlängerung der Leitungsabschnitte und/oder Einsatz von Molchen, wobei hier vorzugsweise aktiv gesteuerte Molche zum Einsatz kommen.

Die Einstellung der Entnahmemengen in den Permeat- oder Retentatströmen kann z.B. auch über entsprechende Ventile in den Retentatgasleitungen (9) und/oder in den Permeatgasleitungen (10) und/ oder im Retentatsammelrohr (11) und/oder im Permeatsammelrohr (14) und/oder in der ersten Retentatgasableitung (12) und/oder in der zweiten Retentatgasableitung (13) und/oder in der ersten Permeatgasableitung (15) und/oder in zweiten Permeatgasableitung (16) und/oder bei der, weiter unten beschriebenen, Ausführungsform nach Abbildung 3, in den Retentatverbindungsleitungen (32) und/oder in den Permeatverbindungsleitungen (33) erfolgen. Bevorzugt werden hierzu Ventile in jeweils einer Permeat- und allen Retentatgasableitungen oder besonders bevorzugt in allen Permeat- und allen Retentatgasableitungen verwendet. Ganz besonders bevorzugt werden hierzu steuerbare Ventile in allen Permeat- und allen Retentatgasableitungen verwendet.

In einer zweiten bevorzugten Ausführungsform enthält die erfindungsgemäße Membrantrennstufe einen Membranblock (1) oder mehrere Membranblöcke, mit jeweils mehreren Verbindungsleitungen (18), welche jeweils den Gaseinlass (3) einer Membrantrenneinheit (2) mit dem/den Gaseinlass/-einlässen (3) der im Membranblock (1) benachbarten Membrantrenneinheit(en) (2), verbinden,
und
sind die erste Feedgasleitung (7) sowie die zweite Feedgasleitung (8), getrennt und unabhängig voneinander, jeweils mit einem Gaseinlass (3) einer Membrantrenneinheit (2) oder mehreren Gaseinlässen (3) von Membrantrenneinheiten (2) und/oder mit einer Verbindungsleitung (18) oder mehreren Verbindungsleitungen (18) verbunden.

Ein Beispiel dieser zweiten bevorzugten Ausführungsform der erfindungsgemäßen Anlage und des Verfahrens ist in Abbildung 2 dargestellt. Der dort dargestellte Membranblock (1) umfasst mehrere, parallel verschaltete Membrantrenneinheiten (2₁) bis (2ₙ), wobei der Index n der fortlaufenden Nummer und die Zahl n der Anzahl der parallel verschalteten Membrantrenneinheiten des Membranblocks (1) entspricht, mit jeweils einem Gaseinlass (3₁) bis (3ₙ). Die Membrantrenneinheiten (2₁) bis (2ₙ) sind mittels einer erfindungsgemäßen Gasverteilung miteinander verbunden.

In der Anlage bzw. dem Verfahren gemäß Abbildung 2 umfasst die Gasverteilung Verbindungsleitungen (18), welche jeweils den Gaseinlass (3) einer Membrantrenneinheit (2) mit den Gaseinlässen (3) beider benachbarten Membrantrenneinheiten bzw. bei den an den jeweiligen Enden eines Membranblocks (1) angeordneten Membrantrenneinheiten (2₁) und (2ₙ) mit jeweils dem Gaseinlass (3) einer benachbarten Membrantrenneinheit, verbinden. Die Feedgasleitung (7) ist in Abbildung 2 an Gaseinlass (3₁) und die Feedgasleitung (8) an Gaseinlass (3ₙ) angebunden. Von dort werden der erste und der zweite Feedgasstrom, durch die Verbindungsleitungen (18) aufeinander zufließend, auf die zwischen den Membrantrenneinheiten (2₁) und (2₁) angeordneten Membrantrenneinheiten verteilt.

In seiner Funktion entspricht der Membranblock gemäß Abbildung 2 dem Membranblock aus Abbildung 1 mit dem Unterschied, dass die Abzweigungen (5) der Anlage aus Abbildung 1, in Abbildung 2 in die Gaseinlässe (3) integriert sind. Bevorzugt sind in der Ausführungsform nach Abbildung 2 die in Abbildung 1 als unabhängige Bauteile ausgefügten Abzweigungen (5), Zuleitung (6) und Gaseinlässe (3) konstruktiv als Bestandteil des Druckgehäuses der jeweiligen Membrantrenneinheit ausgeführt. Die Erläuterungen zum erfindungsgemäßen Grundprinzip zu Abbildung 1 treffen somit auch auf die Ausführungsform nach Abbildung 2 analog zu.

Die Ausführungsform gemäß Abbildung 2 kann im Rahmen der vorliegenden Erfindung abgewandelt werden. Zum Beispiel ist es möglich Feedgasleitung (7) und /oder Feedgasleitung (8) nicht an die Gaseinlässe (3₁) und (3ₙ) der Membrantrenneinheiten (2₁) und (2₁) anzuschließen, sondern stattdessen an Gaseinlässe von dazwischen angeordneten Membrantrenneinheiten anzuschließen, z. B. an die Gaseinläse (3₂) und /oder (3ₙ₋₁). Der erste Feedgasstrom würde in diesem Fall über eine Verbindungsleitung (18) vom Gaseinlass (3₂) zum Gaseinlass (3₁) der Membrantrenneinheit (2₁) weitergeleitet und über eine andere Verbindungsleitung (18) zum Gaseinlass (3₃) der Membrantrenneinheit (2₃). In dieser Ausführungsform würden also auf jeden Fall in den Membrantrenneinheiten (2₁) und (2₂) der erste Feedgasstrom aufgetrennt.

Eine weitere, erfindungsgemäße Abwandlung der Ausführungsform gemäß Abbildung 2 ist derart ausgestaltet, dass Feedgasleitung (7) und /oder Feedgasleitung (8) nicht an die Gaseinlässe (3₁) bzw. (3ₙ) der Membrantrenneinheiten (2₁) und (2ₙ), sondern eine oder beide Feedgasleitungen an Verbindungsleitung (18) angeschlossen werden, z.B. kann die Feedgasleitung (7) an die Verbindungsleitung (18) zwischen den Gaseinlässen der Membrantrenneinheiten (2₁) und /oder (2₁) angeschlossen werden.

Erfindungsgemäß bevorzugt sind Ausführungsformen der Apparatur und des Verfahrens, welche eine möglichst geringe Vermischung der Feedströme erzeugen, um die jeweils einzelne Membraneinheit in der möglichst ursprünglichen Zusammensetzung der jeweiligen Feedströme zu beschicken. Bevorzugt wird daher an potenziellen Kontaktpunkten der Feedgasströme, durch Reduzierung der Leitungsquerschnitte und/oder durch Verlängerung der Leitungsabschnitte der Verbindungsleitung (18) und/oder durch Einbringen von statischen Mischern und/oder durch den Einsatz von Molchen zwischen den unterschiedlichen Gasströmen in der Verbindungsleitung (18), die Durchmischung der Feedgasströme auf das gewünschte Maß reduziert bzw. eingestellt. Bevorzugt werden passive Molche eingesetzt.

Die retentat- und permeatseitige Ausgestaltung der erfindungsgemäßen Anlage gemäß Abbildung 2, d.h. die erfindungsgemäße Weiterverarbeitung der Retentat- und Permeatströme, erfolgt analog wie für Abbildung 1 beschrieben.

Weitere Abwandlungen sind für den Fachmann unter Anwendung des erfindungsgemäßen Prinzips leicht auffindbar.

Die erfindungsgemäße Anlage und das Verfahren umfassen daher besonders bevorzugt einen Membranblock (1), umfassend eine Gasverteilung, wobei die Gasverteilung im jeweiligen Membranblock (1) Verbindungsleitungen (18) umfasst, welche jeweils einen Gaseinlass (3) einer Membrantrenneinheit (2) mit dem/den Gaseinlass/-einlässen (3) der im Membranblock (1) benachbarten Membrantrenneinheit(en) (2), verbinden. Die Feedgasleitungen, sind getrennt und unabhängig voneinander, jeweils mit einem Gaseinlass (3) einer Membrantrenneinheit (2) oder mehreren Gaseinlässen (3) von Membrantrenneinheiten (2) und/oder mit einer Verbindungsleitung (18) oder mehreren Verbindungsleitungen (18) verbunden. Bevorzugt werden durch die Verbindungsleitungen die beiden Feedgasströme aufeinander zufließend den einzelnen Membrantrenneinheiten zugeführt.

Des Weiteren ist es vorteilhaft und erstrebenswert, einen zu hohen Druckverlust in der Gasverteilung zu vermeiden. Schließlich ist ein möglichst niedriger apparativer und operativer Aufwand für die Steuerung und Regelung des Systems vorteilhaft. Die Ausführungsformen nach Abbildungen 1 bis 2 weisen all diese Vorteile auf und sind daher besonders bevorzugt.

In einer weiteren, bevorzugten erfindungsgemäßen Ausführungsform wird das Prinzip des Zusammenfassens von Abzweigungen (5) und Zuleitungen (6), welches oben am Beispiel der Abbildung 2 erläutert wurde, auf das Retentat- und/oder das Permeatverarbeitungssystem übertragen. Statt, wie in wie in Abbildung 1 und 2 gezeigt, die Retentatströme der Membrantrenneinheiten (2) eines Membranblocks (1) über Retentatgasleitungen (9) mit einem Retentatgassammelrohr (11) zu verbinden, werden in dieser Ausführungsform die Retentatgasauslässe (30) der Membrantrenneinheiten (2) mit Retentatverbindungsleitungen (32) verbunden. Die Retentatgasableitungen (12) und (13) werden an einem Retentatgasauslass (30) oder an einer Retentatverbindungsleitung (32) angeschlossen. Bevorzugt wird die Retentatgasableitung (12) am Retentatgasauslass (30₁) oder konstruktiv an einen Retentatgasauslass oder eine Retentatverbindungsleitung in dessen Nähe, und die Retentatgasableitung (13) am Retentatgasauslass (30ₙ) oder konstruktiv an einen Retentatgasauslass oder eine Retentatverbindungsleitung in dessen Nähe, angeschlossen. Eine entsprechende Ausführungsform, in Kombination mit dem Gasverteilungssystem nach Abbildung 2, wird in Abbildung 3 gezeigt. Analog kann das Retentatverarbeitungssystem nach Abbildung 3 aber auch mit einem Gasverteilungssystem nach Abbildung 1 kombiniert werden.

Analog, wie zuvor für das Retentatverarbeitungssystem beschrieben, kann auch mit dem Permeatverarbeitungssystem verfahren werden. Sowohl Ausführungsformen mit Retentat- und Permeatsammelrohr in einem Membranblock als auch mit Retentat- und Permeatverbindungsleitungen in einem Membranblock, als auch mit Retentatsammelleitung und Permeatverbindungsleitungen in einem Membranblock, als auch mit Retentatverbindungsleitung und Permeatsammelleitung in einem Membranblock, sind von der vorliegenden Erfindung umfasst. Auch Kombinationen der Ausführungsformen in denen z.B. ein Teil der Retentatgase eines Membranblocks einer Retentatsammelleitung zugeführt und ein anderer über Retentatverbindungsleitungen abgeführt wird, sind von der vorliegenden Erfindung umfasst und von einem Fachmann leicht auffindbar. Gleiches gilt für entsprechende Kombinationen für die Permeatströme im Membranblock.

Die zuvor beschriebenen erfindungsgemäße Anlagen und bevorzugten Ausgestaltungsformen davon können skaliert werden in dem die Zahl "n" der parallel verschalteten Membrantrenneinheiten (2) in einem Membranblock (1) erhöht oder verringert wird. So kann, ohne Veränderung der Membrantrenneinheiten selbst, die Trennkapazität jedes Membranblocks (1) und somit jeder Membrantrennstufe angepasst werden.

Alternativ oder additiv können auch die Membrantrenneinheiten selbst variiert werden, z.B. in dem die Membrantrennfläche und/oder die Selektivität der Membranen und/oder die Permeabilität der Membranen angepasst wird.

Es ist zudem möglich, in einem Membranblock (1) unterschiedliche Membranen in den Membrantrenneinheiten (2) einzusetzen. Je nach Zusammensetzung der zu trennenden Feedgasströme kann es sinnvoll sein, für einen ersten Feedgasstrom optimierte Membranen in den Membrantrenneinheiten einzusetzen, in denen ausschließlich oder hauptsächlich der erste Feedgasstrom aufgetrennt wird, und für einen zweiten Feedgasstrom optimierte Membranen in den Trennstufen einzusetzen, in denen ausschließlich oder hauptsächlich der zweite Feedgasstrom aufgetrennt wird.

Da die erfindungsgemäße Gasverteilung - wie zuvor beschrieben - die Zufuhr der Feedgasströme bzw. Gemischen davon zu den einzelnen Trennstufen, bevorzugt abhängig von Eigenschaften der Feedgasströme, wie z.B. abhängig vom aktuellen Volumenstrom und/oder Massenstrom und/oder Druck des jeweiligen Feedgasstroms, regelt, kann es vorkommen, dass Membrantrenneinheiten zu einem Zeitpunkt des Betriebs der Anlage bzw. des Verfahrens ein Gasgemisch mit dem ersten Feedgasstrom als Hauptanteil und zu einem späteren Zeitpunkt ein Gasgemisch mit dem zweiten Feedgasstrom als Hauptanteil zugeführt wird. Daher ist es bevorzugt in allen Membrantrenneinheiten (2) einer Trennstufe (1) die gleichen Membranen einzusetzen.

Alternativ oder additiv kann die Kapazität und die Selektivität der Membrantrenneinheiten durch die Betriebstemperatur angepasst werden. In einer bevorzugten Ausführung haben die Feedgasströme unterschiedliche Eintrittstemperaturen. Ein gezieltes Regeln der Betriebstemperatur kann z.B. zum Erreichen von Vorgabewerten bzgl. der Zusammensetzung eines oder mehrerer Retentat- und/oder Permeatgase oder der Ausbeute von mind. einer Gaskomponente genutzt werden.

Eine weitere, bevorzugte Ausführungsform zur Anpassung der Trennkapazität einer erfindungsgemäßen Membrantrennstufe wird in Abbildungen 4 und 5 dargestellt. Hier werden in einer Membrantrennstufe jeweils mehrere, parallel verschaltete, Membranblöcke (1) verwendet. Alle zuvor beschriebenen Membranblöcke können hierbei verwendet werden. Die Verwendung von mehreren, parallel verschalteten, Membranblöcken anstelle einer Vergrößerung der Membranblöcke selbst, d.h. Verwendung von vier Membranblöcken mit je 10 Membrantrenneinheiten anstelle eines Blocks mit 40, parallel verschalteten, Membrantrenneinheiten, hat Vorteile im Hinblick auf die Drucksteuerung, insbesondere der Vermeidung von Druckverlusten, und auf ein vereinfachtes Rackdesign.

In Abbildung 4 werden "o" Membranblöcke (1) nach Abbildung 1 verwendet, die parallel verschaltet sind, wobei der Index (o) die Anzahl der parallel verschalteten Membranblöcke (1) angibt. Dabei weisen die jeweiligen Membranblöcke (1₁) bis (1ₒ) jeweils Verteilleitungen (4₁) bis (4ₒ) auf. Die auf der Seite der Membrantrenneinheiten (2₁) der jeweiligen Membranblöcke angeordneten Enden der Verteilleitungen (4₁) bis (4ₒ) sind miteinander durch Gasleitung (19a) verbunden. Ebenso sind die auf der Seite der Membrantrenneinheiten (2ₙ) der jeweiligen Membranblöcke angeordneten Enden der Verteilleitungen (4₁) bis (4ₒ) jeweils miteinander durch Gasleitung (19b) verbunden. In Abbildung 4 sind zur Vereinfachung lediglich die Feedgasleitungen (7) und (8), die Verteilleitungen (4₁) bis (4ₒ) und die Abzweigungen (5) in den jeweiligen Verteilleitungen dargestellt. Von den Abzweigungen (5) gehen jeweils Zuführleitungen (6), so wie in Abbildung 1 gezeigt, zu den einzelnen Membrantrenneinheiten (2). Die in Abbildung 4 ebenfalls nicht dargestellten Permeat- und Retentatverarbeitungssysteme werden bevorzugt wie weiter oben erläutert ausgeführt, besonders bevorzugt wie in einer der Abbildungen 1 bis 3 gezeigt.

Die Feedgasströme können, wie in Abbildung 4 in einer nicht abschließenden Darstellung von Möglichkeiten dargestellt, einer derartigen Verschaltung von Membranblöcken auf unterschiedliche Art und Weise zugeführt werden.

Abbildung 4a zeigt eine Verschaltung und ein Verfahren in der/dem die erste Feedgasleitung (7) mit der Gasleitung (19a) auf der Seite von Membrantrenneinheit (2₁) des ersten Membranblocks (1₁) und die zweite Feedgasleitung (8) mit der Gasleitung (19b) auf der Seite von Membrantrenneinheit (2ₙ) des letzten Membranblocks (1ₒ) verbunden sind.

Abbildung 4b zeigt eine Verschaltung und ein Verfahren in der/dem die erste Feedgasleitung (7) mit der Gasleitung (19a) auf der Seite von Membrantrenneinheit (2₁) des ersten Membranblocks (1₁) und die zweite Feedgasleitung (8) mit der Gasleitung (19b) auf der Seite von Membrantrenneinheit (2₁) des ersten Membranblocks (1₁) verbunden sind.

Abbildung 4c zeigt eine Verschaltung in der die erste Feedgasleitung (7) mit der, auf der Seite von Membrantrenneinheit (2₁) angeordneten, Gasleitung (19a) und die zweite Feedgasleitung (8) gegenüber, d.h. mit der, auf der Seite von Membrantrenneinheit (2ₙ) angeordneten, Gasleitung (19b), jeweils zwischen zwei Membranblöcken, verbunden sind.

Abbildung 4d zeigt eine Verschaltung in der die erste Feedgasleitung (7) in der Mitte der Verteilleitung (4₁) und die zweite Feedgasleitung (8) gegenüber, in der Mitte der Verteilleitung (4ₒ), angebunden sind.

In dieser bevorzugten Ausführungsform ist die erfindungsgemäße Anlage besonders bevorzugt dadurch gekennzeichnet, dass
die Membrantrennstufe mehrere Membranblöcke (1) umfasst,
die Gasverteilung pro Membranblock (1) eine Verteilleitung (4), mit mehreren Abzweigungen (5) und Zuführleitungen (6), umfasst, wobei jeweils eine Zuführleitung (6) eine Abzweigung (5) mit einem Gaseinlass (3) einer Membrantrenneinheit (2) verbindet,
die Verteilleitungen (4) der jeweiligen Membranblöcke (1) der Membrantrennstufe mittels Rohrleitungen (19a, 19b) miteinander verbunden sind,
   und
die erste Feedgasleitung (7) und zweite Feedgasleitung (8), unabhängig voneinander, an räumlich voneinander getrennten Stellen, an eine Verteilleitung (4) oder eine Abzweigung (5) oder an eine Rohrleitung (19a, 19b) angeschlossen sind, wobei die Anschlussstellen derart angeordnet sind, dass zwei oder mehr als zwei Abzweigungen (5) und/oder zwei oder mehr als zwei Gaseinlässe (3) zwischen den Anschlussstellen der ersten Feedgasleitung (7) und der zweiten Feedgasleitung (8) angeordnet sind.

In Abbildung 5 werden "o" Membranblöcke nach Abbildung 2 verwendet, die parallel verschaltet sind. Dabei sind die Membraneinlässe (3₁) der Membrantrenneinheiten (2₁) der jeweiligen Membranblöcke (1₁) bis (1ₒ) (in Abbildung 5 durch gestrichelte Ellipsen angedeutet) jeweils miteinander durch Gasleitung (20a) verbunden. Ebenso sind auf der gegenüberliegenden Seite die Membraneinlässe (3₁) der jeweiligen Membranblöcke (1₁) bis (1ₒ) jeweils miteinander durch Gasleitung (20b) verbunden. In Abbildung 5 sind zur Vereinfachung lediglich die Feedgasleitungen (7) und (8), sowie die Verbindungsleitungen (18) und die Gaseinlässe (3) dargestellt. Die in Abbildung 5 nicht dargestellten Permeat- und Retentatverarbeitungssysteme werden bevorzugt wie weiter oben erläutert ausgeführt, besonders bevorzugt wie in einer der Abbildungen 1 bis 3 gezeigt.

Die Feedgasströme können, wie in Abbildung 5, in einer nicht abschließenden Darstellung von Möglichkeiten, dargestellt, einer derartigen Verschaltung von Membranblöcken auf unterschiedliche Art und Weise zugeführt werden.

Abbildung 5a zeigt eine Verschaltung in der die erste Feedgasleitung (7) mit der Verteilleitung (20a) auf der Seite der Membrantrenneinheit (2₁) des ersten Membranblocks (1₁) und die zweite Feedgasleitung (8) mit der Verteilleitung (20b) auf der Seite der Membrantrenneinheit (2ₙ) des Membranblocks (1ₒ) verbunden sind.

Abbildung 5b zeigt eine Verschaltung in der die erste Feedgasleitung (7) mit der Verteilleitung (20a) auf der Seite der Membrantrenneinheit (2₁) des ersten Membranblocks (1₁) und die zweite Feedgasleitung (8) mit der Verteilleitung (20b) auf der Seite der Membrantrenneinheit (2ₙ) des ersten Membranblocks (1₁) verbunden sind.

Abbildung 5c zeigt eine Verschaltung in der die erste Feedgasleitung (7) mit der Verbindungsleitung (20a) und die zweite Feedgasleitung (8) gegenüber, d.h. mit, der auf der Seite der Membrantrenneinheit (2ₙ) angeordneten, Verbindungsleitung (20b), jeweils zwischen zwei Membranblöcken, verbunden sind.

Abbildung 5d zeigt eine Verschaltung in der die erste Feedgasleitung (7) mit einer Verbindungsleitung (18) des ersten Membranblocks (1₁) und die zweite Feedgasleitung (8) gegenüber mit einer Verbindungsleitung (18) des Membranblocks (1ₒ), verbunden sind.

In dieser bevorzugten Ausführungsform ist die erfindungsgemäße Anlage besonders bevorzugt dadurch gekennzeichnet, dass
die Membrantrennstufe mehrere Membranblöcke (1) umfasst,
die Gasverteilung im jeweiligen Membranblock (1) Verbindungsleitungen (18) umfasst, welche jeweils den Gaseinlass (3) einer Membrantrenneinheit (2) mit dem/den Gaseinlass/- einlässen (3) der im Membranblock (1) benachbarten Membrantrenneinheit(en) (2), verbinden,
die Membranblöcke (1) der Membrantrennstufe mittels Rohrleitungen (20a, 20b) miteinander verbunden sind, wobei die Rohrleitungen (20a, 20b) im jeweiligen Membranblock jeweils mit einer oder mehreren Verbindungsleitung(en) (18) und/oder einem oder mehreren Gaseinlass/-einlässen (3) verbunden sind, bevorzugt ist die Rohrleitung (20a) im jeweiligen Membranblock (1) mit einer Verbindungsleitung (18) oder einem Gaseinlass (3) und die Rohrleitung (20b) im jeweiligen Membranblock mit einer davon verschiedenen Verbindungsleitung (18) oder einem davon verschiedenen Gaseinlass (3) verbunden,
   und
die erste Feedgasleitung (7) sowie die zweite Feedgasleitung (8), unabhängig voneinander, an räumlich voneinander getrennten Stellen, an eine oder mehrere Verbindungsleitung(en) (18) oder an eine oder mehrere Rohrleitung(en) (20a, 20b), oder an einen oder mehrere Gaseinlass/- einlässe (3), angeschlossen sind, wobei die Anschlussstellen derart angeordnet sind, dass zwei oder mehr als zwei Gaseinlässe (3) zwischen den Anschlussstellen der ersten Feedgasleitung (7) und der zweiten Feedgasleitung (8) angeordnet sind.

Eine erfindungsgemäße Erweiterung der Ausführungsform nach Abbildung 5 wird in Abbildung 6 dargestellt. In Ergänzung zu Abbildung 5 sind hier nicht nur die Gaseinlässe (3₁) und (3ₙ) der Membranblöcke (1₁) bis (1ₒ) miteinander durch die Gasleitungen (20a) und (20b) jeweils verbunden, sondern auf der Ebene der Membrantrenneinheiten sind die Gaseinlässe (3₂) bis (3ₙ₋₁) der Membranblöcke (1₁) bis (1ₒ) miteinander durch weitere Gasleitungen (20) zu einem "Vollgitter" verbunden.

Die erfindungsgemäße Anlage zur Trennung von Gasen ist nicht auf die gleichzeitige Auftrennung von zwei Feedgasströmen mit unterschiedlicher Zusammensetzung beschränkt. Das erfindungsgemäße Prinzip kann auch auf mehrere Feedgasströme erweitert werden.

Bevorzugt umfasst die erfindungsgemäße Anlage eine, zwei oder drei zusätzliche, Feedgasleitung(en) drei (21), vier und fünf, wobei die Feedgasleitungen drei (21), vier und fünf geeignet sind einen, zwei oder drei zusätzliche, vom ersten und zweiten Feedgasstrom in ihrer Zusammensetzung unterschiedliche, Gasströme zu transportieren und wobei die zusätzliche(n) Feedgasleitung(en) drei (21), vier und fünf so mit der Gasverteilung verbunden sind, dass die Gasströme drei (21) oder drei (21) und vier oder drei (21), vier und fünf mittels der Gasverteilung den Membrantrenneinheiten zugeführt werden können.

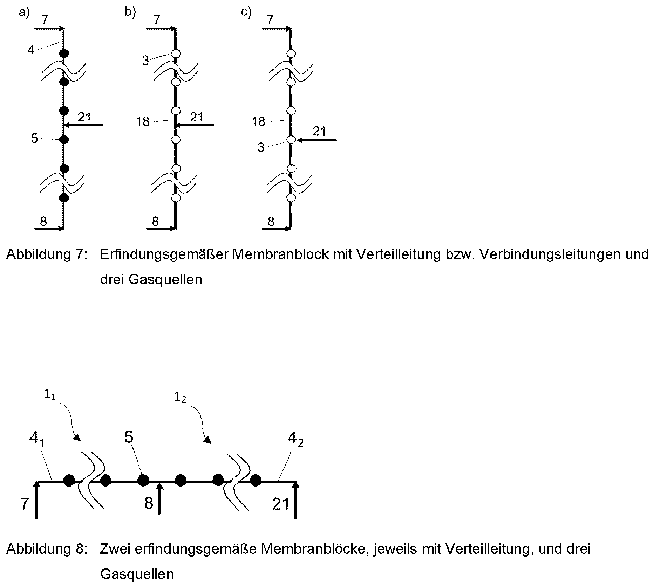

In einer ersten bevorzugten Ausführungsform werden die zusätzlichen Feedgasleitungen an eine oder mehrere Verteilleitung(en) (4), bevorzugt zwischen den Anschlüssen der Feedgasleitungen (7) und (8), angeschlossen. Ein Beispiel für eine solche Ausgestaltungsform, mit einer zusätzlichen dritten Feedgasleitung (21), ist in Abbildung 7a) gezeigt.

In einer zweiten und dritten bevorzugten Ausführungsform werden die zusätzlichen Feedgasleitungen an eine oder mehrere Verbindungsleitung(en) (18) und/oder einen oder mehrere Gaseinlass/-einlässe (3) angeschlossen. Bevorzugt befindet/befinden sich die Anschlussstelle(n) an einer oder mehreren, zwischen den Anschlüssen der ersten Feedgasleitung (7) und der zweiten Feedgasleitung (8) angeordneten, Verbindungsleitung(en) (18) und/oder Gaseinlass/-einlässen (3), welche sich von den Gaseinlässen (3) unterscheidet/unterscheiden, an die die erste Feedgasleitung (7) bzw. die zweite Feedgasleitung (8) angeschlossen sind. Besonders bevorzugt werden der / die zusätzliche Feedgasleitung(en) an einem der Gaseinlässe (3₂) bis (3ₙ₋₁) oder an einer dazwischen angeordneten Verbindungsleitung (18) angeschlossen. Beispiele für solche Ausgestaltungsformen, mit einer zusätzlichen dritten Feedgasleitung (21), sind in den Abbildungen 7b) und 7c) gezeigt.

In weiteren bevorzugten Ausführungsform werden mehrere erfindungsgemäße Membranblöcke (1), an die jeweils zwei Feedgasleitungen, durch die Feedgase mit unterschiedlicher Zusammensetzung fließen, angeschlossen sind, miteinander kombiniert.

In einer bevorzugten Ausführungsform können die Membranblöcke linear kombiniert, d.h. verschaltet, und dabei jedem Membranblock (1₁) bis (1ₒ), wobei o der fortlaufenden Nummer des jeweiligen Membranblocks entspricht, je zwei Feedgasströme zugeführt werden. Ein Beispiel für eine solche Anlage ist in Abbildung 8 gezeigt. Hier werden sind die Feedgasleitungen (7) und (8) mit der Verteilleitung (4₁), eines ersten Membranblocks (1₁) verbunden. Dieser erste Membranblock (1₁) ist kombiniert mit einem zweiten Membranblock (1₂), wobei die Feedgasleitungen (8) und (21) mit der Verteilleitung (4₂), des zweiten Membranblocks (1₂) verbunden sind. Ein solches System lässt sich beliebig für weitere Feedgasströme erweitern.

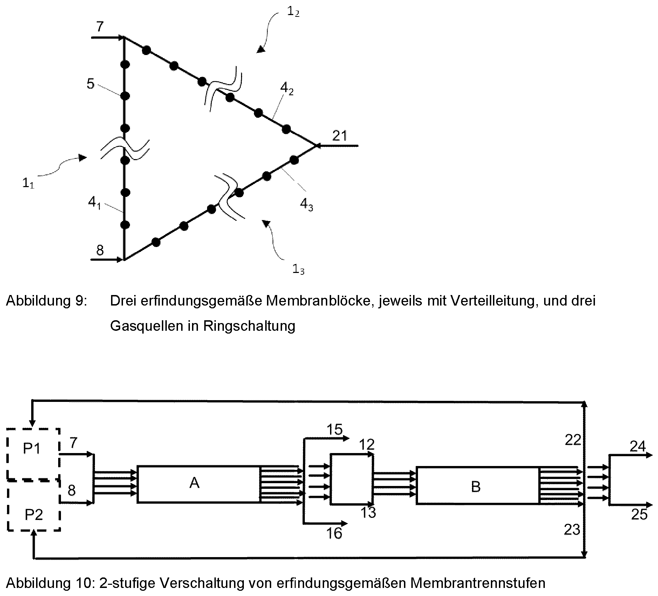

In einer ebenfalls bevorzugten, alternativen Ausführungsform können mehrere erfindungsgemäße Membranblöcke (1₁) bis (1ₒ) zu einer Ringschaltung kombiniert, d.h. verschaltet werden, wobei bevorzugt jeder Membranblock (1₁) bis (1ₒ) mit zwei Feedgasleitungen verbunden ist. Ein Beispiel für eine solche Anordnung ist in Figur 9 gezeigt. Hier werden drei Membranblöcke (1₁), (1₂) und (1₃), mit den Verteilleitungen (4₁), (4₂) und (4₃), zu einer Ringschaltung kombiniert. Mit der Verteilleitung (4₁) sind die Feedgasleitungen (7) und (8), mit der Verteilleitung (4₂) die Feedgasleitungen (7) und (21) und mit der Verteilleitung (4₃) die Feedgasleitungen (8) und (21) verbunden. Derartige Ringschaltungen lassen sich um weitere erfindungsgemäße Membranblöcke, z.B. zu einer 4-fach oder 5-fach-Verschaltung, erweitern.

Es ist ebenfalls möglich die Ausführungsformen aus den Abbildungen 7 bis 9 miteinander zu kombinieren. So könnte z.B. in der Ringschaltung aus Abbildung 9 der Verteilleitung (4₁), zwischen den Anschlüssen der Feedgasleitungen (7) und (8), noch eine vierte Feedgasleitung zugeführt werden.

In den Abbildungen 7, 8 und 9 sind zur Vereinfachung lediglich die Feedgasleitungen (7), (8) und (21), sowie die Verteilleitungen (4₁) bis (4₃) und die Abzweigungen (5) dargestellt. Von den Abzweigungen gehen jeweils Zuführleitungen, so wie in Abbildung 1 gezeigt, zu den einzelnen Membrantrenneinheiten. Die in den Abbildung 7, 8 und 9 ebenfalls nicht dargestellten Permeat- und Retentatverarbeitungssysteme werden bevorzugt wie weiter oben erläutert, besonders bevorzugt wie in einer der Abbildungen 1 bis 3 gezeigt, ausgeführt und analog zu den Verteilleitungen miteinander verbunden.

Die Ausführungsformen der Abbildungen 8 und 9 können natürlich auch mit Membranblöcken aus den Abbildungen 2 und 3, d.h. z.B. mit mehreren Verbindungsleitungen (18) pro Membranblock ausgeführt werden. Entsprechende Ausgestaltungsformen sind für einen Fachmann anhand der zuvor beschriebenen, erfindungsgemäßen Lehre leicht ableitbar.

Die erfindungsgemäße Anlage und das Verfahren können in der zuvor beschriebenen allgemeinen aber auch in allen bevorzugten Ausführungsformen, in einer oder mehreren Verteilleitung(en) und/oder in einer oder mehreren Zufuhrleitung und/oder in einer oder mehreren Verbindungsleitung, ein oder mehrere Ventile oder sonstige Steuereinrichtungen umfassen, mit denen die Gaszufuhr zu den einzelnen Gaseinlässen der Membrantrenneinheiten gesteuert oder beeinflusst werden kann.

Die Anlage kann z.B. mittels der Ventile oder der sonstigen Steuereinrichtungen derart gesteuert werden bzw. ausgestaltet sein, dass eine oder mehrere Membrantrenneinheiten bei Veränderung des zugeführten Gasvolumens in Feedgasleitung zu- oder abgeschaltet werden können.

Als Ventile können Absperr- und/oder Nadelventile zum Einsatz kommen. Der Gasfluss im Gasverteilungssystem kann aber auch über andere Regulatoren wie Reduzierungen, z.B. Lochblenden, beeinfluss und/oder gesteuert werden.

Insbesondere in den Ausführungsformen mit Verteilleitungen und/oder Verbindungsleitungen kann sich das erfindungsgemäße Verteilsystem, dadurch dass die Feedströme aufeinander zufließen, z.B. über den Volumenstrom und/oder Massenstrom und/oder den Druck der Feedgasströme, weitgehend bis vollständig selbst regeln, ohne dass innerhalb eines Membranblocks steuerbare Ventile eingesetzt werden müssen. Im Vergleich zu einer rein mittels Ventilen gesteuerten Gasverteilung, kann die Anzahl der kostspieligen, steuerbaren Ventile somit sehr stark reduziert werden, bevorzugt enthält die erfindungsgemäße Anlage daher nur in einigen oder ganz besonders bevorzugt in keiner, der Verteilleitung(en) und/oder Zufuhrleitung(en) und/oder Verbindungsleitung(en) Ventile zum Steuern der Gasströme. In einer ebenfalls bevorzugten Ausführungsform enthalten die Membrantrenneinheiten jedoch einfache manuelle Ventile, um im Schadensfall eine defekte Membran schnell von den restlichen Membranen separieren zu können.

Die in den erfindungsgemäßen Membranblöcken erhaltenen Permeat- und Retentatströme werden bevorzugt, wie in den Abbildungen 1 bis 3 gezeigt, jeweils einem Permeat- und einem Retentatverarbeitungssystem pro Membranblock zugeführt. Die Permeat- und Retentatverarbeitungssysteme können, wie in Abbildungen 1 und 2 gezeigt, Retentat- und/oder Permeatsammelrohre umfassen. Alternativ können sie, wie in Abbildung 3 gezeigt, Retentat- und/oder Permeatverbindungsleitungen zwischen den Retentat bzw. Permeatauslässen der jeweiligen Membrantrenneinheiten der jeweiligen Membranblöcke, enthalten. Kombinationen, z.B. die Verwendung von Retentatverbindungsleitungen und Permeatsammelrohren, so wie in Abbildung 3 gezeigt, sind ebenfalls möglich.

Über die Retentat- und/oder Permeatsammelrohre und/oder die Retentat- und/oder Permeatverbindungsleitungen werden die Retentat- bzw. Permeatströme Abflussleitungen zugeführt. In einer ersten bevorzugten Ausführungsform sind zwei Stellen, bevorzugt zwei möglichst weit voneinander entfernte Stellen, besonders bevorzugt beide Enden eines Sammelrohrs mit Abflussleitungen verbunden, so wie in den Abbildungen 1 und 2 gezeigt. Dies ermöglicht es aus den in der Nähe der Membrantrenneinheit (2₁) angeordneten Abflussleitungen Permeat- bzw. Retentatströme abzuführen, die hauptsächlich aus dem Permeat- bzw. Retentatgas des ersten Feedstroms bestehen. Mittels der in der Nähe der Membrantrenneinheit (2ₙ) angeordneten Abflussleitungen können Permeat- bzw. Retentatströme abgeführt werden, die hauptsächlich aus dem Permeat- bzw. Retentatgas des zweiten Feedstroms bestehen. Die gleichen technischen Effekte können bei der Verwendung von Retentat- bzw. Permeatverbindungsleitungen an Stelle von Retentat- bzw. Permeatsammelrohren erzielt werden. In diesem Fall wird bevorzugt eine Abflussleitung in der Nähe des Retentatgasauslasses (30₁) der Membrantrenneinheit (2₁) an einen Retentatgasauslass einer Membrantrenneinheit oder an eine Verbindungsleitung angeschlossen und eine zweite Abflussleitung in der Nähe des Retentatgasauslasses (30ₙ) der Membrantrenneinheit (2ₙ) an einen Gasauslass einer Membrantrenneinheit oder an eine Verbindungsleitung angeschlossen. Entsprechend analoge Ausgestaltungen, z.B. für die Permeatströme, sind für einen Fachmann leicht auszuführen.

Weitere Abflussleitungen können z.B. in der Mitte der Retentat- bzw. Permeatsammelrohre, oder bei Verwendung von Retentat- bzw. Permeatverbindungsleitungen an eine Verbindungsleitung oder einen Gasauslass der Membrantrenneinheiten (2₂) oder (2ₙ₋₁), angeschlossen werden, um z.B. Permeat- bzw. Retentatströme, die im Wesentlichen aus einem Gemisch aus den Permeat- bzw. Retentatgasen des ersten und des zweiten Feedstroms bestehen, zu gewinnen. Bevorzugt werden solche weiteren Abflussleitungen eher im mittleren Bereich Membranblöcke (1) angeschlossen.

Die Einstellung der Entnahmemengen in den Permeat- oder Retentatströmen kann z.B. auch über entsprechende Ventile, in den Retentatgasleitungen (9) und/oder den Permeatgasleitungen (10) und oder dem Retentatsammelrohr (11) und/oder dem Permeatsammelrohr (14) und/oder der ersten Retentatgasableitung (12) und/oder der zweiten Retentatgasableitung (13) und/oder der ersten Permeatgasableitung (15) und/oder der zweiten Permeatgasableitung (16) und/oder bei der Ausführungsform nach Abbildung 3 den Retentatverbindungsleitungen (32) und/oder Permeatverbindungsleitungen (33), erfolgen. Bevorzugt werden hierzu Ventile in jeweils einer Permeat- und allen Retentatgasableitungen oder besonders bevorzugt in allen Permeat- und allen Retentatgasableitungen verwendet. Ganz besonders bevorzugt werden hierzu steuerbare Ventile in allen Permeat- und allen Retentatgasableitungen verwendet.

In einer alternativen, ebenfalls bevorzugten Ausführungsform ist es auch möglich, dass das Permeat- oder das Retentatsammelrohr nur an einer Stelle mit einer Abflussleitung verbunden ist. In diesem Fall werden alle Permeat- bzw. Retentatströme im jeweiligen Sammelrohr vereinigt und als jeweils ein vereinigter Mischstrom aus dem System entnommen. Die gleichen technischen Effekte können bei der Verwendung von Retentat- bzw. Permeatverbindungsleitungen an Stelle von Retentat- bzw. Permeatsammelrohren erzielt werden. In diesem Fall wird die eine Abflussleitung an einer Retentat- oder Permeatverbindungsleitung oder an einem Retentat- oder Permeatauslass einer Membrantrenneinheit eines Membranblocks angeschlossen. Entsprechende Ausgestaltungen sind für einen Fachmann leicht auszuführen. Ebenfalls ist es möglich mehrere Retentat oder Permeatabflussleitungen zu einer Leitung zu verbinden, um den gleichen technischen Effekt zu erzielen.

In einer weiteren, alternativen, ebenfalls bevorzugten Ausführungsform ist es auch möglich, dass das Permeat- und das Retentatsammelrohr jeweils nur an einer Stelle mit einer Abflussleitung verbunden ist. In diesem Fall werden alle Permeat- bzw. Retentatströme im jeweiligen Sammelrohr vereinigt und als ein vereinigter Mischstrom aus dem System entnommen. Die gleichen technischen Effekte können bei der Verwendung von Retentat- bzw. Permeatverbindungsleitungen an Stelle von Retentat- bzw. Permeatsammelrohren erzielt werden. In diesem Fall wird die eine Abflussleitung an einer Retentat- oder Permeatverbindungsleitung oder an einem Retentat- oder Permeatauslass einer Membrantrenneinheit (2₁) einen Membranblocks angeschlossen. Entsprechende Ausgestaltungen sind für einen Fachmann leicht auszuführen. Ebenfalls ist es möglich mehrere Retentat oder Permeatabflussleitungen zu einer Leitung zu verbinden, um den gleichen technischen Effekt zu erzielen.

Besonders bevorzugt werden in den erfindungsgemäßen Anlagen und Verfahren
Retentatströme, bevorzugt alle Retentatströme, der Membrantrenneinheiten (2) eines Membranblocks (1) mit Hilfe von Retentatgasleitungen (9) einem Retentatgassammelrohr (11) zugeführt, wobei das Retentatgassammelrohr (11) mit mindestens einer ersten Retentatgasableitung (12), bevorzugt mindestens zwei Retentatgasableitungen (12) und (13), verbunden ist, durch die ein oder mehrere Retentatgasströme aus der Membrantrennstufe in der sie erzeugt wurden abgeführt werden,
   und/oder
Permeatströme, bevorzugt alle Permeatströme, der Membrantrenneinheiten (2) eines Membranblocks (1) mit Hilfe von Permeatgasleitungen (10) einem Permeatgassammelrohr (14) zugeführt werden, wobei das Permeatgassammelrohr (14) mit mindestens einer ersten Permeatgasableitung (15), bevorzugt mindestens zwei Permeatgasableitungen (15) und (16), verbunden ist, durch die ein oder mehrere Permeatgasströme aus der Membrantrennstufe in der sie erzeugt wurden abgeführt werden.

Ebenfalls besonders bevorzugt werden in den erfindungsgemäßen Anlagen und Verfahren
Retentatströme, bevorzugt alle Retentatströme, der Membrantrenneinheiten eines Membranblocks mit Hilfe von Retentatverbindungsleitungen zwischen den Retentatgasauslässen einer oder mehreren Retentatabflussleitung(en) zugeführt, durch die ein Retentatgasstrom oder mehrere Retentatgasströme aus dem Membranblock abgeführt werden, wobei die Anlage in diesem Fall Retentatverbindungsleitungen (32) zwischen den Retentatgasauslässen (30) der Membrantrenneinheiten (2) eines Membranblocks (1) der Membrantrennstufe umfasst, wobei mindestens eine Retentatverbindungsleitung (32) oder mindestens ein Retentatgasaulass (30) zudem mit mindestens einer Retentatgasableitung (12) verbunden ist, bevorzugt sind in einem Membranblock (1) der Membrantrennstufe eine oder mehrere Retentatverbindungsleitung(en) (32) und/oder ein oder mehrere Retentatgasaulass/Retentatgasauslässe (30) mit zwei Retentatgasableitungen (12) und (13) verbunden,
   und/oder
Permeatströme, bevorzugt alle Permeatströme, der Membrantrenneinheiten eines Membranblocks mit Hilfe von Permeatverbindungsleitungen zwischen den Permeatgasauslässen einer oder mehreren Permeatabflussleitung(en) zugeführt, durch die ein Permeatgasstrom oder mehrere Permeatgasströme aus dem Membranblock abgeführt werden, wobei die Anlage in diesem Fall Permeatverbindungsleitungen (33) zwischen den Permeatgasauslässen (31) der Membrantrenneinheiten (2) eines Membranblocks (1) der Membrantrennstufe umfasst, wobei mindestens eine Permeatverbindungsleitung (33) oder mindestens ein Permeatgasaulass (31) mit mindestens einer Permeatgasableitung (15) verbunden ist, bevorzugt sind in einem Membranblock (1) der Membrantrennstufe eine oder mehrere Permeatverbindungsleitung(en) (33) und/oder ein oder mehrere Permeatgasaulass/Permeatgasauslässe (31) mit zwei Retentatgasableitungen (15) und (16) verbunden.

Werden in der erfindungsgemäßen Anlage bzw. im erfindungsgemäßen Verfahren Membrantrennstufen mit mehreren Membranblöcken verwendet, so werden die Permeat- und Retentatströme der jeweiligen Membranblöcke einer Membrantrennstufe bevorzugt zu einem Permeatstrom oder zwei Permeatströmen bzw. einem Retentatstrom oder zwei Retentatströmen pro Membrantrennstufe zusammengeführt. Dabei werden bevorzugt alle in der ersten Retentatgasableitung (12) der jeweiligen Membranblöcke (1) erhaltenen ersten Retentatströme zu einem ersten Retentatstrom der Membrantrennstufe zusammengeführt.

Werden in den Membranblöcken (1) auch zweite Retentatströme in der zweiten Retentatgasableitung (13) der jeweiligen Membranblöcke (1) erhaltenen, so werden diese zweiten Retentatströme bevorzugt zu einem zweiten Retentatstrom der Membrantrennstufe zusammengeführt. Analog kann verfahren werden, wenn in den jeweiligen Membranblöcken weitere Retentatströme erhalten werden.

Mit den Permeatströmen der jeweiligen Membranblöcke (1) einer Membrantrennstufe wird bevorzugt analog verfahren, wie zuvor für die Retentatströme beschrieben.

Die aus einer erfindungsgemäßen Membrantrennstufe erhaltenen Permeat- und Retentatströme können als Produktstrom entnommen, weiterverarbeitet oder verworfen werden, wobei jedoch mindestens ein Permeat- und/oder Retentatstrom als Produktstrom entnommen oder weiterverarbeitet wird. Besonders bevorzugt werden in jeder Membrantrennstufe mindestens zwei Permeatströme oder mindestens zwei Retentatströme erzeugt, von denen mindestens einer als Produktstrom entnommen oder weiterverarbeitet wird.

Die erfindungsgemäße Anlage kann eine Membrantrennstufe aber auch mehrere miteinander verschaltete, erfindungsgemäße, Membrantrennstufen umfassen, wobei jedoch
mindestens eine erfindungsgemäße Membrantrennstufe, umfassend einen Membranblock (1) oder mehrere Membranblöcke (1), welcher / welche wiederum jeweils mehrere parallel verschaltete Membrantrenneinheiten (2) umfasst / umfassen,
zusammen mit einer erfindungsgemäßen Gasverteilung, die derart ausgestaltet ist, dass
- sie Verbindungsleitungen (18), die jeweils die Gaseinlässe (3) zweier benachbarter Membrantrenneinheiten (2) eines Membranblocks (1) direkt und unmittelbar miteinander verbinden, umfasst und/oder eine oder mehrere Verteilleitung(en) (4), die eine oder mehrere Abzweigung(en) (5) enthält/enthalten, die jeweils mittels einer separaten Zuführleitung (6) mit einem Gaseinlass (3) einer Membrantrenneinheit (2) eines Membranblocks (1) verbunden sind, umfasst, wobei eine oder mehrere Abzweigung(en) (5) zusätzlich auch noch eine Anschlussmöglichkeit für eine Feedgasleitung aufweisen können, so dass mittels der Abzweigung(en) (5) gleichzeitig eine Feedgasleitung und eine Zuführleitung (6) an die jeweilige Verteilleitung (4) angeschlossen sein können,
- sie, sofern die Membrantrennstufe mehrere Membranblöcke (1) umfasst, Rohrleitungen, bevorzugt Rohrleitungen (19a, 19b, 20a, 20b), umfasst, die die Membranblöcke (1) der Membrantrennstufe miteinander verbinden,
- die erste Feedgasleitung (7) und die zweite Feedgasleitung (8), unabhängig voneinander, an räumlich voneinander getrennten Stellen, an eine Verteilleitung (4) oder eine Verbindungsleitung (18) oder eine Abzweigung (5) oder, sofern vorhanden, an eine Rohrleitung, bevorzugt eine Rohrleitung (19a, 19b, 20a, oder 20b), oder an einen Gaseinlass (3) angeschlossen sind, wobei die Anschlussstellen derart angeordnet sind, dass zwei oder mehr als zwei Abzweigung(en) (5) und/oder zwei oder mehr als zwei Gaseinlässe (3) zwischen den Anschlussstellen der ersten Feedgasleitung (7) und der zweiten Feedgasleitung (8) angeordnet sind,
verwendet wird.

Die vorliegende Erfindung umfasst auch Ausführungsformen, in denen mehrere erfindungsgemäße Membrantrennstufen miteinander verschaltet sind.

So zeigt Abbildung 10 eine 2-stufiuge Verschaltung in der zwei erfindungsgemäße Membrantrennstufen A und B retentatseitig verschaltet sind. In der Anlage nach Abbildung 10 werden zwei, in ihrer Zusammensetzung unterschiedliche, Feedgasströme mittels Feedgasleitungen (7) und (8) der ersten Membrantrennstufe A zugeführt, welche bevorzugt wie in Abbildung 1 gezeigt und weiter oben beschrieben ausgestaltet ist. Die beiden aus dem Permeatsammelrohr der ersten Membrantrennstufe A erhaltenen Permeatströme werden mittels Permeatgasableitungen (15) und (16), unabhängig voneinander, entweder als Produktströme entnommen, weiterverarbeitet oder verworfen. Die beiden Permeatströme können dabei gleich oder, unabhängig voneinander, unterschiedlich behandelt werden. Die beiden aus dem Retentatsammelrohr der ersten Membrantrennstufe A erhaltenen Retentatströme werden mittels Retentatgasableitungen (12) und (13) als neue Feedströme der Membrantrennstufe B zugeführt. Wie oben zu Abbildung 1 erläutert, unterscheiden sich die beiden aus dem Retentatsammelrohr der ersten Membrantrennstufe erhaltenen Retentatströme in ihrer Zusammensetzung. Der in der Retentatgasableitung (12) abgeführte Retentatstrom enthält hauptsächlich das Retentatgas des ersten Feedstroms und der in der Retentatgasableitung (13) abgeführte zweite Retentatstrom hauptsächlich das Retentatgas des zweiten Feedstroms. Die Retentatgase in beiden Retentatströmen können gleich oder unterschiedlich sein. Sind sie gleich, unterscheiden sich beide Retentatgasströme dennoch im Gehalt, d.h. in ihrer mengenmäßigen Zusammensetzung.

Da sich die beiden Retentatströme der Membrantrennstufe A in ihrer Zusammensetzung unterscheiden, gilt für die zweite Membrantrennstufe B die gleiche Voraussetzung wie für die Membrantrennstufe A, d.h. ihr werden zwei Feedgasströme zugeführt, wobei sich der zweite Feedgasstrom vom ersten in seiner Zusammensetzung unterscheidet. Membrantrennstufe B ist bevorzugt wie in Abbildung 1 gezeigt aufgebaut. Die beiden aus dem Permeatsammelrohr der zweiten Membrantrennstufe B erhaltenen Permeatströme werden mittels der Permeatgasableitungen (22) und (23) zu den Feedgasleitungen (7) und (8) zurückgeführt. Die beiden aus dem Retentatsammelrohr der zweiten Membrantrennstufe B erhaltenen Retentatströme werden mittels der Retentatgasableitungen (24) und (25), unabhängig voneinander, entweder als Produktströme entnommen, weiterverarbeitet oder verworfen.

Für den Betrieb einer Membrantrenneinheit ist eine Partialdruckdifferenz und damit in der Regel eine Druckdifferenz zwischen der Retentat- und der Permeatseite notwendig. Der Druck auf der Retentatseite muss höher sein als auf der Permeatseite. Dies kann z.B. dadurch sichergestellt werden, dass mittels eines Kompressors ein Feedgasstrom mit einem erhöhten Druck erzeugt wird oder in dem auf der Permeatseite der Membran ein Unterdruck, z.B. mittels einer Vakuumpumpe, erzeugt wird. Entsprechende Technologien sind dem Fachmann bekannt. Für die Verschaltung nach Abbildung 10 bedeutet dies, dass der Druck in den Permeatgasableitungen (22) und (23) in der Regel niedriger ist als in den Feedgasleitungen (7) und (8). Die zurückgeführten Permeatströme müssen daher in den Komprimierungseinheiten P1 bzw. P2 auf den Druck der Feedströme in den Feedgasleitungen (7) und (8) gebracht werden. Die Komprimierungseinheiten P1 bzw. P2 können gleich oder unterschiedlich ausgestaltet sein. So ist es z.B. möglich, dass in einem oder beiden der Permeatgasableitungen (22) und/oder (23) ein Kompressor eingesetzt wird. Diese Ausgestaltungsform wird man bevorzugt wählen, wenn einer oder beide der in Abbildung 10 nicht dargestellten Rohgasströme bereits unter ausreichendem Druck steht.

Alternativ können einer oder beide der in den Permeatgasableitungen (22) und (23) zurückgeführten Permeatströme in den Komprimierungseinheiten P1 bzw. P2 jeweils einem der, in Abbildung 10 nicht gezeigten, Rohgasströme zugeführt und der so entstandene Mischstrom bzw. die so entstandenen beiden Mischströme komprimiert und damit der Feedstrom bzw. die beiden Feedströme in den Feedgasleitungen (7) und/oder (8) erzeugt werden.

In einer weiteren Alternative kann einer oder können beide der in den Permeatgasableitungen (22) und (23) zurückgeführten Permeatströme in den Komprimierungseinheiten P1 bzw. P2 direkt einem Kompressor, der einen der beiden Feedströme in den Feedgasleitungen (7) und (8) erzeugt, zugeführt werden.

Die beiden letztgenannten Alternativen werden bevorzugt angewandt, wenn der oder die Rohgasströme einen niedrigeren Druck als die Feedströme aufweisen.

Alternativ bzw. ergänzend kann die Partialdruckdifferenz auch durch einen Spülgasstrom auf der Permeatseite erzeugt bzw. erhöht werden. Auch diese Vorgehensweise ist dem Fachmann bekannt.

Einrichtungen zur Druckerhöhung in den Permeatgasableitungen (15) und (16) und/oder (22) und (23) sind zur Erhöhung der Triebkraft sinnvoll, aber aufgrund des apparativen Aufwands weniger bevorzugt.

Alternativ aber ebenfalls bevorzugt, können eine oder beide der Membrantrennstufen A und/oder B in Abbildung 10 auch wie in den anderen weiter oben diskutierten bevorzugten Ausführungsformen, insbesondere wie Abbildung 2 oder 3 gezeigt, ausgestaltet sein.

Die Verschaltung nach Abbildung 10 kann auf verschiedene Weisen variiert werden. Beispielhaft seien hier genannt:
- die aus Membrantrennstufe B erhaltenen Permeatströme können, unabhängig voneinander, als Produktstrom entnommen, weiterverarbeitet oder verworfen werden, mit der Bedingung, dass mindestens einer der beiden Permeatströme der Membrantrennstufe A oder B oder der Retentatströme der Membrantrennstufe B als Produktstrom entnommen oder weiterverarbeitet wird
- einer, bevorzugt beide, der aus der Membrantrennstufe B erhaltenen Permeatströme wird / werden zum jeweils ursprünglichen Feedstrom der Membrantrennstufe A zurückgeführt und gleichzeitig die aus Membrantrennstufe B erhaltenen Retentatströme, unabhängig voneinander, als Produktstrom entnommen, weiterverarbeitet oder verworfen, mit der Bedingung, dass mindestens einer der beiden Permeatströme der Membrantrennstufe A oder der Retentatströme der Membrantrennstufe B als Produktstrom entnommen wird
- beide aus der Membrantrennstufe A erhaltenen Permeatströme werden als Feedströme der zweiten Membrantrennstufe B zugeführt und die beiden aus der Membrantrennstufe A erhaltenen Retentatströme, unabhängig voneinander, als Produktstrom entnommen, weiterverarbeitet oder verworfen

Weitere Abwandlungen der 2-stufigen Verschaltung sind für einen Fachmann anhand der erfindungsgemäßen Lehre leicht auffindbar.

Besonders bevorzugt sind die erfindungsgemäße Anlage und das erfindungsgemäße Verfahren daher dadurch gekennzeichnet, dass
sie zwei Membrantrennstufen A und B umfassen, wobei beide Membrantrennstufen A und B jeweils einen Membranblock (1) oder mehrere Membranblöcke (1), umfassend jeweils mehrere parallel verschaltete Membrantrenneinheiten (2), umfassen,
   und dass
die Gasverteilung der ersten Membrantrennstufe A derart ausgestaltet ist, dass sie die erste Feedgasleitung (7) und die zweite Feedgasleitung (8) mit den Gaseinlässen (3) der Membrantrenneinheiten (2) der ersten Membrantrennstufe A derart verbindet, dass in jedem Membranblock (1) der Membrantrennstufe A mindestens zwei verschiedenen Membrantrenneinheiten (2) Gasströme zugeführt werden die sich in ihrer Zusammensetzung unterscheiden,
die erste Membrantrennstufe A derart ausgestaltet ist, dass zwei voneinander verschiedene Retentatströme in einer ersten Retentatgasableitung (12) und einer zweiten Retentatgasableitung (13) und /oder zwei voneinander verschiedene Permeatströme in einer ersten Permeatgasableitung (15) und einer zweiten Permeatgasableitung (16) erhalten werden,
die beiden Retentatströme oder die beiden Permeatströme der ersten Membrantrennstufe A der zweiten Membrantrennstufe B als Feedströme zugeführt werden und
die Gasverteilung der zweiten Membrantrennstufe B derart ausgestaltet ist, dass sie die erste Retentatgasableitung (12) und die zweite Retentatgasableitung (13) oder die erste Permeatgasableitung (15) und die zweiten Permeatgasableitung (16) mit den Gaseinlässen (3) der Membrantrenneinheiten (2) der zweiten Membrantrennstufe B derart verbindet, dass in jedem Membranblock (1) der zweiten Membrantrennstufe B mindestens zwei verschiedenen Membrantrenneinheiten (2) Gasströme zugeführt werden die sich in ihrer Zusammensetzung unterscheiden.

Besonders bevorzugt ist die zweite Membrantrennstufe B derart ausgestaltet, dass zwei voneinander verschiedene Retentatströme, in einer ersten Retentatgasableitung (24) und einer zweiten Retentatgasableitung (25), und /oder zwei voneinander verschiedene Permeatströme, in einer ersten Permeatgasableitung (22) und einer zweiten Permeatgasableitung (23), erhalten werden.

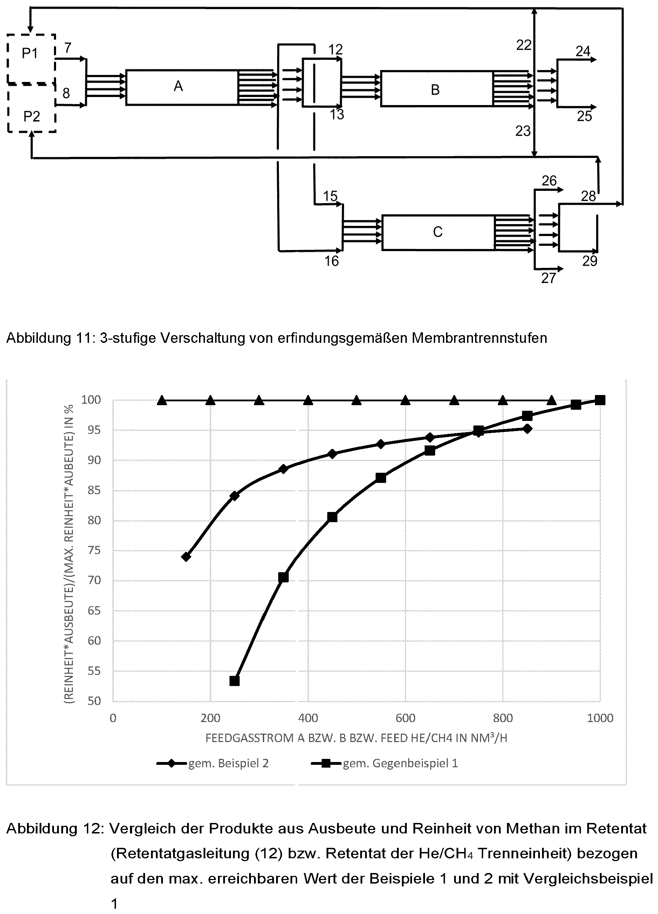

Abbildung 11 zeigt als weitere, besonders bevorzugte, erfindungsgemäße Ausführungsform eine 3-stufige Verschaltung, in der drei erfindungsgemäße Membrantrennstufen derart miteinander verschaltet sind, dass die beiden Retentatströme der Membrantrennstufe A als Feedströme der Membrantrennstufe B und die beiden Permeatströme der Membrantrennstufe A als Feedströme der Membrantrennstufe C zugeführt werden.

Dabei werden zwei, in ihrer Zusammensetzung unterschiedliche, Feedgasströme mittels der Feedgasleitungen (7) und (8) der ersten Membrantrennstufe A zugeführt, welche bevorzugt wie in Abbildung 1 gezeigt ausgestaltet ist. Die beiden aus dem Permeatsammelrohr der ersten Membrantrennstufe A erhaltenen Permeatströme werden mittels der Permeatgasableitungen (15) und (16), als neue Feedgasströme, der Membrantrennstufe C zugeführt. Die beiden aus dem Retentatsammelrohr der ersten Membrantrennstufe A erhaltenen Retentatströme werden mittels der Retentatgasableitungen (12) und (13), als neue Feedströme, der Membrantrennstufe B zugeführt. Wie oben zu Abbildungen 1 und 10 erläutert, unterscheiden sich die beiden aus der ersten Membrantrennstufe A erhaltenen Retentatgasströme in ihrer Zusammensetzung. Gleiches gilt für die aus der ersten Membrantrennstufe A erhaltenen Permeatgasströme.

Da sich die beiden Retentatströme der Membrantrennstufe A in ihrer Zusammensetzung unterscheiden, gilt für die zweite Membrantrennstufe B die gleiche Voraussetzung wie für die Membrantrennstufe A, d.h. ihr werden zwei Feedgasströme zugeführt, wobei sich der zweite Feedgasstrom vom ersten in seiner Zusammensetzung unterscheidet. Membrantrennstufe B ist bevorzugt wie in Abbildung 1 gezeigt, aufgebaut. Die beiden aus dem Retentatsammelrohr der zweiten Membrantrennstufe B erhaltenen Retentatströme werden mittels der Retentatgasableitungen (24) und (25), unabhängig voneinander, entweder als Produktströme entnommen, weiterverarbeitet oder verworfen. Die beiden aus dem Permeatsammelrohr der zweiten Membrantrennstufe B erhaltenen Permeatströme werden mittels der Permeatgasableitungen (22) und (23) zu den Feedgasleitungen (7) bzw. (8) zurückgeführt.

Da sich die beiden Permeatströme der Membrantrennstufe A in ihrer Zusammensetzung unterscheiden, gilt für die dritte Membrantrennstufe C die gleiche Voraussetzung wie für die Membrantrennstufe A, d.h. ihr werden zwei Feedgasströme zugeführt, wobei sich der zweite Feedgasstrom vom ersten in seiner Zusammensetzung unterscheidet. Membrantrennstufe C ist ebenfalls wie in Abbildung 1 gezeigt aufgebaut. Die beiden aus dem Permeatsammelrohr der dritten Membrantrennstufe C erhaltenen Permeatströme werden mittels der Permeatgasableitungen (26) und (27), unabhängig voneinander, entweder als Produktströme entnommen, weiterverarbeitet oder verworfen. Die beiden aus dem Retentatsammelrohr der dritten Membrantrennstufe C erhaltenen Retentatströme werden mittels der Retentatgasableitungen (28) und (29) zu den Feedgasleitungen (7) bzw. (8) zurückgeführt.

Alternativ aber ebenfalls bevorzugt, können eine, zwei oder alle drei Membrantrennstufen A, B und/oder C in Abbildung 11 auch wie in den anderen, weiter oben diskutierten, bevorzugten Ausführungsformen, insbesondere wie Abbildung 2 oder 3 gezeigt, ausgestaltet sein.

Für die Verschaltung nach Abbildung 11 gilt das Gleiche wie für Abbildung 10, d.h. der Druck in den Permeatgasableitungen (22) und (23) sowie in den Retentatgasableitungen (28) und (29) ist niedriger als in den Feedgasleitungen (7) und (8). Die zurückgeführten Gasströme müssen daher in den Komprimierungseinheiten P1 bzw. P2 auf den Druck der Feedgasströme in den Feedgasleitungen (7) und (8) gebracht werden. Die Komprimierungseinheiten P1 bzw. P2 können gleich oder unterschiedlich ausgestaltet sein.

So wird bevorzugt die Permeatgasableitungen (22) mit der Retentatgasableitung (28) zusammengeführt und durch eine weitere Gasleitung der Komprimierungseinheit P1 zugeführt. Die Permeatgasableitungen (23) wird bevorzugt mit der Retentatgasableitung (29) zusammengeführt und durch eine weitere Gasleitung der Komprimierungseinheit P2 zugeführt.

In einem oder beiden der den Komprimierungseinheiten P1 bzw. P2 zugeführten Gasleitungen kann ein Kompressor angeordnet sein. Diese Ausgestaltungsform wird man bevorzugt wählen, wenn einer oder beide der in Abbildung 11 nicht dargestellten Rohgasströme bereits unter ausreichendem Druck steht.

Alternativ kann / können einer oder beide der in den zu den Komprimierungseinheiten P1 bzw. P2 zugeführten Gasleitungen zurückgeführten Gastströme in Komprimierungseinheiten P1 bzw. P2 jeweils einem der, in Abbildung 11 nicht gezeigten, Rohgasströme zugeführt und der so entstandene Mischstrom bzw. die so entstandenen Mischströme komprimiert und damit der Feedstrom / die Feedströme in den Feedgasleitungen (7) und/oder (8) erzeugt werden.

In einer weiteren Alternative kann einer oder können beide der, in den zu den Komprimierungseinheiten P1 bzw. P2 zugeführten Gasleitungen, zurückgeführten Gasströme in den Komprimierungseinheiten P1 bzw. P2 direkt einem Kompressor, der einen der beide Feedgasstrom bzw. Feedströme in den Feedgasleitungen (7) und/oder (8) erzeugt, zugeführt werden.

Die beiden letztgenannten Alternativen werden bevorzugt angewandt, wenn der oder die Rohgasstrom / -ströme einen niedrigeren Druck als die Feedströme aufweist/aufweisen.

Alternativ kann die Partialdruckdifferenz auch durch einen Spülgas auf der Permeatseite erzeugt werden. Auch diese Vorgehensweise ist dem Fachmann bekannt.

Einrichtungen zur Druckerhöhung in den Permeatgasableitungen (15) und (16) und/oder (22) und (23) und/oder (26) und (27) sind zur Erhöhung der Triebkraft sinnvoll, aber aufgrund des apparativen Aufwands nicht bevorzugt.

Weitere Abwandlungen der 3-stufigen Verschaltung sind für einen Fachmann anhand der erfindungsgemäßen Lehre leicht auffindbar.

Besonders bevorzugt sind die erfindungsgemäße Anlage und das erfindungsgemäße Verfahren daher dadurch gekennzeichnet, dass
sie drei Membrantrennstufen A, B und C umfassen, wobei alle drei Membrantrennstufen A, B und C jeweils einen Membranblock (1) oder mehrere Membranblöcke (1), umfassend jeweils mehrere parallel verschaltete Membrantrenneinheiten (2), umfassen,
   und dass
die Gasverteilung der ersten Membrantrennstufe A derart ausgestaltet ist, dass sie die erste Feedgasleitung (7) und die zweite Feedgasleitung (8) mit den Gaseinlässen (3) der Membrantrenneinheiten (2) der ersten Membrantrennstufe A derart verbindet, dass in jedem Membranblock (1) der Membrantrennstufe A mindestens zwei verschiedenen Membrantrenneinheiten (2) Gasströme zugeführt werden die sich in ihrer Zusammensetzung unterscheiden,
die erste Membrantrennstufe A derart ausgestaltet ist, dass zwei voneinander verschiedene Retentatströme in einer ersten Retentatgasableitung (12) und einer zweiten Retentatgasableitung (13) und zwei voneinander verschiedene Permeatströme in einer ersten Permeatgasableitung (15) und einer zweiten Permeatgasableitung (16) erhalten werden,
die beiden Retentatströme der ersten Membrantrennstufe A der zweiten Membrantrennstufe B als Feedströme zugeführt werden, wobei die Retentatgasableitungen (12) und (13) mit der Gasverteilung der zweiten Membrantrennstufe B verbunden sind,
die beiden Permeatströme der ersten Membrantrennstufe A der dritten Membrantrennstufe C als Feedströme zugeführt werden, wobei die Permeatgasableitungen (15) und (16) mit der Gasverteilung der dritten Membrantrennstufe C verbunden sind,
die Gasverteilung der zweiten Membrantrennstufe B derart ausgestaltet ist, dass sie die erste Retentatgasableitung (12) und die zweite Retentatgasableitung (13) mit den Gaseinlässen (3) der Membrantrenneinheiten (2) der zweiten Membrantrennstufe B derart verbindet, dass in jedem Membranblock (1) der zweiten Membrantrennstufe B mindestens zwei verschiedenen Membrantrenneinheiten (2) Gasströme zugeführt werden die sich in ihrer Zusammensetzung unterscheiden,
   und
die Gasverteilung der dritten Membrantrennstufe C derart ausgestaltet ist, dass sie die erste Permeatgasableitung (15) und die zweiten Permeatgasableitung (16) mit den Gaseinlässen (3) der Membrantrenneinheiten (2) der dritten Membrantrennstufe C derart verbindet, dass in jedem Membranblock (1) der dritten Membrantrennstufe C mindestens zwei verschiedenen Membrantrenneinheiten (2) Gasströme zugeführt werden die sich in ihrer Zusammensetzung unterscheiden.

Besonders bevorzugt ist die zweite Membrantrennstufe B derart ausgestaltet, dass zwei voneinander verschiedene Retentatströme in einer ersten Retentatgasableitung (24) und einer zweiten Retentatgasableitung (25) und /oder zwei voneinander verschiedene Permeatströme in einer ersten Permeatgasableitung (22) und einer zweiten Permeatgasableitung (23) erhalten werden und/oder die dritte Membrantrennstufe C derart ausgestaltet, dass zwei voneinander verschiedene Retentatströme in einer ersten Retentatgasableitung (28) und einer zweiten Retentatgasableitung (29) und /oder zwei voneinander verschiedene Permeatströme in einer ersten Permeatgasableitung (26) und einer zweiten Permeatgasableitung (27) erhalten werden.

Wie zuvor beispielhaft anhand von 2- und 3-stufigen Verschaltungen gezeigt, können die erfindungsgemäß ausgestalteten Membrantrennstufen zu jeder beliebigen Art von mehrstufigen Verschaltungen, besonders bevorzugt 2-, 3-, 4- und 5-stufigen Verschaltungen, ganz besonders bevorzugt 2-, 3- und 4-stufigen Verschaltungen kombiniert werden. Entsprechende Verschaltungen sind dem Fachmann für "klassische" Membrantrennstufen, denen lediglich ein Gasstrom zur Auftrennung zugeführt wird, bekannt. Die 3-stufige Verschaltung ist im Rahmen der vorliegenden Erfindung am meisten bevorzugt.

In erfindungsgemäßen Anlagen können erfindungsgemäße Membrantrennstufen, welche mindestens zwei voneinander unterschiedliche Feedgasströme auftrennen, auch mit "klassischen" Membrantrennstufen kombiniert werden, die nur einen Gasstrom in einen Permeat- und einen Retentatstrom auftrennen. So können z.B. stromaufwärts, zur Generierung eines oder mehrerer Feedgasstroms/Feedgasströme, klassische Membrantrennstufen verwendet werden.

Es ist aber auch möglich stromabwärts einer erfindungsgemäßen Membrantrennstufe klassische Membrantrennstufen zu verwenden. So könnte z.B. einer der aus einer erfindungsgemäßen Membrantrennstufe erhaltenen Permeat- und/oder Retentatströme einer solchen klassischen Membrantrennstufe zugeführt werden. Ferner ist es - wie oben bereits erläutert - möglich, die erfindungsgemäßen Membrantrennstufen derart auszugestalten, dass jeweils nur ein Permeat und/oder nur ein Retentatstrom, erhalten wird/werden. Diese Permeat- bzw. Retentatströme können dann in klassischen Membrantrennstufen weiterverarbeitet werden.

Wie für die speziellen Ausführungsformen gemäß Abbildungen 10 und 11 bereits ausgeführt, benötigen die in der erfindungsgemäßen Anlage und dem erfindungsgemäßen Verfahren umfassten Membrantrennstufen eine Partialdruckdifferenz zwischen Retentat- und Permeatseite der Membranen. Es gilt somit für sämtliche Ausführungsformen der vorliegenden Erfindung, dass, sollten die Feedgasströme der jeweiligen Membrantrennstufen keine ausreichende Partialruckdifferenz zur Permeatseite der Membrantrennstufen aufweisen, bevorzugt ein Kompressor in der Feedgasleitung und/oder eine Vakuumpumpe auf der Permeatseite der Membran verwendet wird/werden. Ebenfalls bevorzugt, als Alternative oder in Kombination, kann dem Permeatraum für die Erhöhung der Partialdruckdifferenz Spülgas zugeführt werden. Dies ist dem Fachmann unter dem Begriff Sweep bekannt. Besonders bevorzugt werden Kompressoren lediglich in einem oder mehreren Feedströmen stromaufwärts der ersten erfindungsgemäßen Trennstufe verwendet.

Die vorliegende Erfindung umfasst - wie zuvor bereits angedeutet - ein Verfahren zur simultanen Aufreinigung von zwei oder mehr Gasströmen, welche sich in ihrer Zusammensetzung unterscheiden. Das erfindungsgemäße Verfahren wird in einer erfindungsgemäßen Anlage durchgeführt.

Besonders bevorzugt umfasst das erfindungsgemäße Verfahren die Schritte:
i) Bereitstellung eines ersten Feedgasstroms,
ii) Bereitstellen eines zweiten Feedgasstroms, der sich in seiner Zusammensetzung vom ersten Feedgasstrom, unterscheidet,
iii) Zuführen des ersten und des zweiten Feedgasstroms zu einer Membrantrennstufe, wobei
   - die Membrantrennstufe einen Membrantrennblock (1) oder mehrere Membranblöcke (1) aufweist, und der Membrantrennblock (1) bzw. die Membrantrennblöcke (1) jeweils mehrere, parallel verschaltete, Membrantrenneinheiten (2) umfasst/umfassen,
   - die Membrantrennstufe eine Gasverteilung aufweist, welche Verbindungsleitungen (18), die jeweils die Gaseinlässe (3) zweier benachbarter Membrantrenneinheiten (2) eines Membranblocks (1), bevorzugt direkt und unmittelbar, miteinander verbinden und/oder Verteilleitungen (4), die mehrere Abzweigungen (5) enthalten, die jeweils mittels separater Zuführleitungen (6) mit den Gaseinlässen (3) der einzelnen Membrantrenneinheiten (2) eines Membranblocks (1) verbunden sind, umfasst, wobei eine oder mehrere Abzweigung(en) (5) zusätzlich auch noch eine Anschlussmöglichkeit für eine Feedgasleitung aufweisen können, so dass mittels der Abzweigung(en) (5) gleichzeitig eine Feedgasleitung und eine Zuführleitung (6) an die Verteilleitung (4) angeschlossen sein können,
   - die Membrantrennstufe sofern sie mehrere Membranblöcke (1) umfasst, Rohrleitungen, bevorzugt Rohrleitungen (19a, 19b, 20a, 20b), umfasst, die die Membranblöcke (1) der Membrantrennstufe miteinander verbinden,
      und
   wobei der erste und der zweite Feedgasstrom, unabhängig voneinander, an räumlich voneinander getrennten Stellen, jeweils einer Verteilleitung (4) oder einer Verbindungsleitung (18) oder einer Abzweigung (5), oder, sofern vorhanden, einer Rohrleitung bzw. Rohrleitungen die die Membranblöcke (1) einer Membranseparationsstufe miteinander verbindet/verbinden, bevorzugt einer Rohrleitung bzw. Rohrleitungen (19a, 19b, 20a, 20b), oder einem Gaseinlass (3) zugeführt werden, wobei die Anschlussstellen des ersten und zweiten Feedgasstroms derart angeordnet sind, dass zwei oder mehr als zweie Abzweigung(en) (5) und/oder zwei oder mehr als zwei Gaseinlässe (3) zwischen den Anschlussstellen angeordnet sind,
iv) Zuführen des ersten und des zweiten Feedgasstroms mittels der Gasverteilung zu den Gaseinlässen (3) der Membrantrenneinheiten (2) der Membrantrennstufe,
v) Auftrennen der durch die Gaseinlässe (3) den Membrantrenneinheiten (2) zugeführten Gasgemische in den Membrantrenneinheiten (2) mittels Gasseparationsmembranen, in jeweils einen Retentatgasstrom und einen Permeatgasstrom.

Besonders bevorzugt umfasst das Verfahren der vorliegenden Erfindung zudem die Schritte:
vi) Zusammenführen von, bevorzugt aller, Retentatströme(n) der Membrantrenneinheiten (2) eines Membranblocks (1) zu einem oder mehreren Retentatgasstrom bzw. -strömen,
   und/oder
vii) Zusammenführen von, bevorzugt aller, Permeatströme(n) der Membrantrenneinheiten (2) eines Membranblocks (1) zu einem oder mehreren Permeatgasstrom bzw. -strömen.

Das Zusammenführen der Permeat- und/oder Retentatströme kann, wie weiter oben beschrieben, bevorzugt mittels Permeat- und/oder Retentatsammelleitungen oder über Retentat- und/oder Permeatverbindungsleitungen zwischen den entsprechenden Gasauslässen der Membrantrenneinheiten erfolgen.

Weitere bevorzugte Verfahrensschritte ergeben sich aus der obigen Beschreibung der erfindungsgemäßen Anlage und des Verfahrens, sowie den Beispielen und den Ansprüchen.

Dier erfindungsgemäße Anlage und das Verfahren können insbesondere in Prozessen eingesetzt werden, in denen eine simultanen Auftrennung mehrerer Gasströme mit unterschiedlichen Zusammensetzungen mittels Gasseparationsmembranen notwendig ist. Insbesondere auch in Prozessen, in denen die aufzutrennenden Gasströme in ihren jeweiligen Volumenströmen und Zusammensetzungen Schwankungen unterliegen können. Dies trifft insbesondre auf Verfahren zu in denen regenerative Energien verwendet werden, da diese häufig nur in stark schwankenden Mengen verfügbar sind. Weitere Beispiele für Anwendungen sind z.B. Erdgasfelder mit verschiedenen Gasquellen, welche in einer gemeinsamen Gasseparationsanalage statt in einer Gasseparationsanlage pro Gasquelle, verarbeitet werden sollen oder Helium Gasquellen, in denen Methan von Helium in einer Gasseparationsanlage getrennt wird, das Methan anschließend thermisch verwertet und die Abgase der thermischen Verwertung ebenfalls per Gasseparation aufgetrennt werden sollen. Beispiele 1 und 2 zeigen, dass die beiden Gasseparationen sehr viel effektiver in einer erfindungsgemäßen Anlage statt in zwei getrennten Gasseparationsanlagen durchgeführt werden können.

### Beispiele

Für die Erstellung der Beispiele wurden Prozesssimulationsrechnungen in Aspen Custom Modeller (ACM), gemäß dem Modell von Scholz et al., "Modeling Gas Permeation by Linking Nonideal Effects", Industrial & Engineering Chemistry Research, 2013, 52, 1079-1088 durchgeführt. Für die Simulation genutzte Modelltiefe aus Scholz et al. ist wie folgt:
- Idealer Gegenstrom von Retentat und Permeat
- Konstante Permeanzen und damit konstante Separationskapazitäten (temperaturunabhängig)
- Berücksichtigung von Druckverlust
- Berücksichtigung der Energiebilanz
- Berücksichtigung des Joule-Thomson Effekts
- Realgasverhalten nach Soave-Redlich-Kwong
- Vernachlässigung von Konzentrationspolarisation und weiteren nicht idealen Effekten

Die genutzte Modulgeometrie ist wie folgt. Der Außendurchmesser der Membranhohlfaser beträgt 415 µm und die Wandstärke der Membranhohlfasern beträgt 74 µm. Die Faserlänge beträgt 1 m und der Moduldurchmesser beträgt 0,16 m. In den Beispielen entspricht eine Membrantrenneinheit einem Membranmodul in der Simulation. Die Faseranzahl beträgt 76700. Der Wärmetransferkoeffizient der Faser beträgt 4 W/(m² K). In den Beispielen entspricht eine Membrantrenneinheit einem Membranmodul in der Simulation.

### Beispielreihe 1 (Beispiel 1.1 bis 1.9):

In Beispielreihe 1 wird ein Trennsystem entsprechend Abbildung 1 eingesetzt. Der erste Feedgasstrom A besteht aus 10 vol-% Helium (He) und 90 vol-% Methan (CH₄). Der zweite Feedgasstrom B besteht aus 40 vol-% CO₂ und 60 vol-% N₂. Feedgasstrom A und Feedgasstrom B werden einer Membrantrennstufe, bestehend aus einem Membranblock (1) mit 10 Membrantrenneinheiten (MTE) (2₁ - 2₁₀) zugeführt. Die Permeate und Retentate der jeweiligen MTEs werden über Permeatgasleitungen (10₁ - 10₁₀) einem Permeatsammelrohr (14) und über Retentatgasleitungen (9₁ - 9₁₀) einem Retentatsammelrohr (11) zugeführt. Die einzelnen MTEs sind jeweils identisch ausgeführt und enthalten Polyimidhohlfasermembranen welche im Gegenstrom betrieben werden. Die beiden Feedgasströme A und B werden bei einer identischen Feedgastemperatur von 25°C mittels der Feedgasleitung (7) und (8) einer Verteilleitung (4) an deren gegenüberliegenden Enden zugeführt und von dort über die Zuführleitungen (6₁ - 6₁₀) den jeweiligen MTEs (2₁ - 2₁₀) zugeführt. Der Druck der Retentatgasströme wird mittels Ventilen in den Retentatgasableitungen (12) und (13) auf einem identischen Druck von 10,00 bara gehalten. Für den Druck der Feedgasströme in den Zuführleitungen (7) oder (8) ergeben sich druckverlustbedingt über Variation der Volumenströme leicht unterschiedliche Werte von 10,08 bis 10,1 bara. Zusammensetzungen, Temperaturen, Volumenströme (Flüsse) sowie Drücke der beiden Feedgasströme A und B sind den Tabellen 1a und 1b zu entnehmen. Der Druck der Permeatgasströme wird mittels Ventilen in den Permeatgasableitungen (15) und (16) auf 1,01 bara eingestellt. Unter den genannten Bedingungen weisen die jeweiligen MTEs eine Separationskapazität von 40000 GPU*m² für Helium (He), 26700 GPU*m² für CO₂, 800 GPU*m² für N₂ und 530 GPU*m² für CH₄ auf. Dementsprechend sind die Selektivitäten, also das Verhältnis der Permeanzen der in den MTE genutzten Membran für He/CH₄ 75 und für CO₂/N₂ 33.

In diesem Beispiel ist die Summe der Volumenströme beider Feedgasströme immer 1000 Nm³/h. In der Beispielreihe der Beispiele 1.1 bis 1.9 werden jedoch die einzelnen Volumenströme jeweils derart verändert, dass der Volumenstrom von Feedstrom A von Beispiel zu Beispiel zunimmt und der Volumenstrom von Feedstrom B von Beispiel zu Beispiel in gleichem Maße abnimmt.

In Beispielreihe 1 strömen die unterschiedlichen Feedgasströme jeweils unvermischt in die MTEs und auch die Retentatgas- und die Permeatgasströme werden ohne Vermischung abgezogen. Dies wird durch entsprechende Molche in der Verteilleitung (4) bzw. dem Permeatsammelrohr (14) und dem Retentatsammelrohr (11) sichergestellt. Der Druckverlust über die Verteilleitung (4) und Abzweigungen (5) beträgt im vorliegenden Beispiel nur wenige mbar womit sich das Feedgas mengenmäßig nahezu ideal auf die MTEs aufteilt.

In Beispiel 1.1 wird auf Grund des geringen Volumenstroms des Feedgasstroms A dieser nur der MTE (2₁) über Zuführleitung (6₁) zugeführt, das Retentatgas der MTE (2₁) aus Retentatgasleitung (9₁) ausschließlich über Retentgasableitung (12) abgezogen und das Permeatgas der MTE (2₁) aus Permeatgasleitung (10₁) ausschließlich über die Permeatgasableitung (15) abgezogen. Entsprechend wird der Feedgasstrom B den restlichen MTEs (2₂ bis 2₁₀) über die Zuführleitungen (6₂ bis 6₁₀) zugeführt, das Retentatgas der Retentatgasleitungen (9₂ bis 9₁₀) ausschließlich über die Retentatgasableitung (13) abgeführt und das Permeatgas der Permeatgasleitungen (10₂ bis 10₁₀) ausschließlich über die Permeatgasableitung (16) abgezogen. Als Trennergebnis ergeben sich in allen vier Gasableitungen (Retentatgasableitung (12) und (13) sowie, Permeatgasableitungen (15) und (16)) jeweils die ideal erreichbaren Reinheiten und Ausbeuten, bei denen das Produkt aus Reinheit und Ausbeute maximal ist

Zusammensetzungen, Temperatur, Volumenstrom (Fluss), Drücke und Ausbeuten der in den jeweiligen Beispielen 1.1 bis 1.9 erhaltenen zwei Permeatströme (15) und (16) und der zwei Retentatströme (12) und (13) sind den Tabellen 2a bis 2d zu entnehmen.

**Tabelle 1a:**

| Feedstrom A gemessen in der Zuführleitung (7) | | | | | |
|---|---|---|---|---|---|
| Beispiel | Druck | Temp. | Fluss | He | CH₄ |
| # | [bar(a)] | [°C] | [Nm³/h] | [vol%] | [vol%] |
| 1.1 | 10,08 | 25 | 100 | 10 | 90 |
| 1.2 | 10,08 | 25 | 200 | 10 | 90 |
| 1.3 | 10,09 | 25 | 300 | 10 | 90 |
| 1.4 | 10,09 | 25 | 400 | 10 | 90 |
| 1.5 | 10,09 | 25 | 500 | 10 | 90 |
| 1.6 | 10,09 | 25 | 600 | 10 | 90 |
| 1.7 | 10,1 | 25 | 700 | 10 | 90 |
| 1.8 | 10,1 | 25 | 800 | 10 | 90 |
| 1.9 | 10,1 | 25 | 900 | 10 | 90 |

**Tabelle 1b:**

| Feedstrom B gemessen in der Zuführleitungen (8) | | | | | |
|---|---|---|---|---|---|
| Beispiel | Druck | Temp. | Fluss | CO₂ | N₂ |
| # | [bar(a)] | [°C] | [Nm³/h] | [vol%] | [vol%] |
| 1.1 | 10,1 | 25 | 900 | 40 | 60 |
| 1.2 | 10,1 | 25 | 800 | 40 | 60 |
| 1.3 | 10,1 | 25 | 700 | 40 | 60 |
| 1.4 | 10,09 | 25 | 600 | 40 | 60 |
| 1.5 | 10,09 | 25 | 500 | 40 | 60 |
| 1.6 | 10,09 | 25 | 400 | 40 | 60 |
| 1.7 | 10,09 | 25 | 300 | 40 | 60 |
| 1.8 | 10,08 | 25 | 200 | 40 | 60 |
| 1.9 | 10,08 | 25 | 100 | 40 | 60 |

**Tabelle 2a:**

| Erster Retentatstrom in Retentatgasableitung (12) | | | | | | |
|---|---|---|---|---|---|---|
| Beispiel | Druck | Temp. | Fluss | He | CH₄ | CH₄ Ausbeute |
| # | [bar(a)] | [°C] | Nm³/h] | [vol%] | [vol%] | [%] |
| 1.1 | 10 | 24,8 | 77,7 | 0,64 | 99,4 | 85,7 |
| 1.2 | 10 | 24,8 | 155 | 0,64 | 99,4 | 85,7 |
| 1.3 | 10 | 24,8 | 233 | 0,64 | 99,4 | 85,7 |
| 1.4 | 10 | 24,8 | 311 | 0,64 | 99,4 | 85,7 |
| 1.5 | 10 | 24,8 | 388 | 0,64 | 99,4 | 85,7 |
| 1.6 | 10 | 24,8 | 466 | 0,64 | 99,4 | 85,7 |
| 1.7 | 10 | 24,8 | 544 | 0,64 | 99,4 | 85,7 |
| 1.8 | 10 | 24,8 | 621 | 0,64 | 99,4 | 85,7 |
| 1.9 | 10 | 24,8 | 699 | 0,64 | 99,4 | 85,7 |

**Tabelle 2b:**

| Zweiter Retentatstrom in Retentatgasableitung (13) | | | | | | |
|---|---|---|---|---|---|---|
| Beispiel | Druck | Temp. | Fluss | CO₂ | N₂ | N₂ Ausbeute |
| # | [bar(a)] | [°C] | [Nm³/h] | [vol%] | [vol%] | [%] |
| 1.1 | 10 | 21,8 | 389 | 0,40 | 99,6 | 71,8 |
| 1.2 | 10 | 21,8 | 346 | 0,40 | 99,6 | 71,8 |
| 1.3 | 10 | 21,8 | 303 | 0,40 | 99,6 | 71,8 |
| 1.4 | 10 | 21,8 | 259 | 0,40 | 99,6 | 71,8 |
| 1.5 | 10 | 21,8 | 216 | 0,40 | 99,6 | 71,8 |
| 1.6 | 10 | 21,8 | 173 | 0,40 | 99,6 | 71,8 |
| 1.7 | 10 | 21,8 | 130 | 0,40 | 99,6 | 71,8 |
| 1.8 | 10 | 21,8 | 86,5 | 0,40 | 99,6 | 71,8 |
| 1.9 | 10 | 21,8 | 43,2 | 0,40 | 99,6 | 71,8 |

**Tabelle 2c:**

| Erster Permeatstrom Permeatgasableitung (15) | | | | | | |
|---|---|---|---|---|---|---|
| Beispiel | Druck | Temp. | Fluss | He | CH₄ | He Ausbeute |
| # | [bar(a)] | [°C] | [Nm³/h] | [vol%] | [vol%] | [%] |
| 1.1 | 1,01 | 25,6 | 22,4 | 42,5 | 57,5 | 95,0 |
| 1.2 | 1,01 | 25,6 | 44,7 | 42,5 | 57,5 | 95,0 |
| 1.3 | 1,01 | 25,6 | 67,1 | 42,5 | 57,5 | 95,0 |
| 1.4 | 1,01 | 25,6 | 89,4 | 42,5 | 57,5 | 95,0 |
| 1.5 | 1,01 | 25,6 | 112 | 42,5 | 57,5 | 95,0 |
| 1.6 | 1,01 | 25,6 | 134 | 42,5 | 57,5 | 95,0 |
| 1.7 | 1,01 | 25,6 | 156 | 42,5 | 57,5 | 95,0 |
| 1.8 | 1,01 | 25,6 | 179 | 42,5 | 57,5 | 95,0 |
| 1.9 | 1,01 | 25,6 | 201 | 42,5 | 57,5 | 95,0 |

**Tabelle 2d:**

| Zweiter Permeatstrom Permeatgasableitung (16) | | | | | | |
|---|---|---|---|---|---|---|
| Beispiel | Druck | Temp. | Fluss | CO₂ | N₂ | CO₂ Ausbeute |
| # | [bar(a)] | [°C] | [Nm³/h] | [vol%] | [vol%] | [%] |
| 1.1 | 1,01 | 21,3 | 511 | 70,2 | 29,8 | 99,6 |
| 1.2 | 1,01 | 21,3 | 454 | 70,2 | 29,8 | 99,6 |
| 1.3 | 1,01 | 21,3 | 397 | 70,2 | 29,8 | 99,6 |
| 1.4 | 1,01 | 21,3 | 341 | 70,2 | 29,8 | 99,6 |
| 1.5 | 1,01 | 21,3 | 284 | 70,2 | 29,8 | 99,6 |
| 1.6 | 1,01 | 21,3 | 227 | 70,2 | 29,8 | 99,6 |
| 1.7 | 1,01 | 21,3 | 170 | 70,2 | 29,8 | 99,6 |
| 1.8 | 1,01 | 21,3 | 114 | 70,2 | 29,8 | 99,6 |
| 1.9 | 1,01 | 21,3 | 56,8 | 70,2 | 29,8 | 99,6 |

### Beispielreihe 2 (Beispiele 2.1 bis 2.8)

Beispielreihe 2 entspricht Beispielreihe 1 mit dem Unterschied, dass die Feedgasströme weniger ideal getrennt in die MTEs gelangen und weniger ideal als Retentatgas und Permeatgas abgeführt werden. D.h. es wird auf den Einsatz des in Beispiel 1 in der Verbindungsleitung (4) verwendeten Molchs verzichtet und die beiden Gasströme können sich zu einem geringen Teil an der Stelle an der sie sich treffen vermischen. In Beispielreihe 2 findet das Aufeinandertreffen von Feedgasstrom A und Feedgasstrom B so statt, dass jeweils 50 Nm³/h Feedgasstrom A und 50 Nm³/h von Feedgasstrom B über die jeweils am nächsten gelegene Zuführleitung der entsprechenden MTE zugeführt werden. Das bedeutet für Beispiel 2.1, dass der MTE (2₁) reiner Feedstrom A, der MTE (2₂) ein Gemisch aus 50 vol. % Feedstrom A und 50 vol. % Feedstrom B, und den MTEs (2₃ bis 2₁₀) reiner Feedstrom B zugeführt wird.

Das Retentatgas aus der Retentatgasleitung der MTE die das Mischgas auftrennt, in Beispiel 2.1 ist das MTE (2₂), strömt in gleichen Anteilen Richtung Retentatgasableitung (12) bzw. (13). Auch das Permeatgas der MTE die das Mischgas auftrennt strömt zu gleichen Anteilen Richtung Permeatgasableitung (15) bzw. (16). Die Retentatgase der MTEs, die nur Feedgasstrom A auftrennen, in Beispiel 2.1 ist das MTE (2₁), strömen vollständig zu Retentatgasableitung (12) und die Retentatgase der MTEs die nur Feedgasstrom B auftrennen, in Beispiel 2.1 sind das MTEs (2₃ bis 2₁₀), strömen vollständig zu Retentatgasableitung (13). Analog verhält es sich mit den Permeatströmen der jeweiligen MTEs. Die zuvor beschriebene Aufteilung der Flüsse auf die Retentatgasableitung (12) bzw. (13) bzw. die Permeatgasableitung (15) bzw. (16) wird durch entsprechende Ventile in den Retentatgasableitung (12) bzw. (13) bzw. den Permeatgasableitung (15) bzw. (16) gesteuert.

Zusammensetzungen, Temperaturen, Volumenströme (Flüsse) und Drücke der beiden Feedgasströme A und B sind den Tabellen 3a und 3b zu entnehmen. Tabellen 4a bis 4d fassen die Ergebnisse der Beispiele 2.1 bis 2.8 zusammen. Es ist deutlich zu erkennen, dass ein solcher Betrieb zu Lasten des Trennergebnisses des mengenmäßig geringer zugeführten Feedgasstroms geht. So wird gemäß Beispiel 2.1, bei einem gegenüber Feedgasstrom B sehr geringen Feedgasstrom A, ein etwaiges Trennziel wie die Anreichung von Methan nicht erreicht. Die Methanreinheit in der Retentatgasableitung (12) erreicht nur 88,6 vol-% statt der im idealen Fall erreichten 99,4% aus Tabelle 2a. In Beispiel 2.1 wird zwar dennoch eine deutliche Anreicherung von Helium in der Permeatgasableitung (15) von 10% im Feedgasstrom A auf 28,7% erreicht. Im idealen Fall aus Beispielreihe 1 wären jedoch 42,1% erreichbar.

Bei den ausgeglicheneren Volumenströmen zwischen Feedgasstrom A und B in den Beispielen 2.3 bis 2.7 ergeben sich, trotz des Betriebs mit geringer Vermischung der Feedgasströme, gute Trennergebnisse in allen Gasableitungen (12, 13, 15, 16).

**Tabelle 3a**

| Feedstrom A gemessen in der Zuführleitung (7) | | | | | |
|---|---|---|---|---|---|
| Beispiel | Druck | Temp. | Fluss | He | CH₄ |
| # | [bar(a)] | [°C] | [Nm³/h] | [vol%] | [vol% ] |
| 2.1 | 10,08 | 25 | 150 | 10 | 90 |
| 2.2 | 10,08 | 25 | 250 | 10 | 90 |
| 2.3 | 10,09 | 25 | 350 | 10 | 90 |
| 2.4 | 10,09 | 25 | 450 | 10 | 90 |
| 2.5 | 10,09 | 25 | 550 | 10 | 90 |
| 2.6 | 10,09 | 25 | 650 | 10 | 90 |
| 2.7 | 10,1 | 25 | 750 | 10 | 90 |
| 2.8 | 10,1 | 25 | 850 | 10 | 90 |

**Tabelle 3b**

| Feedstrom B gemessen in der Zuführleitung (8) | | | | | |
|---|---|---|---|---|---|
| Beispiel | Druck | Temp. | Fluss | CO₂ | N₂ |
| # | [bar(a)] | [°C] | [Nm³/h] | [vol% ] | [vol% ] |
| 2.1 | 10,1 | 25 | 850 | 40 | 60 |
| 2.2 | 10,1 | 25 | 750 | 40 | 60 |
| 2.3 | 10,1 | 25 | 650 | 40 | 60 |
| 2.4 | 10,09 | 25 | 550 | 40 | 60 |
| 2.5 | 10,09 | 25 | 450 | 40 | 60 |
| 2.6 | 10,09 | 25 | 350 | 40 | 60 |
| 2.7 | 10,09 | 25 | 250 | 40 | 60 |
| 2.8 | 10,08 | 25 | 150 | 40 | 60 |

**Tabelle 4a:**

| Erster Retentatstrom in Retentatgasableitung (12) | | | | | | | | |
|---|---|---|---|---|---|---|---|---|
| Beispiel | Druck | Temp. | Fluss | He | CH₄ | CO₂ | N₂ | CH₄ Ausbeute |
| # | [bar(a)] | [°C] | [Nm³/h] | [vol% ] | [vol% ] | [vol% ] | [vol% ] | [%] |
| 2.1 | 10 | 24,0 | 108 | 0,48 | 88,6 | 0,24 | 10,66 | 71,1 |
| 2.2 | 10 | 24,3 | 186 | 0,55 | 93,1 | 0,14 | 6,21 | 76,9 |
| 2.3 | 10 | 24,5 | 264 | 0,57 | 94,9 | 0,10 | 4,38 | 79,4 |
| 2.4 | 10 | 24,5 | 341 | 0,59 | 96,0 | 0,08 | 3,38 | 80,8 |
| 2.5 | 10 | 24,6 | 419 | 0,60 | 96,6 | 0,06 | 2,76 | 81,7 |
| 2.6 | 10 | 24,6 | 497 | 0,60 | 97,0 | 0,05 | 2,33 | 82,3 |
| 2.7 | 10 | 24,6 | 574 | 0,61 | 97,3 | 0,05 | 2,01 | 82,8 |
| 2.8 | 10 | 24,7 | 652 | 0,61 | 97,6 | 0,04 | 1,77 | 83,1 |

**Tabelle 4b:**

| Zweiter Retentatstrom in Retentatgasableitung (13) | | | | | | | | |
|---|---|---|---|---|---|---|---|---|
| Beispiel | Druck | Temp. | Fluss | He | CH₄ | CO₂ | N₂ | N₂ Ausbeute |
| # | [bar(a)] | [°C] | [Nm³/h] | [vol%] | [vol%] | [vol%] | [vol%] | [%] |
| 2.1 | 10 | 22,0 | 377 | 0,01 | 4,99 | 0,44 | 94,6 | 69,8 |
| 2.2 | 10 | 22,1 | 333 | 0,01 | 5,64 | 0,44 | 93,9 | 69,6 |
| 2.3 | 10 | 22,1 | 290 | 0,01 | 6,48 | 0,45 | 93,1 | 69,2 |
| 2.4 | 10 | 22,2 | 247 | 0,01 | 7,61 | 0,46 | 91,9 | 68,8 |
| 2.5 | 10 | 22,3 | 204 | 0,01 | 9,23 | 0,47 | 90,3 | 68,1 |
| 2.6 | 10 | 22,4 | 160 | 0,01 | 11,72 | 0,49 | 87,8 | 67,0 |
| 2.7 | 10 | 22,6 | 117 | 0,02 | 16,04 | 0,52 | 83,4 | 65,1 |
| 2.8 | 10 | 23,0 | 74 | 0,03 | 25,44 | 0,59 | 73,9 | 60,7 |

**Tabelle 4c:**

| Erster Permeatstrom in Permeatgasableitung (15) | | | | | | | | |
|---|---|---|---|---|---|---|---|---|
| Beispiel | Druck | Temp. | Fluss | He | CH₄ | CO₂ | N₂ | He Ausbeute |
| # | [bar(a)] | [°C] | [Nm³/h] | [vol%] | [vol%] | [vol%] | [vol%] | [%] |
| 2.1 | 1,01 | 23,6 | 42 | 28,7 | 39,7 | 23,3 | 8,28 | 79,9 |
| 2.2 | 1,01 | 24,3 | 64 | 33,5 | 45,9 | 15,2 | 5,39 | 85,9 |
| 2.3 | 1,01 | 24,6 | 86 | 35,9 | 48,9 | 11,3 | 4,00 | 88,5 |
| 2.4 | 1,01 | 24,8 | 109 | 37,2 | 50,6 | 8,95 | 3,18 | 90,0 |
| 2.5 | 1,01 | 25,0 | 131 | 38,1 | 51,8 | 7,43 | 2,63 | 90,9 |
| 2.6 | 1,01 | 25,1 | 153 | 38,8 | 52,6 | 6,35 | 2,25 | 91,5 |
| 2.7 | 1,01 | 25,1 | 176 | 39,2 | 53,3 | 5,54 | 1,96 | 92,0 |
| 2.8 | 1,01 | 25,2 | 198 | 39,6 | 53,7 | 4,92 | 1,74 | 92,4 |

**Tabelle 4d:**

| Zweiter Permeatstrom in Permeatgasableitung (16) | | | | | | | | |
|---|---|---|---|---|---|---|---|---|
| Beispiel | Druck | Temp. | Fluss | He | CH₄ | CO₂ | N₂ | CO₂ Ausbeute |
| # | [bar(a)] | [°C] | [Nm³/h] | [vol%] | [vol%] | [vol%] | [vol%] | [%] |
| 2.1 | 1,01 | 21,5 | 473 | 0,52 | 0,78 | 69,4 | 29,3 | 96,6 |
| 2.2 | 1,01 | 21,5 | 417 | 0,59 | 0,89 | 69,2 | 29,3 | 96,2 |
| 2.3 | 1,01 | 21,5 | 360 | 0,69 | 1,03 | 69,1 | 29,2 | 95,6 |
| 2.4 | 1,01 | 21,6 | 303 | 0,82 | 1,22 | 68,9 | 29,1 | 94,9 |
| 2.5 | 1,01 | 21,6 | 246 | 1,01 | 1,51 | 68,6 | 28,9 | 93,9 |
| 2.6 | 1,01 | 21,7 | 190 | 1,31 | 1,96 | 68,1 | 28,6 | 92,3 |
| 2.7 | 1,01 | 21,9 | 133 | 1,86 | 2,79 | 67,3 | 28,1 | 89,4 |
| 2.8 | 1,01 | 22,4 | 76 | 3,25 | 4,88 | 65,1 | 26,8 | 82,6 |

### Vergleichsbeispiel 1:

Als nicht erfindungsgemäßes Beispiel wird ein System betrachtet bei dem die beiden Feedgasströme A und B der Bespiele 1 und 2, getrennt voneinander, jeweils einer separaten Membrantrennstufe 1 bzw. 2 zugeführt werden.

Da die Volumenströme der jeweiligen Feedgasströme wie in den Beispielreihen 1 und 2 schwanken können, muss die Anzahl der parallel verschalteten MTEs jeder der Membrantrennstufen 1 und 2 auf den maximalen Volumenstrom ausgelegt werden. Das bedeutet, dass gegenüber den 10 MTEs in den erfindungsgemäßen Beispielen 1 und 2 hier nun zweimal 10 MTEs, also doppelt so viele MTEs, benötigt werden. Da die Volumenströme der beiden Feedgasströme jedoch variieren, werden nicht zu jedem Betriebszeitpunkt alle MTEs der jeweiligen Membrantrennstufe 1 bzw. 2 voll ausgelastet. Das Ergebnis der Trennung unter diesen Bedingungen, d.h. Betrieb der MTEs in Teillast wird in den Tabellen 6a bis d gezeigt. Zusammensetzungen, Temperaturen, Volumenströme (Flüsse) und Drücke der beiden Feedgasströme A und B sind den Tabellen 5a und 5b zu entnehmen.

**Tabelle 5a:**

| Vergleichsbeispiel | Feed Membrantrennstufe 1 | | | | |
|---|---|---|---|---|---|
| | Druck | Temp. | Fluss | He | CH₄ |
| # | [bar(a)] | [°C] | [Nm³/h] | [vol%] | [vol%] |
| 1.1 | 10,08 | 25 | 1000 | 10 | 90 |
| 1.2 | 10,08 | 25 | 950 | 10 | 90 |
| 1.3 | 10,09 | 25 | 850 | 10 | 90 |
| 1.4 | 10,09 | 25 | 750 | 10 | 90 |
| 1.5 | 10,09 | 25 | 650 | 10 | 90 |
| 1.6 | 10,09 | 25 | 550 | 10 | 90 |
| 1.7 | 10,1 | 25 | 450 | 10 | 90 |
| 1.8 | 10,1 | 25 | 350 | 10 | 90 |
| 1.9 | 10,1 | 25 | 250 | 10 | 90 |

**Tabelle 5b:**

| Vergleichsbeispiel | Feed Membrantrennstufe 2 | | | | |
|---|---|---|---|---|---|
| | Druck | Temp. | Fluss | CO₂ | N₂ |
| # | [bar(a)] | [°C] | [Nm³/h] | [vol%] | [vol% ] |
| 1.1 | 10,1 | 25 | 1000 | 40 | 60 |
| 1.2 | 10,1 | 25 | 950 | 40 | 60 |
| 1.3 | 10,1 | 25 | 850 | 40 | 60 |
| 1.4 | 10,09 | 25 | 750 | 40 | 60 |
| 1.5 | 10,09 | 25 | 650 | 40 | 60 |
| 1.6 | 10,09 | 25 | 550 | 40 | 60 |
| 1.7 | 10,09 | 25 | 450 | 40 | 60 |
| 1.8 | 10,08 | 25 | 350 | 40 | 60 |
| 1.9 | 10,08 | 25 | 250 | 40 | 60 |

**Tabelle 6a:**

| Vergleichsbeispiel | Retentat der Membrantrennstufe 1 | | | | | |
|---|---|---|---|---|---|---|
| | Druck | Temp. | Fluss | He | CH₄ | CH₄ Ausbeute |
| # | [bar(a)] | [°C] | [Nm³/h] | [vol%] | [vol%] | [%] |
| 1.1 | 10 | 24,8 | 777 | 0,64 | 99,4 | 85,7 |
| 1.2 | 10 | 24,8 | 730 | 0,53 | 99,5 | 85,0 |
| 1.3 | 10 | 24,7 | 639 | 0,32 | 99,7 | 83,2 |
| 1.4 | 10 | 24,5 | 548 | 0,16 | 99,8 | 81,0 |
| 1.5 | 10 | 24,4 | 457 | 0,06 | 99,9 | 78,1 |
| 1.6 | 10 | 24,1 | 367 | 0,01 | 100,0 | 74,2 |
| 1.7 | 10 | 23,7 | 278 | 0,00 | 100,0 | 68,6 |
| 1.8 | 10 | 22,9 | 189 | 0,00 | 100,0 | 60,1 |
| 1.9 | 10 | 21,1 | 102 | 0,00 | 100,0 | 45,4 |

**Tabelle 6b:**

| Vergleichsbeispiel | Retentat der Membrantrennstufe 2 | | | | | |
|---|---|---|---|---|---|---|
| | Druck | Temp. | Fluss | CO₂ | N₂ | N₂ Ausbeute |
| # | [bar(a)] | [°C] | [Nm³/h] | [vol% ] | [vol%] | [%] |
| 1.1 | 10 | 21,8 | 432 | 0,40 | 99,6 | 71,8 |
| 1.2 | 10 | 21,5 | 402 | 0,28 | 99,7 | 70,3 |
| 1.3 | 10 | 21,4 | 340 | 0,11 | 99,9 | 66,7 |
| 1.4 | 10 | 21,3 | 279 | 0,03 | 100,0 | 62,1 |
| 1.5 | 10 | 21,1 | 219 | 0,00 | 100,0 | 56,1 |
| 1.6 | 10 | 20,6 | 158 | 0,00 | 100,0 | 48,0 |
| 1.7 | 10 | 19,8 | 99 | 0,00 | 100,0 | 36,7 |
| 1.8 | 10 | 17 | 44 | 0,00 | 100,0 | 20,7 |
| 1.9 | 10 | 2,7 | 7 | 0,00 | 100,0 | 4,7 |

**Tabelle 6c:**

| Vergleichsbeispiel | Permeat Membrantrennstufe 1 | | | | | |
|---|---|---|---|---|---|---|
| | Druck | Temp. | Fluss | He | CH₄ | He Ausbeute |
| # | [bar(a)] | [°C] | [Nm³/h] | [vol%] | [vol%] | [%] |
| 1.1 | 1,01 | 26 | 223 | 42,5 | 57,5 | 95,0 |
| 1.2 | 1,01 | 26 | 220 | 41,5 | 58,5 | 96,0 |
| 1.3 | 1,01 | 26 | 211 | 39,2 | 60,8 | 97,6 |
| 1.4 | 1,01 | 26 | 202 | 36,6 | 63,4 | 98,8 |
| 1.5 | 1,01 | 26 | 193 | 33,6 | 66,4 | 99,6 |
| 1.6 | 1,01 | 26 | 183 | 30,1 | 69,9 | 99,9 |
| 1.7 | 1,01 | 26 | 172 | 26,2 | 73,8 | 100,0 |
| 1.8 | 1,01 | 25 | 161 | 21,8 | 78,2 | 100,0 |
| 1.9 | 1,01 | 25 | 148 | 16,9 | 83,1 | 100,0 |

**Tabelle 6d:**

| Vergleichsbeispiel | Permeat Membrantrennstufe 2 | | | | | |
|---|---|---|---|---|---|---|
| | Druck | Temp. | Fluss | CO₂ | N₂ | CO₂ Ausbeute |
| # | [bar(a)] | [°C] | [Nm³/h] | [vol% ] | [vol%] | [%] |
| 1.1 | 1,01 | 21 | 568 | 70,2 | 29,8 | 99,6 |
| 1.2 | 1,01 | 22 | 548 | 69,1 | 30,9 | 99,7 |
| 1.3 | 1,01 | 22 | 509 | 66,7 | 33,3 | 99,9 |
| 1.4 | 1,01 | 22 | 471 | 63,7 | 36,3 | 100,0 |
| 1.5 | 1,01 | 22 | 431 | 60,3 | 39,7 | 100,0 |
| 1.6 | 1,01 | 22 | 392 | 56,2 | 43,8 | 100,0 |
| 1.7 | 1,01 | 22 | 351 | 51,3 | 48,7 | 100,0 |
| 1.8 | 1,01 | 22 | 307 | 45,7 | 54,3 | 100,0 |
| 1.9 | 1,01 | 21 | 243 | 41,2 | 58,8 | 100,0 |

Die Ergebnisse der Tabellen 6a bis 6d zeigen, dass sich bei einem - durch die Variationen der Feedströme verursachten - Betrieb der MTEs im Teillastbereich, trotz doppelter Anzahl an eingesetzten MTEs im Vergleich zu den erfindungsgemäßen Beispielen 1 und 2, jeweils kein zufriedenstellendes Trennergebnis erreichen lässt.

Man könnte nun in der im Vergleichsbeispiel verwendeten Apparatur, z.B. durch Installation zusätzlicher Ventile zum Absperren einzelner MTE, dafür Sorge tragen, dass die nicht abgesperrten MTEs immer im Volllastbereich betrieben werden. Das würde den durch die Verdopplung der MTE Anzahl verursachten apparativen Aufwand jedoch noch deutlich erweitern und einen zusätzlichen regelungstechnischen Aufwand bedingen.

### Vergleich der Trenneffizienzen der Beispiele 1 und 2 mit Vergleichsbeispiel 1

Im Abbildung 12 sind die Ergebnisse der Beispiele 1, 2 und des Vergleichsbeispiels zum Vergleich aufgetragen. Aufgetragen ist das Produkt aus Ausbeute und Reinheit von Methan im Retentat (Retentatgasleitung (12)) bezogen auf den max. erreichbaren Wert über der Feedgasmenge in Nm³/h. Das erfindungsgemäße Beispiel 1 ergibt stets das max. erreichbare Produkt aus CH₄ Reinheit und CH₄ Ausbeute und damit einen relativen Wert von 100%. Im Vergleichsbeispiel 1 wird der max. Wert lediglich bei Volllast von 1000 Nm³/h erreicht und fällt dann rasch ab. Das erfindungsgemäße Beispiel 2 hält relativ hohe Werte über einen breiten Teillastbereich.

Eine Erhöhung der Anzahl der MTEs in Beispielreihe 2, z.B. durch Nutzung von MTEs mit geringerer Trennkapazität bei gleicher gesamter installierter Trennkapazität kann in der erfindungsgemäßen Apparatur den dargestellten negativen Einfluss der teilwiesen Vermischung der Feedgasströme durch den Verdünnungseffekt deutlich reduzieren. In der Grenzwertbetrachtung ergibt sich bei unendlich hoher Anzahl von MTEs das ideale Ergebnis von Beispiel 1.

Der Einsatz von mehreren hundert Membrantrenneinheiten ist im Bereich der Gasseparation durchaus realistisch.

### Beispiel 3

In Beispiel 3 wird der erfindungsgemäße Betrieb einer Membrantrennstufe mit einem Membranblock (19) mit 10 parallel verschalteten Membrantrenneinheiten (2) gemäß Abbildung 1 im Bereich Helium Source Gas betrachtet. Die einzelnen Membrantrenneinheiten (2) haben die im Beispiel 1 beschriebenen Eigenschaften. Auch teilen sich die in den Feedgasleitungen (7) und (8) getrennt zugeführten Feedgasströme wie in Beispiel 1 ideal auf. Im Unterschied zum Beispiel 1 werden nur ein Retentatgasstrom (12) und ein Permeatgasstrom (15) erzeugt, in dem die Retentat- bzw. Permeatströme der Membrantrenneinheiten (2) mittels Retentat- bzw. Permeatgasleitungen (9) bzw. (10) einem Retentat- bzw. einem Permeatgassammelrohr (11) bzw. (14) zugeführt werden, welche jeweils nur mit einer Retentat- bzw. Permeatgasableitung (12) bzw. (15) verbunden sind. An den Retentatgasleitungen (9) wurden Probenahmestelle zur Ermittlung der Retentatkonzentration der einzelnen Membrantrenneinheiten (2) angebracht.

Bei Helium Source Gas handelt es sich um Helium enthaltende Erdgasquellen. Je nach Region und teilweise auch je nach Quelle innerhalb einer kleineren Region liegen teilweise deutlich unterschiedliche Heliumkonzentrationen vor. In Beispiel 3 wird vereinfachend angenommen, dass die beiden betrachteten Quellen ausschließlich Helium und Methan enthalten. Quelle 1 (Feedgasstrom 1) enthält 1% Helium und Quelle 2 (Feedgasstrom 2) enthält 3% Helium. Ziel der Trennung ist es, für beide Feedgasströme einen Heliumgehalt von nur 0,2% im Retentat zu erhalten, um noch relativ gute Ausbeuten an Helium im Permeat zu erzielen. Für die in Tabelle 7 dargestellte Zuführung der Feedgasströme ergibt sich in jeder Retentatgasleitung eine Heliumkonzentration von 0,2%. Tabelle 7 zeigt die Flüsse und Konzentrationen der Retentat- und Permeatgasströme.

**Tabelle 7:**

| | Fluss | Druck | Temperatur | He | CH4 |
|---|---|---|---|---|---|
| | [Nm³/h] | [bara] | [°C] | [vol%] | [vol%] |
| Feedgasstrom 1 | 572 | 10,11 | 25,0 | 1,0 | 99,0 |
| Feedgasstrom 2 | 435 | 10,08 | 25,0 | 3,0 | 97,0 |
| Retentatgasstrom | 861 | 10 | 24,6 | 0,20 | 99,80 |
| Permeatgasstrom | 146 | 1,01 | 24,9 | 11,69 | 88,31 |
| Ausbeute | | | | 90,8% | 87% |

### Vergleichsbeispiel 2

Im nicht erfindungsgemäßen Vergleichsbeispiel 2 zu Beispiel 3 werden der Feedgasstrom 1 der Quelle 1 und Feedgasstrom 2 der Quelle 2 gemischt und anschließend als ein Feedgasstrom über eine Feedgasleitung den 10 Membrantrenneinheiten zugeführt, so dass jede Membrantrenneinheit den gleichen Feedgasstrom auftrennt. Der restliche Aufbau der Membrantrennstufe entspricht Beispiel 3. Das Ergebnis ist in Tabelle 8 zusammengefasst.

**Tabelle 8:**

| | Fluss | Druck | Temperatur | He | CH4 |
|---|---|---|---|---|---|
| | [Nm³/h] | [bara] | [°C] | [vol%] | [vol%] |
| Feedgasstrom | 1007 | 10,1 | 25,0 | 1,9 | 98,1 |
| Retentatgasstrom | 861 | 10 | 24,5 | 0,24 | 99,76 |
| Permeatgasstrom | 146 | 1,01 | 24,9 | 11,49 | 88,51 |
| Ausbeute | | | | 89,0% | 87,0% |

Vergleicht man nun Beispiel 3 und Vergleichsbeispiel 2 so sieht man, dass das getrennte Zuführen der Feedgasströme gemäß Beispiel 3 zu einem insgesamt besseren Trennergebnis führt. Zunächst sind die erreichten Reinheiten von Helium im Permeat und Methan im Retentat im Beispiel 3 höher als im Vergleichsbeispiel 2. Zudem ist die Ausbeute an Helium im Permeat, d.h. die Menge an Helium im Permeatgasstrom bezogen auf die Menge an Helium im Feedgasstrom, im Beispiel 3 höher als im Vergleichsbeispiel 2. D.h. es wird mehr vom wertvollen Helium bei einer höherer Heliumreinheit gewonnen. Vergleicht man die Situation für Methan im Retentatgasstrom so findet man, dass sogar das Produkt aus Methanreinheit und Methanausbeute im Beispiel 3 leicht höher ist als im Vergleichsbeispiel 2.

### Bezugszeichenliste:

(1) Erfindungsgemäßer Membranblock
(2) Membrantrenneinheit; die jeweiligen parallel verschalteten Membrantrenneinheiten eines Membranblocks werden von (2₁) bis (2ₙ) indiziert, wobei der Index n der fortlaufenden Nummer und die Zahl n der Anzahl der parallel verschalteten Membrantrenneinheiten entspricht
(3) Gaseinlass einer Membrantrenneinheit; die jeweiligen Gaseinlässe der parallel verschalteten Membrantrenneinheiten eines Membranblocks werden von (3₁) bis (3ₙ) indiziert, wobei der Index n fortlaufenden Nummer und die Zahl n der der Anzahl der parallel verschalteten Membrantrenneinheiten entspricht
(4) Verteilleitung; liegen in einer Membrantrennstufe mehrere Membranblöcke und somit mehrere Verteilleitungen vor, so werden diese von (4₁) bis (4ₒ) indiziert, wobei o der fortlaufenden Nummer und die Zahl o der Anzahl der in einer Membrantrennstufe enthaltenen Verteilleitungen entspricht
(5) Abzweigung
(6) Zuführleitung zu einem Gaseinlass einer Membrantrenneinheit; die jeweiligen Zuführleitungen der parallel verschalteten Membrantrenneinheiten eines Membranblocks werden von (6₁) bis (6ₙ) indiziert, wobei der Index n der fortlaufenden Nummer und die Zahl n der Anzahl der parallel verschalteten Membrantrenneinheiten entspricht
(7) erste Feedgasleitung
(8) zweite Feedgasleitung
(9) Retentatgasleitung einer Membrantrenneinheit; die jeweiligen Retentatgasleitungen der parallel verschalteten Membrantrenneinheiten eines Membranblocks werden von (9₁) bis (9ₙ) indiziert, wobei der Index n fortlaufenden Nummer und die Zahl n der der Anzahl der parallel verschalteten Membrantrenneinheiten entspricht
(10) Permeatgasleitung einer Membrantrenneinheit; die jeweiligen Permeatgasleitungen der parallel verschalteten Membrantrenneinheiten eines Membranblocks werden von (10₁) bis (10ₙ) indiziert, wobei der Index n der fortlaufenden Nummer und die Zahl n der Anzahl der parallel verschalteten Membrantrenneinheiten entspricht
(11) Retentatgassammelrohr
(12) Erste Retentatgasableitung
(13) Zweite Retentatgasableitung
(14) Permeatgassammelrohr
(15) Erste Permeatgasableitung
(16) Zweite Permeatgasableitung
(18) Verbindungsleitungen
(19a) Gasleitung
(19b) Gasleitung
(20a) Gasleitung
(20b) Gasleitung
(21) dritte Feedgasleitung
(22) erste Permeatgasleitung der zweiten Membrantrennstufe B)
(23) zweite Permeatgasleitung der zweiten Membrantrennstufe B)
(24) erste Retentatgasleitung der zweiten Membrantrennstufe B)
(25) zweite Retentatgasleitung der zweiten Membrantrennstufe B)
(26) erste Permeatgasleitung der dritten Membrantrennstufe C)
(27) zweite Permeatgasleitung der dritten Membrantrennstufe C)
(28) erste Retentatgasleitung der dritten Membrantrennstufe C)
(29) zweite Retentatgasleitung der dritten Membrantrennstufe C)
(30) Retentatgasauslass einer Membrantrenneinheit; die jeweiligen Retentatgasauslässe der parallel verschalteten Membrantrenneinheiten eines Membranblocks werden von (3₁) bis (3ₙ) indiziert, wobei der Index n fortlaufenden Nummer und die Zahl n der der Anzahl der parallel verschalteten Membrantrenneinheiten entspricht.
(31) Permeatgasauslass einer Membrantrenneinheit; die jeweiligen Permeatgasauslässe der parallel verschalteten Membrantrenneinheiten eines Membranblocks werden von (3₁) bis (3ₙ) indiziert, wobei der Index n fortlaufenden Nummer und die Zahl n der der Anzahl der parallel verschalteten Membrantrenneinheiten entspricht.
(32) Retentatverbindungsleitung zwischen zwei Retentatgasauslässen zweier nebeneinander angeordneten Membrantrenneinheiten eines Membranblocks
(33) Permeatverbindungsleitung zwischen zwei Permeatgasauslässen zweier nebeneinander angeordneten Membrantrenneinheiten eines Membranblocks

## Patentansprüche

1. Anlage zur Auftrennung von Gasgemischen, enthaltend
a. eine erste Feedgasleitung (7), die geeignet bzw. derart ausgestaltet ist einen ersten Feedgasstrom zu transportieren, und eine zweite Feedgasleitung (8), die geeignet bzw. derart ausgestaltet ist einen zweiten, in der Zusammensetzung vom ersten Feedgasstrom unterschiedlichen, Feedgasstrom zu transportieren,
b. eine Membrantrennstufe, umfassend einen Membranblock (1) oder mehrere Membranblöcke (1), wobei der Membranblock (1) / die Membranblöcke (1) jeweils mehrere, parallel verschaltete Membrantrenneinheiten (2) umfasst / umfassen, und wobei
∘ jede Membrantrenneinheit (2) jeweils einen Gaseinlass (3) und Gasseparationsmembranen aufweist und das durch den Gaseinlass (3) zugeführte Gasgemisch mittels der Gasseparationsmembranen in einen Retentatgasstrom und einen Permeatgasstrom auftrennt, und
∘ jede Membrantrenneinheit (2) jeweils einen Retentatgasauslass (30) für den Retentatgasstrom, welcher bevorzugt an eine Retentatgasleitung (9) angeschlossen oder mittels einer oder mehreren Retentatverbindungsleitung(en) (32) mit einem oder zwei Retentatgasauslass/-auslässen (30) der benachbarten Membrantrenneinheit(en) (2) des gleichen Membranblocks (1) verbunden ist, und einen Permeatgasauslass (31) für den Permeatgasstrom, der bevorzugt an eine Permeatgasleitung (10) angeschlossen oder mittels einer oder mehreren Permeatverbindungsleitung(en) (33) mit einem oder zwei Permeatgasauslass/- auslässen (31) der benachbarten Membrantrenneinheit(en) (2) des gleichen Membranblocks (1) verbunden ist, aufweist,
und
c. eine Gasverteilung, die derart ausgestaltet ist, dass
• sie Verbindungsleitungen (18), die jeweils die Gaseinlässe (3) zweier benachbarter Membrantrenneinheiten (2) eines Membranblocks (1) miteinander verbinden, umfasst und/oder eine oder mehrere Verteilleitung(en) (4), die jeweils mehrere Abzweigungen (5) enthält/enthalten, die jeweils mittels Zuführleitungen (6) mit den Gaseinlässen (3) der einzelnen Membrantrenneinheiten (2) eines Membranblocks (1) verbunden sind, umfasst, wobei eine oder mehrere Abzweigung(en) (5) zusätzlich auch noch eine Anschlussmöglichkeit für eine Feedgasleitung aufweisen können, so dass mittels der Abzweigung(en) (5) jeweils gleichzeitig eine Feedgasleitung und eine Zuführleitung (6) an die jeweilige Verteilleitung (4) angeschlossen sein können,
• sie, sofern die Membrantrennstufe mehrere Membranblöcke (1) umfasst, Rohrleitungen, bevorzugt Rohrleitungen (19a, 19b, 20a, 20b), umfasst, die die Membranblöcke (1) der Membrantrennstufe miteinander verbinden,
• die erste Feedgasleitung (7) und die zweite Feedgasleitung (8), unabhängig voneinander, an räumlich voneinander getrennten Stellen, jeweils an eine Verteilleitung (4) oder eine Verbindungsleitung (18) oder eine Abzweigung (5) oder, sofern vorhanden, an eine Rohrleitung die die Membranblöcke (1) der Membrantrennstufe miteinander verbindet, bevorzugt eine Rohrleitung (19a, 19b, 20a oder 20b), oder an einen Gaseinlass (3) angeschlossen sind, wobei die Anschlussstellen derart angeordnet sind, dass zwei oder mehr als zwei Abzweigungen (5) und/oder zwei oder mehr als zwei Gaseinlässe (3) zwischen den Anschlussstellen der ersten Feedgasleitung (7) und der zweiten Feedgasleitung (8) angeordnet sind.

2. Anlage nach Anspruch 1,
**dadurch gekennzeichnet, dass**
die Anschlussstellen der ersten Feedgasleitung (7) und der zweiten Feedgasleitung (8) derart angeordnet sind,
dass der erste Feedgasstrom und der zweite Feedgasstrom innerhalb eines Membranblocks (1) oder mehrerer Membranblöcke (1) der Membrantrennstufe, bevorzugt in einer oder mehreren Verteilleitung(en) (4) und / oder in einer oder mehreren Verbindungsleitung(en) (18) oder innerhalb der Rohrleitung bzw. den Rohrleitungen die die Membranblöcke (1) der Membrantrennstufe miteinander verbindet/verbinden, bevorzugt der Rohrleitung bzw. den Rohrleitungen (19a, 19b, 20a, 20b), aufeinander zufließen.

3. Anlage nach Anspruch 1 oder 2,
**dadurch gekennzeichnet, dass**
die Membrantrennstufe einen Membranblock (1) oder mehrere Membranblöcke (1) enthält, der bzw. die jeweils eine Verteilleitung (4) mit mehreren Abzweigungen (5) und Zuführleitungen (6) umfasst, wobei jeweils eine Zuführleitung (6) eine Abzweigung (5) mit einem Gaseinlass (3) einer Membrantrenneinheit (2) verbindet,
und
die erste Feedgasleitung (7) und zweite Feedgasleitung (8), getrennt voneinander und unabhängig voneinander, mit der /den Verteilleitung(en) (4) und/oder Abzweigungen (5), besonders bevorzugt mit den jeweils gegenüberliegenden Enden der Verteilleitung(en) (4), verbunden sind.

4. Anlage nach Anspruch 1 oder 2,
**dadurch gekennzeichnet, dass**
die Membrantrennstufe einen Membranblock (1) oder mehrere Membranblöcke (1) enthält, der bzw. die jeweils mehrere Verbindungsleitungen (18), welche jeweils einen Gaseinlass (3) einer Membrantrenneinheit (2) mit dem/den Gaseinlass/Gaseinlässen (3) der im Membranblock (1) benachbarten Membrantrenneinheit(en) (2), verbinden, umfasst, und
die erste Feedgasleitung (7) sowie die zweite Feedgasleitung (8), getrennt voneinander und unabhängig voneinander, jeweils mit einem Gaseinlass (3) einer Membrantrenneinheit (2) oder mehreren Gaseinlässen (3) von Membrantrenneinheiten (2) und/oder mit einer Verbindungsleitung (18) oder mehreren Verbindungsleitungen (18) verbunden sind.

5. Anlage nach einem der Ansprüche 1 bis 4,
**dadurch gekennzeichnet, dass**
sie zusätzlich eine, zwei oder drei Feedgasleitung(en) drei (21), vier und fünf umfasst, welche geeignet ist/sind, einen, zwei oder drei zusätzliche, vom ersten und zweiten Feedgasstrom in ihrer Zusammensetzung unterschiedliche, Gasströme zu transportieren,
und
die zusätzliche(n) Feedgasleitung(en) drei (21), vier und fünf so mit der Gasverteilung verbunden ist/sind, dass Gasstrom drei (21) oder die Gasströme drei (21) und vier oder die Gasströme drei (21), vier und fünf mittels der Gasverteilung den Membrantrenneinheiten zugeführt werden können.

6. Anlage nach Anspruch 5,
**dadurch gekennzeichnet, dass**
die Feedgasleitung(en) drei (21) oder drei (21) und vier oder drei (21), vier und fünf unabhängig voneinander jeweils
• an eine oder mehrere Verteilleitung(en) (4), bevorzugt zwischen den Anschlüssen der ersten Feedgasleitung (7) und der zweiten Feedgasleitung (8), angeschlossen ist/sind
und/oder
• an eine oder mehrere Verbindungsleitung(en) (18), bevorzugt zwischen den Anschlüssen der ersten Feedgasleitung (7) und der zweiten Feedgasleitung (8), angeschlossen ist/sind
und/oder
• an einen Gaseinlass (3) oder mehrere Gaseinlässen (3) angeschlossen ist/sind, wobei sich der Gaseinlass (3) bzw. die diese Gaseinlässe (3) besonders bevorzugt von den Gaseinlässen (3) unterscheiden, an denen die erste Feedgasleitung (7) bzw. die zweite Feedgasleitung (8) angeschlossen sind,
und/oder
• an einen Gaseinlass (3) oder mehrere Gaseinlässe (3) und eine Verbindungsleitung (18) oder mehrere Verbindungsleitungen (18) angeschlossen ist/sind, wobei sich diese Gaseinlässe (3) bevorzugt von den Gaseinlässen (3) unterscheiden, an denen die erste Feedgasleitung (7) bzw. die zweite Feedgasleitung (8) angeschlossen ist.

7. Anlage nach Anspruch 5,
**dadurch gekennzeichnet,**
**dass** die Membrantrennstufe mehrere Membranblöcke (1) umfasst, die zu einer Ringschaltung kombiniert sind, wobei bevorzugt jeder Membranblock (1) mit zwei Feedgasleitungen verbunden ist.

8. Anlage nach einem der Ansprüche 1 bis 6,
**dadurch gekennzeichnet,**
**dass** die Membrantrennstufe mehrere Membranblöcke (1) umfasst, welche parallel verschaltet sind.

9. Anlage nach Anspruch 8,
**dadurch gekennzeichnet, dass**
die Gasverteilung pro Membranblock (1) eine Verteilleitung (4) mit mehreren Abzweigungen (5) und Zuführleitungen (6) umfasst, wobei jeweils eine Zuführleitung (6) eine Abzweigung (5) mit einem Gaseinlass (3) einer Membrantrenneinheit (2) verbindet, und
die Verteilleitungen (4) der jeweiligen Membranblöcke (1) der Membrantrennstufe mittels Rohrleitungen (19a, 19b) miteinander verbunden sind,
und
die erste Feedgasleitung (7) und zweite Feedgasleitung (8), unabhängig voneinander, an räumlich voneinander getrennten Stellen, an eine Verteilleitung (4) oder eine Abzweigung (5) oder an eine Rohrleitung (19a, 19b) angeschlossen sind, wobei die Anschlussstellen derart angeordnet sind, dass zwei oder mehr als zwei Abzweigungen (5) und/oder zwei oder mehr als zwei Gaseinlässe (3) zwischen den Anschlussstellen der ersten Feedgasleitung (7) und der zweiten Feedgasleitung (8) angeordnet sind.

10. Anlage nach Anspruch 8,
**dadurch gekennzeichnet, dass**
die Gasverteilung im jeweiligen Membranblock (1) Verbindungsleitungen (18) umfasst, welche jeweils den Gaseinlass (3) einer Membrantrenneinheit (2) mit dem Gaseinlass (3) oder den Gaseinlässen (3) der im Membranblock (1) benachbarten Membrantrenneinheit(en) (2), verbinden,
und
die Membranblöcke (1) der Membrantrennstufe mittels Rohrleitungen (20a, 20b) miteinander verbunden sind, wobei die Rohrleitungen (20a, 20b) im jeweiligen Membranblock (1) jeweils mit einer oder mehreren Verbindungsleitung(en) (18) und/oder einem oder mehreren Gaseinlass/-einlässen (3) verbunden sind, bevorzugt ist die Rohrleitung (20a) im jeweiligen Membranblock (1) mit einer Verbindungsleitung (18) oder einem Gaseinlass (3) und die Rohrleitung (20b) im jeweiligen Membranblock mit einer davon verschiedenen Verbindungsleitung (18) oder einem davon verschiedenen Gaseinlass (3) verbunden,
und
die erste Feedgasleitung (7) sowie die zweite Feedgasleitung (8), unabhängig voneinander, an räumlich voneinander getrennten Stellen, an eine oder mehrere Verbindungsleitung(en) (18) oder an eine oder mehrere Rohrleitung(en) (20a, 20b) oder an einen oder mehrere Gaseinlass/-einlässe (3) angeschlossen sind, wobei die Anschlussstellen derart angeordnet sind, dass zwei oder mehr als zwei Gaseinlässe (3) zwischen den Anschlussstellen der ersten Feedgasleitung (7) und der zweiten Feedgasleitung (8) angeordnet sind.

11. Anlage nach einem der Ansprüche 1 bis 10,
**dadurch gekennzeichnet, dass** in einer oder mehreren Verteilleitung(en) (4) und/oder einer oder mehreren Verbindungsleitung(en) (18) und/oder einer oder mehreren Rohrleitung(en) (19a, 19b, 20a, 20b), an potentiellen Kontaktstellen der in der Leitung aufeinandertreffenden Feedgasströme, konstruktive Maßnahmen zur Regelung und/oder weitgehenden Unterbindung der Durchmischung der Feedgasströme getroffen wird/werden, bevorzugt ausgewählt aus der Liste bestehend aus Reduzierung der Leitungsquerschnitte, Verlängerung der Leitungsabschnitte, Einbringen von statischen Mischern, Einsatz von Molchen in den Gasleitungen und Kombinationen davon.

12. Anlage nach einem der Ansprüche 1 bis 11,
**dadurch gekennzeichnet,**
**dass**
die Retentatgasleitungen (9), bevorzugt alle Retentatgasleitungen (9), der Membrantrenneinheiten (2) eines Membranblocks (1) der Membrantrennstufe einem Retentatgassammelrohr (11) zugeführt werden, wobei das Retentatgassammelrohr (11) mit mindestens einer ersten Retentatgasableitung (12), bevorzugt mindestens zwei Retentatgasableitungen (12) und (13), verbunden ist
und/oder
die Permeatgasleitungen (10), bevorzugt alle Permeatgasleitungen (10), der Membrantrenneinheiten (2) eines Membranblocks (1) der Membrantrennstufe einem Permeatgassammelrohr (14) zugeführt werden, wobei das Permeatgassammelrohr mit mindestens einer ersten Permeatgasableitung (15), bevorzugt mindestens zwei Permeatgasableitungen (15) und (16), verbunden ist.

13. Anlage nach einem der Ansprüche 1 bis 11,
**dadurch gekennzeichnet,**
**dass**
sie Retentatverbindungsleitungen (32) zwischen den Retentatgasauslässen (30) der Membrantrenneinheiten (2) eines Membranblocks (1) der Membrantrennstufe umfasst, wobei mindestens eine Retentatverbindungsleitung (32) oder mindestens ein Retentatgasaulass (30) zudem mit mindestens einer Retentatgasableitung (12) verbunden ist, bevorzugt sind in einem Membranblock (1) der Membrantrennstufe eine oder mehrere Retentatverbindungsleitung(en) (32) und/oder ein oder mehrere Retentatgasaulass/Retentatgasauslässe (30) unabhängig voneinander mit jeweils einer Retentatgasableitung (12) oder (13) verbunden,
und/oder
sie Permeatverbindungsleitungen (33) zwischen den Permeatgasauslässen (31) der Membrantrenneinheiten (2) eines Membranblocks (1) der Membrantrennstufe umfasst, wobei mindestens eine Permeatverbindungsleitung (33) oder mindestens ein Permeatgasaulass (31) zudem mit mindestens einer Permeatgasableitung (15) verbunden ist, bevorzugt sind in einem Membranblock (1) der Membrantrennstufe eine oder mehrere Permeatverbindungsleitung(en) (33) und/oder ein oder mehrere Permeatgasaulass/Permeatgasauslässe (31) unabhängig voneinander mit jeweils einer Retentatgasableitung (15) oder (16) verbunden.

14. Anlage nach einem der Ansprüche 1 bis 13,
**dadurch gekennzeichnet,**
**dass**
sie zwei Membrantrennstufen A und B gemäß Anspruch 1 umfasst, wobei eine
erste Feedgasleitung (7) und eine zweite Feedgasleitung (8) mit der Gasverteilung der ersten Membrantrennstufe A, wie in einem der Ansprüche 1 bis 10 beschrieben, verbunden sind, und
die erste Membrantrennstufe A derart ausgestaltet ist, dass zwei voneinander verschiedene Retentatströme in einer ersten Retentatgasableitung (12) und einer zweiten Retentatgasableitung (13) und /oder zwei voneinander verschiedene Permeatströme in einer ersten Permeatgasableitung (15) und einer zweiten Permeatgasableitung (16) erhalten werden, und
die erste Retentatgasableitung (12) und die zweite Retentatgasableitung (13) oder die ersten Permeatgasableitung (15) und die zweiten Permeatgasableitung (16) mit der Gasverteilung der zweiten Membrantrennstufe B, wie in einem der Ansprüche 1 bis 10 beschrieben, verbunden sind.

15. Anlage nach einem der Ansprüche 1 bis 13,
**dadurch gekennzeichnet,**
**dass**
sie drei Membrantrennstufen A, B und C gemäß Anspruch 1 umfasst, wobei eine
erste Feedgasleitung (7) und eine zweite Feedgasleitung (8) mit der Gasverteilung der ersten Membrantrennstufe A, wie in einem der Ansprüche 1 bis 10 beschrieben, verbunden sind, und
die erste Membrantrennstufe A derart ausgestaltet ist, dass zwei voneinander verschiedene Retentatströme in einer ersten Retentatgasableitung (12) und einer zweiten Retentatgasableitung (13) und zwei voneinander verschiedene Permeatströme in einer ersten Permeatgasableitung (15) und einer zweiten Permeatgasableitung (16) erhalten werden, und
die erste Retentatgasableitung (12) und die zweite Retentatgasableitung (13) mit der Gasverteilung der zweiten Membrantrennstufe B, wie in einem der Ansprüche 1 bis 10 beschrieben, verbunden sind, und
die ersten Permeatgasableitung (15) und die zweite Permeatgasableitung (16) mit der Gasverteilung der dritten Membrantrennstufe C, wie in einem der Ansprüche 1 bis 10 beschrieben, verbunden sind.

16. Verfahren zur simultanen Aufreinigung von zwei oder mehr Gasströmen, welche sich in ihrer Zusammensetzung jeweils unterscheiden, **dadurch gekennzeichnet, dass** die Auftrennung der Gase in einer Anlage gemäß einem der Ansprüche 1 bis 15 durchgeführt wird.

17. Verfahren nach Anspruch 16,
**dadurch gekennzeichnet,**
**dass** es die Schritte umfasst
i) Bereitstellung eines ersten Feedgasstroms,
ii) Bereitstellen eines zweiten Feedgasstroms, der sich in seiner Zusammensetzung vom ersten Feedgasstrom, unterscheidet,
iii) Zuführen des ersten und des zweiten Feedgasstroms zu einer Membrantrennstufe, wobei
• die Membrantrennstufe einen Membrantrennblock (1) oder mehrere Membranblöcke (1) aufweist, und der Membrantrennblock (1) bzw. die Membrantrennblöcke (1) jeweils mehrere parallel verschaltete Membrantrenneinheiten (2) umfasst/umfassen,
und wobei
• die Membrantrennstufe eine Gasverteilung aufweist, welche Verbindungsleitungen (18), die jeweils die Gaseinlässe (3) zweier benachbarter Membrantrenneinheiten (2) eines Membranblocks (1) miteinander verbinden, und/oder Verteilleitungen (4), die mehrere Abzweigungen (5) enthalten, die jeweils mittels separater Zuführleitungen (6) mit den Gaseinlässen (3) der einzelnen Membrantrenneinheiten (2) eines Membranblocks (1) verbunden sind, umfasst, wobei eine oder mehrere Abzweigung(en) (5) zusätzlich auch noch eine Anschlussmöglichkeit für eine Feedgasleitung aufweisen können, so dass mittels der Abzweigung(en) (5) gleichzeitig eine Feedgasleitung und eine Zuführleitung (6) an die Verteilleitung (4) angeschlossen sein können, und wobei
• die Membrantrennstufe sofern sie mehrere Membranblöcke (1) umfasst, Rohrleitungen, bevorzugt Rohrleitungen (19a, 19b, 20a, 20b), umfasst, die die Membranblöcke (1) der Membrantrennstufe miteinander verbinden,
und
wobei der erste und der zweite Feedgasstrom, unabhängig voneinander, an räumlich voneinander getrennten Stellen, jeweils einer Verteilleitung (4) oder einer Verbindungsleitung (18) oder einer Abzweigung (5) oder, sofern vorhanden, einer Rohrleitung die die Membranblöcke (1) der Membrantrennstufe miteinander verbindet, bevorzugt einer Rohrleitung (19a, 19b, 20a, 20b), oder einem Gaseinlass (3) zugeführt werden, wobei die Anschlussstellen des ersten und zweiten Feedgasstroms derart angeordnet sind, dass zwei oder mehr als zwei Abzweigungen (5) und/oder zwei oder mehr als zwei Gaseinlässe (3) zwischen den Anschlussstellen angeordnet sind,
iv) Zuführen des ersten und des zweiten Feedgasstroms mittels der Gasverteilung zu den Gaseinlässen (3) der Membrantrenneinheiten (2) der Membrantrennstufe,
v) Auftrennen der durch die Gaseinlässe (3) den Membrantrenneinheiten (2) zugeführten Gasgemische in den Membrantrenneinheiten (2) mittels Gasseparationsmembranen in jeweils einen Retentatgasstrom und einen Permeatgasstrom.

18. Verfahren nach Anspruch 17,
**dadurch gekennzeichnet,**
**dass** der erste und der zweite Feedgasstrom mittels einer Gasverteilung den Gaseinlässen (3) der Membrantrenneinheiten (2) der ersten Membrantrennstufe derart zugeführt werden,
**dass** der erste Feedgasstrom und der zweite Feedgasstrom innerhalb eines Membranblocks (1) oder mehrerer Membranblöcke (1) der Membrantrennstufe, bevorzugt in einer oder mehreren Verteilleitung(en) (4) und/oder einer oder mehreren Verbindungsleitung(en) (18) und/oder innerhalb der Rohrleitung bzw. den Rohrleitungen die die Membranblöcke (1) der Membrantrennstufe miteinander verbindet/verbinden, bevorzugt der Rohrleitung bzw. den Rohrleitungen (19a, 19b, 20a, 20b), aufeinander zufließen, und/oder
**dass** in einem Membranblock (1), bevorzugt in mehreren Membranblöcken (1), besonders bevorzugt in allen Membranblöcken (1), der Membrantrennstufe jeweils mindestens zwei verschiedenen Membrantrenneinheiten (2) Gasströme zugeführt werden, die sich in ihrer Zusammensetzung unterscheiden,

19. Verfahren nach Anspruch 17 oder 18,
**dadurch gekennzeichnet, dass**
die Membrantrennstufe einen Membranblock (1) oder mehrere Membranblöcke (1) enthält, der bzw. die jeweils eine Verteilleitung (4) mit mehreren Abzweigungen (5) und Zuführleitungen (6) umfasst, wobei eine Zuführleitung (6) jeweils eine Abzweigung (5) mit einem Gaseinlass (3) einer Membrantrenneinheit (2) verbindet,
und
der erste Feedgasstrom und der zweite Feedgasstrom, getrennt und unabhängig voneinander, der/den Verteilleitung(en) (4), besonders bevorzugt den jeweils gegenüberliegenden Enden der Verteilleitung(en) (4), zugeführt werden.

20. Verfahren nach einem der Ansprüche 17 oder 18,
**dadurch gekennzeichnet, dass**
die Membrantrennstufe einen Membranblock (1) oder mehrere Membranblöcke (1) enthält, der bzw. die jeweils mehrere Verbindungsleitungen (18), welche jeweils den Gaseinlass (3) einer Membrantrenneinheit (2) mit dem/den Gaseinlass/-einlässen (3) der im Membranblock (1) benachbarten Membrantrenneinheit(en) (2) verbinden, umfasst, und
der erste Feedgasstrom und der zweite Feedgasstrom, getrennt voneinander und unabhängig voneinander, jeweils einem Gaseinlass einer Membrantrenneinheit (2) oder mehreren Gaseinlässen (3) von Membrantrenneinheiten (2) und/oder einer Verbindungsleitung (18) oder mehreren Verbindungsleitungen (18) zugeführt werden.

21. Verfahren nach einem der Ansprüche 17 bis 20,
**dadurch gekennzeichnet, dass**
ein, zwei oder drei zusätzliche, vom ersten und zweiten Feedgasstrom in ihrer Zusammensetzung unterschiedliche(r), Gasstrom/Gasströme der Gasverteilung mittels der Feedgasleitung(en) drei (21), drei (21) und vier oder drei (21), vier und fünf zugeführt wird/werden.

22. Verfahren nach Anspruch 21,
**dadurch gekennzeichnet, dass**
Feedgasstrom drei (21) oder Feedgasströme drei (21) und vier oder Feedgasströme drei (21), vier und fünf jeweils
• einer oder mehreren Verteilleitung(en) (4), bevorzugt zwischen den Anschlüssen der ersten Feedgasleitung (7) und der zweiten Feedgasleitung (8), zugeführt wird/werden,
und/oder
• einer oder mehreren Verbindungsleitung(en) (18), bevorzugt zwischen den Anschlüssen der ersten Feedgasleitung (7) und der zweiten Feedgasleitung (8), zugeführt wird/werden,
und/oder
• einem Gaseinlass (3) oder mehreren Gaseinlässen (3) zugeführt wird/werden, bevorzugt in einem Membranblock (1) umfassend Verbindungsleitungen (18), wobei sich diese Gaseinlässe (3) besonders bevorzugt von den Gaseinlässen (3) unterscheiden, denen der erste Feedgasstrom bzw. der zweite Feedgasstrom zugeführt werden,
und/oder
• eine Gaseinlass (3) oder mehrere Gaseinlässen (3) und einer oder mehreren Verbindungsleitung(en) (18) zugeführt werden, wobei sich diese Gaseinlässe (3) und bevorzugt von den Gaseinlässen (3) und Verbindungsleitung(en) (18) unterscheiden, denen der erste Feedgasstrom bzw. der zweite Feedgasstrom zugeführt werden.

23. Verfahren nach Anspruch 22,
**dadurch gekennzeichnet,**
**dass** mehrere Membranblöcke (1) der Membrantrennstufe zu einer Ringschaltung kombiniert werden, wobei bevorzugt jedem Membranblock (1) zwei Feedgasströme zugeführt werden.

24. Verfahren nach einem der Ansprüche 17 bis 22,
**dadurch gekennzeichnet, dass**
mehrere Membranblöcke (1) der Membrantrennstufe parallel verschaltet werden.

25. Verfahren nach Anspruch 24,
**dadurch gekennzeichnet, dass**
die Gasverteilung pro Membranblock (1) eine Verteilleitung (4) mit mehreren Abzweigungen (5) und Zuführleitungen (6) umfasst, wobei eine Zuführleitung (6) jeweils eine Abzweigung (5) mit einem Gaseinlass (3) einer Membrantrenneinheit (2) verbindet, und
die Verteilleitungen (4) der jeweiligen Membranblöcke (1) der Membrantrennstufe mittels Rohrleitungen (19a, 19b) miteinander verbunden sind,
und
der erste Feedgasstrom und der zweite Feedgasstrom, getrennt voneinander und unabhängig voneinander, einer oder mehreren Verteilleitung(en) (4) und/oder Rohrleitung(en) (19a, 19b) zugeführt werden.

26. Verfahren nach Anspruch 24,
**dadurch gekennzeichnet, dass**
die Gasverteilung im jeweiligen Membranblock (1) Verbindungsleitungen (18) umfasst, welche jeweils den Gaseinlass (3) einer Membrantrenneinheit (2) mit dem/den Gaseinlass/-einlässen (3) der im Membranblock (1) benachbarten Membrantrenneinheit(en) (2), verbinden, und
die Membranblöcke (1) der Membrantrennstufe mittels Rohrleitungen (20a, 20b) miteinander verbunden sind, wobei die Rohrleitungen (20a, 20b) im jeweiligen Membranblock mit einer oder mehreren Verbindungsleitung(en) (18) oder Gaseinlass/- einlässen (3) verbunden sind, bevorzugt ist die Rohrleitung (20a) im jeweiligen Membranblock mit einer Verbindungsleitungen (18) oder einem Gaseinlass (3) und die Rohrleitung (20b) im jeweiligen Membranblock mit einer davon verschiedenen Verbindungsleitung (18) oder einem davon verschiedenen Gaseinlass (3) verbunden, und
der erste Feedgasstrom sowie der zweite Feedgasstrom, getrennt voneinander und unabhängig voneinander, einem Gaseinlass (3) oder mehreren Gaseinlässen (3) von Membrantrenneinheiten (2) und/oder einer oder mehreren Verbindungsleitung(en) (18) der jeweiligen Membranblöcke (1) der Membrantrennstufe und/oder Rohrleitung(en) (20a, 20b) zugeführt werden, mit der Vorgabe, dass der erste Feedgasstrom und der zweite Feedgasstrom nicht gleichzeitig den gleichen Gaseinlässen (3) bzw. Verbindungsleitungen (18) zugeführt werden oder gleichzeitig an einen oder mehrere gleiche(n) und gleichzeitig mehren nicht gleiche Gaseinlässe (3) oder Verbindungsleitungen (18) zugeführt werden.

27. Verfahren nach einem der Ansprüche 17 bis 26, **dadurch gekennzeichnet, dass** in einer oder mehreren Verteilleitung(en) (4) und/oder einer oder mehreren Verbindungsleitung(en) (18) und/oder einer oder mehreren Rohrleitung(en) (19a, 19b, 20a, 20b), an potentiellen Kontaktstellen der in der Leitung aufeinandertreffenden Feedgasströme, konstruktive Maßnahmen zur Regelung und/oder weitgehenden Unterbindung der Durchmischung der Feedgasströme getroffen werden, bevorzugt ausgewählt aus der Liste bestehend aus Reduzierung der Leitungsquerschnitte, Verlängerung der Leitungsabschnitte, Einbringen von statischen Mischern, Einsatz von Molchen in den Gasleitungen und Kombinationen davon.

28. Verfahren nach einem der Ansprüche 17 bis 27,
**dadurch gekennzeichnet,**
**dass** es zusätzlich die Schritte umfasst
vi) Zusammenführen von Retentatgasströmen der Membrantrenneinheiten (2) eines Membranblocks (1) zu einem oder mehreren Retentatgasstrom bzw. -strömen, und/oder
vii) Zusammenführen von Permeatströme der Membrantrenneinheiten (2) eines Membranblocks (1) zu einem oder mehreren Permeatgasstrom bzw. -strömen.

29. Verfahren nach Anspruch 28,
**dadurch gekennzeichnet,**
**dass**
die Retentatströme, der Membrantrenneinheiten (2) eines Membranblocks (1) der Membrantrennstufe einem Retentatgassammelrohr (11) zugeführt werden und dort entweder zu einem Retentatgasstrom gebündelt und einer Retentatgasableitung (12) zugeführt werden oder dort in mindestens zwei Retentatgasströme 1 und 2 aufgeteilt und mindestens zwei Retentatgasableitungen (12) und (13) zugeführt werden, und/oder
die Permeatströme, der Membrantrenneinheiten (2) eines Membranblocks (1) der Membrantrennstufe einem Permeatgassammelrohr (14) zugeführt werden und dort entweder zu einem Permeatgasstrom gebündelt und einer Permeatgasableitung (15) zugeführt werden oder dort in mindestens zwei Permeatgasströme 1 und 2 aufgeteilt und mindestens zwei Permeatgasableitungen (15) und (16) zugeführt werden.

30. Verfahren nach Anspruch 28,
**dadurch gekennzeichnet,**
**dass**
die Retentatgasströme der Membrantrenneinheiten (2) eines Membranblocks (1) der Membrantrennstufe mittels Retentatverbindungsleitungen (32) zwischen den Retentatgasauslässen (30) der Membrantrenneinheiten (2) eines Membranblocks (1) der Membrantrennstufe zu einem Retentatgasstrom gebündelt und einer Retentatgasableitung (12) zugeführt werden oder in mindestens zwei Retentatgasströme 1 und 2 aufgeteilt und mindestens zwei Retentatgasableitungen (12) und (13) zugeführt werden und/oder
die Permeatgasströme der Membrantrenneinheiten (2) eines Membranblocks (1) der Membrantrennstufe mittels Permeatverbindungsleitungen (33) zwischen den Permeatgasauslässen (31) der Membrantrenneinheiten (2) eines Membranblocks (1) der Membrantrennstufe zu einem Permeatgasstrom gebündelt und einer Permeatgasableitung (15) zugeführt werden oder in mindestens zwei Permeatgasströme 1 und 2 aufgeteilt und mindestens zwei Permeatgasableitungen (15) und (16) zugeführt werden.

31. Verfahren nach einem der Ansprüche 17 bis 30,
**dadurch gekennzeichnet, dass**
es in einer Anlage ausgeführt wird, die zwei Membrantrennstufen A und B gemäß Anspruch 14 umfasst, wobei
der erste Feedgasstrom und der zweite Feedgasstrom, die sich in ihrer Zusammensetzung unterscheiden, der Membrantrennstufe A wie in einem der Ansprüche 17 bis 27 beschrieben zugeführt werden,
die erste Membrantrennstufe A den ersten Feedgasstrom und den zweiten Feedgasstrom in einen ersten Retentatgasstrom und einen zweiten Retentatgasstrom, die sich in ihrer Zusammensetzung unterscheiden, und /oder einen ersten Permeatgasstrom und einen zweiten Permeatgasstrom, die sich in ihrer Zusammensetzung unterscheiden, auftrennt,
die beiden Retentatströme oder die beiden Permeatströme der ersten Membrantrennstufe A der zweiten Membrantrennstufe B als zwei Feedströme, die sich in ihrer Zusammensetzung unterscheiden, zugeführt werden und
die zweite Membrantrennstufe B die beiden Retentat- oder Permeatströme der Membrantrennstufe A in einen dritten Retentatgasstrom und einen vierten Retentatgasstrom, die sich in ihrer Zusammensetzung unterscheiden, und /oder in einen dritten Permeatgasstrom und einen vierten Permeatgasstrom, die sich in ihrer Zusammensetzung unterscheiden, auftrennt.

32. Verfahren nach einem der Ansprüche 17 bis 30,
**dadurch gekennzeichnet, dass**
es in einer Anlage ausgeführt wird, die drei Membrantrennstufen A, B und C gemäß Anspruch 15 umfasst, wobei
der erste Feedgasstrom und der zweite Feedgasstrom, die sich in ihrer Zusammensetzung unterscheiden, der Membrantrennstufe A wie in einem der Ansprüche 17 bis 27 beschrieben zugeführt werden,
die erste Membrantrennstufe A den ersten Feedgasstrom und den zweiten Feedgasstrom in einen ersten Retentatgasstrom und einen zweiten Retentatgasstrom, die sich in ihrer Zusammensetzung unterscheiden, und in einen ersten Permeatgasstrom und einen zweiten Permeatgasstrom, die sich in ihrer Zusammensetzung unterscheiden, auftrennt,
die beiden Retentatströme der ersten Membrantrennstufe A der zweiten Membrantrennstufe B als zwei Feedströme, die sich in ihrer Zusammensetzung unterscheiden, zugeführt werden,
die zweite Membrantrennstufe B die beiden Retentatgasströme der Membrantrennstufe A in einen dritten Retentatgasstrom und einen vierten Retentatgasstrom, die sich in ihrer Zusammensetzung unterscheiden, auftrennt,
die beiden Permeatgasströme der ersten Membrantrennstufe A der dritten Membrantrennstufe C als zwei Feedströme, die sich in ihrer Zusammensetzung unterscheiden, zugeführt werden,
die dritte Membrantrennstufe C die beiden Permeatgasströme der Membrantrennstufe A in einen fünften Permeatgasstrom und einen sechsten Permeatgasstrom, die sich in ihrer Zusammensetzung unterscheiden, auftrennt.

## Claims

1. Plant for separation of gas mixtures, comprising
a. a first feed gas conduit (7) suitable or configured for transportation of a first feed gas stream, and a second feed gas conduit (8) suitable or configured for transportation of a second feed gas stream of different composition from the first feed gas stream,
b. a membrane separation stage, comprising one membrane block (1) or multiple membrane blocks (1), where the membrane block(s) (1) each comprise(s) multiple membrane separation units (2) connected in parallel, and where
∘ each membrane separation unit (2) has a gas inlet (3) and gas separation membranes, and the gas mixture supplied via the gas inlet (3) is separated by means of the gas separation membranes into a retentate gas stream and a permeate gas stream, and
∘ each membrane separation unit (2) has a retentate gas outlet (30) for the retentate gas stream which is preferably attached to a retentate gas conduit (9) or connected by means of one or more retentate connection conduit(s) (32) to one or two retentate gas outlet(s) (30) of the adjacent membrane separation unit(s) (2) of the same membrane block (1), and a permeate gas outlet (31) for the permeate gas stream which is preferably attached to a permeate gas conduit (10) or connected by means of one or more permeate connection conduit(s) (33) to one or two permeate gas outlet(s) (31) of the adjacent membrane separation unit(s) (2) of the same membrane block (1),
and
c. a gas distributor configured such that
• it comprises connection conduits (18) that each connect the gas inlets (3) of two adjacent membrane separation units (2) of a membrane block (1) to one another and/or comprises one or more distributor conduit(s) (4) each containing multiple branches (5) that are each connected by means of supply conduits (6) to the gas inlets (3) of the individual membrane separation units (2) of a membrane block (1), where one or more branch(es) (5) may additionally also have an attachment means for a feed gas conduit, such that, by means of the branch(es) (5), a feed gas conduit and a supply conduit (6) may each be attached simultaneously to the respective distributor conduit (4),
• if the membrane separation stage comprises multiple membrane blocks (1), it comprises pipe conduits, preferably pipe conduits (19a, 19b, 20a, 20b), that connect the membrane blocks (1) of the membrane separation stage to one another,
• the first feed gas conduit (7) and the second feed gas conduit (8) are each independently attached at spatially separate sites to a distributor conduit (4) or a connection conduit (18) or a branch (5) or, if present, to a pipe conduit that connects the membrane blocks (1) of the membrane separation stage to one another, preferably a pipe conduit (19a, 19b, 20a or 20b), or to a gas inlet (3), where the attachment sites are arranged such that two or more than two branches (5) and/or two or more than two gas inlets (3) are arranged between the attachment sites of the first feed gas conduit (7) and of the second feed gas conduit (8).

2. Plant according to Claim 1,
**characterized in that**
the attachment sites of the first feed gas conduit (7) and the second feed gas conduit (8) are arranged such that
the first feed gas stream and the second feed gas stream flow towards each other within one membrane block (1) or multiple membrane blocks (1) of the membrane separation stage, preferably in one or more distributor conduit(s) (4) and/or in one or more connection conduit(s) (18) or within the pipe conduit(s) that connect(s) the membrane blocks (1) of the membrane separation stage to one another, preferably the pipe conduit(s) (19a, 19b, 20a, 20b) .

3. Plant according to Claim 1 or 2,
**characterized in that**
the membrane separation stage contains one membrane block (1) or multiple membrane blocks (1) each comprising a distributor conduit (4) with multiple branches (5) and supply conduits (6), where one supply conduit (6) in each case connects a branch (5) to a gas inlet (3) of a membrane separation unit (2),
and
the first feed gas conduit (7) and the second feed gas conduit (8) are connected separately and independently to the distributor conduit(s) (4) and/or branches (5), more preferably to the respective opposite ends of the distributor conduit(s) (4).

4. Plant according to Claim 1 or 2,
**characterized in that**
the membrane separation stage contains one membrane block (1) or multiple membrane blocks (1) each comprising multiple connection conduits (18) that each connect a gas inlet (3) of a membrane separation unit (2) to the gas inlet(s) (3) of the adjacent membrane separation unit(s) (2) in the membrane block (1),
and
the first feed gas conduit (7) and the second feed gas conduit (8) are each separately and independently connected to one gas inlet (3) of a membrane separation unit (2) or multiple gas inlets (3) of membrane separation units (2) and/or to one connection conduit (18) or multiple connection conduits (18).

5. Plant according to any of Claims 1 to 4,
**characterized in that**
it additionally comprises one, two or three feed gas conduit(s) three (21), four and five, which is/are suitable for transportation of one, two or three additional gas streams of different composition from the first and second feed gas streams,
and
the additional feed gas conduit(s) three (21), four and five is/are connected to the gas distributor such that gas stream three (21) or gas streams three (21) and four or gas streams three (21), four and five can be supplied to the membrane separation units by means of the gas distributor.

6. Plant according to Claim 5,
**characterized in that**
the feed gas conduit(s) three (21) or three (21) and four or three (21), four and five is/are each independently
• attached to one or more distributor conduit(s) (4), preferably between the attachments of the first feed gas conduit (7) and the second feed gas conduit (8),
and/or
• attached to one or more connection conduit(s) (18), preferably between the attachments of the first feed gas conduit (7) and the second feed gas conduit (8),
and/or
• attached to one gas inlet (3) or multiple gas inlets (3), where the gas inlet (3) or these gas inlets (3) are more preferably different from the gas inlets (3) to which the first feed gas conduit (7) or the second feed gas conduit (8) are attached,
and/or
• attached to one gas inlet (3) or multiple gas inlets (3) and one connection conduit (18) or multiple connection conduits (18), where these gas inlets (3) are preferably different from the gas inlets (3) to which the first feed gas conduit (7) or the second feed gas conduit (8) is attached.

7. Plant according to Claim 5,
**characterized in that**
the membrane separation stage comprises multiple membrane blocks (1) that are combined to form a ring circuit, where each membrane block (1) is preferably connected to two feed gas conduits.

8. Plant according to any of Claims 1 to 6,
**characterized**
**in that** the membrane separation stage comprises multiple membrane blocks (1) connected in parallel.

9. Plant according to Claim 8,
**characterized in that**
the gas distributor comprises one distributor conduit (4) with multiple branches (5) and supply conduits (6) per membrane block (1), where one supply conduit (6) in each case connects a branch (5) to a gas inlet (3) of a membrane separation unit (2),
and
the distributor conduits (4) of the respective membrane blocks (1) of the membrane separation stage are connected to one another by means of pipe conduits (19a, 19b),
and
the first feed gas conduit (7) and the second feed gas conduit (8) are independently attached at spatially separate sites to a distributor conduit (4) or a branch (5), or to a pipe conduit (19a, 19b), where the attachment sites are arranged such that two or more than two branches (5) and/or two or more than two gas inlets (3) are disposed between the attachment sites of the first feed gas conduit (7) and of the second feed gas conduit (8).

10. Plant according to Claim 8,
**characterized in that**
the gas distributor in the respective membrane block (1) comprises connection conduits (18) that each connect the gas inlet (3) of a membrane separation unit (2) to the gas inlet (s) (3) of the adjacent membrane separation unit(s) (2) in the membrane block (1),
and
the membrane blocks (1) of the membrane separation stage are connected to one another by means of pipe conduits (20a, 20b), where the pipe conduits (20a, 20b) in the respective membrane block (1) are each connected to one or more connection conduit(s) (18) and/or one or more gas inlet(s) (3), preferably where the pipe conduit (20a) in the respective membrane block (1) is connected to a connection conduit (18) or a gas inlet (3) and the pipe conduit (20b) in the respective membrane block is connected to a different connection conduit (18) or a different gas inlet (3),
and
the first feed gas conduit (7) and the second feed gas conduit (8) are independently attached at spatially separate sites to one or more connection conduit(s) (18), or to one or more pipe conduit(s) (20a, 20b), or to one or more gas inlet(s) (3), where the attachment sites are arranged such that two or more than two gas inlets (3) are arranged between the attachment sites of the first feed gas conduit (7) and the second feed gas conduit (8).

11. Plant according to any of Claims 1 to 10,
**characterized in that**, in one or more distributor conduit(s) (4) and/or one or more connection conduit(s) (18) and/or one or more pipe conduit(s) (19a, 19b, 20a, 20b), at potential contact sites of the feed gas streams that meet in the conduit, construction measures is/are taken for control and/or substantial prevention of full mixing of the feed gas streams, preferably selected from the list consisting of reduction of the conduit cross sections, extension of the conduit sections, introduction of static mixers, insertion of pigs in the gas conduits, and combinations thereof.

12. Plant according to any of Claims 1 to 11,
**characterized**
**in that**
the retentate gas conduits (9), preferably all retentate gas conduits (9), of the membrane separation units (2) of a membrane block (1) of the membrane separation stage are supplied to a retentate gas collection pipe (11), where the retentate gas collection pipe (11) is connected to at least one first retentate gas vent (12), preferably at least two retentate gas vents (12) and (13),
and/or
the permeate gas conduits (10), preferably all permeate gas conduits (10), of the membrane separation units (2) of a membrane block (1) of the membrane separation stage are supplied to a permeate gas collection pipe (14), where the permeate gas collection pipe is connected to at least one first permeate gas outlet (15), preferably at least two permeate gas outlets (15) and (16).

13. Plant according to any of Claims 1 to 11,
**characterized**
**in that**
it comprises retentate connection conduits (32) between the retentate gas outlets (30) of the membrane separation units (2) of a membrane block (1) of the membrane separation stage, where at least one retentate connection conduit (32) or at least one retentate gas outlet (30) is additionally connected to at least one retentate gas vent (12), preferably where one or more retentate connection conduit(s) (32) and/or one or more retentate gas outlet(s) (30) in one membrane block (1) of the membrane separation stage are each independently connected to one retentate gas vent (12) or (13),
and/or
it comprises permeate connection conduits (33) between the permeate gas outlets (31) of the membrane separation units (2) of a membrane block (1) of the membrane separation stage, where at least one permeate connection conduit (33) or at least one permeate gas outlet (31) is additionally connected to at least one permeate gas vent (15), preferably where one or more permeate connection conduit(s) (33) and/or one or more permeate gas outlet(s) (31) in one membrane block (1) of the membrane separation stage are each independently connected to one retentate gas vent (15) or (16).

14. Plant according to any of Claims 1 to 13,
**characterized**
**in that**
it comprises two membrane separation stages A and B according to Claim 1, where a first feed gas conduit (7) and a second feed gas conduit (8) are connected to the gas distributor of the first membrane separation stage A as described in any of Claims 1 to 10, and
the first membrane separation stage A is configured such that two different retentate streams are obtained in a first retentate gas vent (12) and a second retentate gas vent (13) and/or two different permeate streams are obtained in a first permeate gas vent (15) and a second permeate gas vent (16), and
the first retentate gas vent (12) and the second retentate gas vent (13) or the first permeate gas vent (15) and the second permeate gas vent (16) are connected to the gas distributor of the second membrane separation stage B as described in any of Claims 1 to 10.

15. Plant according to any of Claims 1 to 13,
**characterized**
**in that**
it comprises three membrane separation stages A, B and C according to Claim 1, where a first feed gas conduit (7) and a second feed gas conduit (8) are connected to the gas distributor of the first membrane separation stage A as described in any of Claims 1 to 10, and
the first membrane separation stage A is configured such that two different retentate streams are obtained in a first retentate gas vent (12) and a second retentate gas vent (13) and two different permeate streams are obtained in a first permeate gas vent (15) and a second permeate gas vent (16), and
the first retentate gas vent (12) and the second retentate gas vent (13) are connected to the gas distributor of the second membrane separation stage B as described in any of Claims 1 to 10, and
the first permeate gas vent (15) and the second permeate gas vent (16) are connected to the gas distributor of the third membrane separation stage C as described in any of Claims 1 to 10.

16. Process for simultaneously purifying two or more gas streams of respectively different composition, **characterized in that** the separation of the gases is conducted in a plant according to any of Claims 1 to 15.

17. Process according to Claim 16,
**characterized**
**in that** it comprises the steps of
i) providing a first feed gas stream,
ii) providing a second feed gas stream of different composition from the first feed gas stream,
iii) feeding the first and second feed gas streams to a membrane separation stage, where
• the membrane separation stage has one membrane separation block (1) or multiple membrane blocks (1), and the membrane separation block(s) (1) each comprise(s) multiple membrane separation units (2) connected in parallel,
and where
• the membrane separation stage has a gas distributor comprising connection conduits (18) that each connect the gas inlets (3) of two adjacent membrane separation units (2) of a membrane block (1) to one another and/or distributor conduits (4) containing multiple branches (5) that are each connected by means of separate supply conduits (6) to the gas inlets (3) of the individual membrane separation units (2) of a membrane block (1), where one or more branch(es) (5) may additionally also have an attachment means for a feed gas conduit, such that, by means of the branch(es) (5), a feed gas conduit and a supply conduit (6) may be attached simultaneously to the distributor conduit (4),
and where
• the membrane separation stage, if it comprises multiple membrane blocks (1), comprises pipe conduits, preferably pipe conduits (19a, 19b, 20a, 20b), that connect the membrane blocks (1) of the membrane separation stage to one another,
and
where the first and second feed gas streams are each independently supplied at spatially separate sites to a distributor conduit (4) or a connection conduit (18) or a branch (5) or, if present, to a pipe conduit that connects the membrane blocks (1) of the membrane separation stage to one another, preferably a pipe conduit (19a, 19b, 20a, 20b), or to a gas inlet (3), where the attachment sites of the first and second feed gas streams are arranged such that two or more than two branches (5) and/or two or more than two gas inlets (3) are arranged between the attachment sites,
iv) supplying the first and second feed gas streams by means of the gas distributor to the gas inlets (3) of the membrane separation units (2) of the membrane separation stage,
v) separating the gas mixtures supplied via the gas inlets (3) to the membrane separation units (2) by means of gas separation membranes in the membrane separation units (2), in each case into a retentate gas stream and a permeate gas stream.

18. Process according to Claim 17,
**characterized**
**in that** the first and second feed gas streams are supplied by means of a gas distributor to the gas inlets (3) of the membrane separation units (2) of the first membrane separation stage such that
the first feed gas stream and the second feed gas stream flow towards each other within one membrane block (1) or multiple membrane blocks (1) of the membrane separation stage, preferably in one or more distributor conduit(s) (4) and/or one or more connection conduit(s) (18) and/or within the pipe conduit(s) that connect(s) the membrane blocks (1) of the membrane separation stage to one another, preferably the pipe conduit(s) (19a, 19b, 20a, 20b),
and/or
at least two different membrane separation units (2) in one membrane block (1), preferably in multiple membrane blocks (1), more preferably in all membrane blocks (1), of the membrane separation stage are each supplied with gas streams of different composition.

19. Process according to Claim 17 or 18,
**characterized in that**
the membrane separation stage contains one membrane block (1) or multiple membrane blocks (1) each comprising a distributor conduit (4) with multiple branches (5) and supply conduits (6), where each supply conduit (6) connects a branch (5) to a gas inlet (3) of a membrane separation unit (2),
and
the first feed gas stream and the second feed gas stream are supplied separately and independently to the distributor conduit(s) (4), more preferably to the respective opposite ends of the distributor conduit(s) (4).

20. Process according to either of Claims 17 and 18,
**characterized in that**
the membrane separation stage contains one membrane block (1) or multiple membrane blocks (1) each comprising multiple connection conduits (18) that each connect the gas inlet (3) of a membrane separation unit (2) to the gas inlet (s) (3) of the adjacent membrane separation unit(s) (2) in the membrane block (1),
and
the first feed gas stream and the second feed gas stream are each separately and independently supplied to one gas inlet of a membrane separation unit (2) or multiple gas inlets (3) of membrane separation units (2) and/or to one connection conduit (18) or multiple connection conduits (18).

21. Process according to any of Claims 17 to 20,
**characterized in that**
one, two or three additional gas stream(s) of different composition from the first and second feed gas streams is/are supplied to the gas distributor by means of the feed gas conduit(s) three (21), three (21) and four, or three (21), four and five.

22. Process according to Claim 21,
**characterized in that**
feed gas stream three (21) or feed gas streams three (21) and four or feed gas streams three (21), four and five is/are each
• supplied to one or more distributor conduit(s) (4), preferably between the attachments of the first feed gas conduit (7) and the second feed gas conduit (8),
and/or
• supplied to one or more connection conduit(s) (18), preferably between the attachments of the first feed gas conduit (7) and the second feed gas conduit (8),
and/or
• supplied to one gas inlet (3) or multiple gas inlets (3), preferably in a membrane block (1) comprising connection conduits (18), where these gas inlets (3) are more preferably different from the gas inlets (3) to which the first feed gas stream or the second feed gas stream are supplied,
and/or
• supplied to one gas inlet (3) or multiple gas inlets (3) and to one or more connection conduit(s) (18), where these gas inlets (3) are preferably different from the gas inlets (3) and connection conduit(s) (18) to which the first feed gas stream or the second feed gas stream are supplied.

23. Process according to Claim 22,
**characterized**
**in that** multiple membrane blocks (1) of the membrane separation stage are combined to form a ring circuit, where each membrane block (1) is preferably supplied with two feed gas streams.

24. Process according to any of Claims 17 to 22,
**characterized in that**
multiple membrane blocks (1) of the membrane separation stage are connected in parallel.

25. Process according to Claim 24,
**characterized in that**
the gas distributor comprises one distributor conduit (4) with multiple branches (5) and supply conduits (6) per membrane block (1), where one supply conduit (6) in each case connects a branch (5) to a gas inlet (3) of a membrane separation unit (2),
and
the distributor conduits (4) of the respective membrane blocks (1) of the membrane separation stage are connected to one another by means of pipe conduits (19a, 19b),
and
the first feed gas stream and the second feed gas stream are supplied separately and independently to one or more distributor conduit(s) (4) and/or pipe conduit(s) (19a, 19b).

26. Process according to Claim 24,
**characterized in that**
the gas distributor in the respective membrane block (1) comprises connection conduits (18) that each connect the gas inlet (3) of a membrane separation unit (2) to the gas inlet (s) (3) of the adjacent membrane separation unit(s) (2) in the membrane block (1), and
the membrane blocks (1) of the membrane separation stage are connected to one another by means of pipe conduits (20a, 20b), where the pipe conduits (20a, 20b) in the respective membrane block are each connected to one or more connection conduit(s) (18) or gas inlet(s) (3), preferably where the pipe conduit (20a) in the respective membrane block is connected to a connection conduit (18) or a gas inlet (3) and the pipe conduit (20b) in the respective membrane block is connected to a different connection conduit (18) or a different gas inlet (3), and the first feed gas stream and the second feed gas stream are supplied separately and independently to one gas inlet (3) or multiple gas inlets (3) of membrane separation units (2) and/or to one or more connection conduit(s) (18) of the respective membrane blocks (1) of the membrane separation stage and/or pipe conduit(s) (20a, 20b), with the proviso that the first feed gas stream and the second feed gas stream are not supplied simultaneously to the same gas inlets (3) or connection conduits (18) or supplied simultaneously to one or more identical and simultaneously to multiple nonidentical gas inlets (3) or connection conduits (18).

27. Process according to any of Claims 17 to 26,
**characterized in that**, in one or more distributor conduit(s) (4) and/or one or more connection conduit(s) (18) and/or one or more pipe conduit(s) (19a, 19b, 20a, 20b), at potential contact sites of the feed gas streams that meet in the conduit, construction measures are taken for control and/or substantial prevention of full mixing of the feed gas streams, preferably selected from the list consisting of reduction of the conduit cross sections, extension of the conduit sections, introduction of static mixers, insertion of pigs in the gas conduits, and combinations thereof.

28. Process according to any of Claims 17 to 27,
**characterized**
**in that** it additionally comprises the steps of
vi) combining retentate gas streams from the membrane separation units (2) of a membrane block (1) to give one or more retentate gas stream(s),
and/or
vii) combining permeate streams from the membrane separation units (2) of a membrane block (1) to give one or more permeate gas stream(s).

29. Process according to Claim 28,
**characterized in that**
the retentate streams from the membrane separation units (2) of a membrane block (1) of the membrane separation stage are supplied to a retentate gas collection pipe (11), where they are either combined to form one retentate gas stream and supplied to a retentate gas vent (12), or where they are divided into at least two retentate gas streams 1 and 2 and supplied to at least two retentate gas vents (12) and (13),
and/or
the permeate streams from the membrane separation units (2) of a membrane block (1) of the membrane separation stage are supplied to a permeate gas collection pipe (14), where they are either combined to form one permeate gas stream and supplied to a permeate gas vent (15), or where they are divided into at least two permeate gas streams 1 and 2 and supplied to at least two permeate gas vents (15) and (16).

30. Process according to Claim 28,
**characterized in that**
the retentate gas streams from the membrane separation units (2) of a membrane block (1) of the membrane separation stage are combined by means of retentate connection conduits (32) between the retentate gas outlets (30) of the membrane separation units (2) of a membrane block (1) of the membrane separation stage to form one retentate gas stream and supplied to a retentate gas vent (12), or they are divided into at least two retentate gas streams 1 and 2 and supplied to at least two retentate gas vents (12) and (13),
and/or
the permeate gas streams from the membrane separation units (2) of a membrane block (1) of the membrane separation stage are combined by means of permeate connection conduits (33) between the permeate gas outlets (31) of the membrane separation units (2) of a membrane block (1) of the membrane separation stage to form one permeate gas stream and supplied to a permeate gas vent (15), or they are divided into at least two permeate gas streams 1 and 2 and supplied to at least two permeate gas vents (15) and (16).

31. Process according to any of Claims 17 to 30,
**characterized in that**
it is executed in a plant comprising two membrane separation stages A and B according to Claim 14, where the first feed gas stream and the second feed gas stream of different composition are supplied to membrane separation stage A as described in any of Claims 17 to 27,
the first membrane separation stage A separates the first feed gas stream and the second feed gas stream into a first retentate gas stream and a second retentate gas stream of different composition, and/or a first permeate gas stream and a second permeate gas stream of different composition,
the two retentate streams or the two permeate streams from the first membrane separation stage A are supplied to the second membrane separation stage B as two feed streams of different composition, and
the second membrane separation stage B separates the two retentate or permeate streams from membrane separation stage A into a third retentate gas stream and a fourth retentate gas stream of different composition, and/or into a third permeate gas stream and a fourth permeate gas stream of different composition.

32. Process according to any of Claims 17 to 30,
**characterized in that**
it is executed in a plant comprising three membrane separation stages A, B and C according to Claim 15, where the first feed gas stream and the second feed gas stream of different composition are supplied to membrane separation stage A as described in any of Claims 17 to 27,
the first membrane separation stage A separates the first feed gas stream and the second feed gas stream into a first retentate gas stream and a second retentate gas stream of different composition, and into a first permeate gas stream and a second permeate gas stream of different composition,
the two retentate streams from the first membrane separation stage A are supplied to the second membrane separation stage B as two feed streams of different composition,
the second membrane separation stage B separates the two retentate gas streams from membrane separation stage A into a third retentate gas stream and a fourth retentate gas stream of different composition,
the two permeate gas streams from the first membrane separation stage A are supplied to the third membrane separation stage C as two feed streams of different composition,
the third membrane separation stage C separates the two permeate gas streams from membrane separation stage A into a fifth permeate gas stream and a sixth permeate gas stream of different composition.

## Revendications

1. Installation pour la séparation de mélanges de gaz, comprenant
a. une première conduite (7) de gaz d'alimentation qui est appropriée ou conçue pour transporter un premier flux de gaz d'alimentation, et une deuxième conduite (8) de gaz d'alimentation qui est appropriée ou conçue pour transporter un deuxième flux de gaz d'alimentation dont la composition est différente de celle du premier flux de gaz d'alimentation,
b. un étage de séparation à membranes, comprenant un bloc à membranes (1) ou plusieurs blocs à membranes (1), le bloc à membranes (1) / les blocs à membranes (1) comprenant chacun plusieurs unités (2) de séparation à membranes connectées en parallèle, et
∘ chaque unité (2) de séparation à membranes présentant une entrée de gaz (3) et des membranes de séparation de gaz et séparant le mélange de gaz introduit par l'entrée de gaz (3) en un flux de gaz rétentat et un flux de gaz perméat au moyen des membranes de séparation de gaz, et
∘ chaque unité (2) de séparation à membranes comportant une sortie (30) de gaz rétentat pour le flux de gaz rétentat, qui est de préférence raccordée à une conduite (9) de gaz rétentat ou reliée à une ou deux sortie(s) (30) de gaz rétentat de l'unité ou des unités (2) de séparation à membranes voisine(s) du même bloc à membranes (1) au moyen d'une ou plusieurs conduite(s) de raccordement de gaz rétentat (32), et une sortie (31) de gaz perméat pour le flux de gaz perméat, qui est de préférence raccordée à une conduite (10) de gaz perméat ou qui est reliée à une ou deux sortie(s) (31) de gaz perméat de l'unité ou des unités (2) de séparation à membranes voisine(s) du même bloc à membranes (1) au moyen d'une ou de plusieurs conduite(s) (33) de raccordement de perméat,
et
c. un système de distribution de gaz conçu de telle sorte que
• il comprend des conduites de raccordement (18) qui relient entre elles les entrées de gaz (3) de deux unités (2) de séparation à membranes voisines d'un bloc à membranes (1) et/ou une ou plusieurs conduites de distribution (4) qui contiennent chacune plusieurs embranchements (5), qui sont chacun reliés aux entrées de gaz (3) des différentes unités (2) de séparation à membranes d'un bloc à membranes (1) au moyen de conduites d'acheminement (6), un ou plusieurs embranchements (5) pouvant en outre présenter une possibilité de raccordement pour une conduite de gaz d'alimentation, de sorte qu'une conduite de gaz d'alimentation et une conduite d'acheminement (6) puissent être raccordées simultanément à la conduite de distribution (4) respective au moyen du ou des embranchements (5),
• si l'étage de séparation à membranes comprend plusieurs blocs à membranes (1), il comprend des conduites, de préférence des conduites (19a, 19b, 20a, 20b), qui relient entre eux les blocs à membranes (1) de l'étage de séparation à membranes,
• la première conduite (7) de gaz d'alimentation et la deuxième conduite (8) de gaz d'alimentation, indépendamment l'une de l'autre, sont reliées, en des points séparés dans l'espace, respectivement à une conduite de distribution (4) ou à une conduite de raccordement (18) ou à un embranchement (5) ou, le cas échéant, à une conduite reliant entre eux les blocs à membranes (1) de l'étage de séparation à membranes, de préférence une conduite (19a, 19b, 20a ou 20b), ou à une entrée de gaz (3), les points de raccordement étant agencés de telle sorte que deux, ou plus de deux, embranchements (5) et/ou deux, ou plus de deux, entrées de gaz (3) soient agencés entre les points de raccordement de la première conduite (7) de gaz d'alimentation et de la deuxième conduite (8) de gaz d'alimentation.

2. Installation selon la revendication 1,
**caractérisée en ce que**
les points de raccordement de la première conduite (7) de gaz d'alimentation et de la deuxième conduite (8) de gaz d'alimentation sont agencés de telle sorte
que le premier flux de gaz d'alimentation et le deuxième flux de gaz d'alimentation s'écoulent l'un vers l'autre à l'intérieur d'un bloc à membranes (1) ou de plusieurs blocs à membranes (1) de l'étage de séparation à membranes, de préférence dans une ou plusieurs conduites de distribution (4) et/ou dans une ou plusieurs conduites de raccordement (18) ou à l'intérieur de la conduite ou des conduites qui relient entre eux les blocs à membranes (1) de l'étage de séparation à membranes, de préférence la ou les conduites (19a, 19b, 20a, 20b).

3. Installation selon la revendication 1 ou la revendication 2,
**caractérisée en ce que**
l'étage de séparation à membranes comprend un bloc à membranes (1) ou plusieurs blocs à membranes (1), qui comprend ou comprennent chacun une conduite de distribution (4) avec plusieurs embranchements (5) et des conduites d'acheminement (6), une conduite d'acheminement (6) reliant un embranchement (5) respectif à une entrée de gaz (3) respective d'une unité (2) de séparation à membranes,
et
la première conduite (7) de gaz d'alimentation et la deuxième conduite (8) de gaz d'alimentation sont reliées, séparément et indépendamment l'une de l'autre, à la ou aux conduites de distribution (4) et/ou aux embranchements (5), de préférence aux extrémités opposées de la ou des conduites de distribution (4).

4. Installation selon la revendication 1 ou la revendication 2,
**caractérisée en ce que**
l'étage de séparation à membranes contient un bloc à membranes (1) ou plusieurs blocs à membranes (1), qui comprennent chacun plusieurs conduites de raccordement (18), qui relient chacune une entrée de gaz (3) d'une unité (2) de séparation à membranes à la ou aux entrée(s) de gaz (3) de la ou des unité(s) (2) de séparation à membranes voisine(s) dans le bloc à membranes (1),
et
la première conduite (7) de gaz d'alimentation ainsi que la deuxième conduite (8) de gaz d'alimentation sont reliées, séparément et indépendamment l'une de l'autre, respectivement à une entrée de gaz (3) d'une unité (2) de séparation à membranes ou à plusieurs entrées de gaz (3) d'unités (2) de séparation à membranes et/ou à une conduite de liaison (18) ou à plusieurs conduites de liaison (18).

5. Installation selon l'une des revendications 1 à 4, **caractérisée en ce que**
elle comprend une, deux ou trois conduite(s) supplémentaire(s) de gaz d'alimentation, trois (21), quatre et cinq, qui est/sont appropriée(s) pour transporter un, deux ou trois flux de gaz supplémentaires, dont la composition diffère de celle du premier et du deuxième flux de gaz d'alimentation,
et
la ou les conduites supplémentaires de gaz d'alimentation trois (21), quatre et cinq sont reliées au système de distribution de gaz de telle sorte que le flux de gaz trois (21), ou les flux de gaz trois (21) et quatre, ou les flux de gaz trois (21), quatre et cinq sont aptes à être acheminés vers les unités de séparation à membranes au moyen du système de distribution de gaz.

6. Installation selon la revendication 5,
**caractérisée en ce que**
la ou les conduites de gaz d'alimentation trois (21), ou trois (21) et quatre, ou trois (21), quatre et cinq, sont chacune indépendamment les unes des autres
• raccordées à une ou plusieurs conduites de distribution (4), de préférence entre les raccordements de la première conduite (7) de gaz d'alimentation et de la deuxième conduite (8) de gaz d'alimentation et/ou
• est/sont raccordée(s) à une ou plusieurs conduite(s) de raccordement (18), de préférence entre les raccordements de la première conduite (7) de gaz d'alimentation et de la deuxième conduite (8) de gaz d'alimentation
et/ou
• est/sont raccordée(s) à une entrée de gaz (3) ou à plusieurs entrées de gaz (3), l'entrée de gaz (3) ou les entrées de gaz (3) se distinguant de préférence des entrées de gaz (3) auxquelles sont raccordées la première conduite (7) d'alimentation en gaz ou la deuxième conduite (8) d'alimentation en gaz,
et/ou
• est/sont raccordée(s) à une entrée de gaz (3) ou à plusieurs entrées de gaz (3) et à une conduite de raccordement (18) ou à plusieurs conduites de raccordement (18), ces entrées de gaz (3) se distinguant de préférence des entrées de gaz (3) auxquelles la première conduite (7) de gaz d'alimentation ou la deuxième conduite (8) de gaz d'alimentation est raccordée.

7. Installation selon la revendication 5,
**caractérisée**
**en ce que** l'étage de séparation à membranes comprend plusieurs blocs à membranes (1) qui sont combinés en un circuit en anneau, chaque bloc à membranes (1) étant de préférence relié à deux conduites de gaz d'alimentation.

8. Installation selon l'une des revendications 1 à 6, **caractérisée**
**en ce que** l'étage de séparation à membranes comprend plusieurs blocs à membranes (1) qui sont connectés en parallèle.

9. Installation selon la revendication 8,
**caractérisée en ce que**
la distribution de gaz par bloc à membranes (1) comprend une conduite de distribution (4) avec plusieurs embranchements (5) et conduites d'acheminement (6), une conduite d'acheminement (6) reliant respectivement un embranchement (5) à une entrée de gaz (3) d'une unité (2) de séparation à membranes,
et
les conduites de distribution (4) des blocs à membranes (1) respectifs de l'étage de séparation à membranes sont reliées entre elles par des conduites (19a, 19b),
et
la première conduite (7) de gaz d'alimentation et la deuxième conduite (8) de gaz d'alimentation sont raccordées indépendamment l'une de l'autre, en des points séparés dans l'espace, à une conduite de distribution (4) ou à un embranchement (5) ou à une conduite (19a, 19b), les points de raccordement étant agencés de telle sorte que deux, ou plus de deux, embranchements (5) et/ou deux, ou plus de deux, entrées de gaz (3) soient agencés entre les points de raccordement de la première conduite (7) de gaz d'alimentation et de la deuxième conduite (8) de gaz d'alimentation.

10. Installation selon la revendication 8,
**caractérisée en ce que**
le système de distribution de gaz dans chaque bloc à membranes (1) comprend des conduites de raccordement (18) qui relient l'entrée de gaz (3) d'une unité (2) de séparation à membranes à l'entrée de gaz (3) ou aux entrées de gaz (3) de la ou des unités (2) de séparation à membranes voisines dans le bloc à membranes (1),
et
les blocs à membranes (1) de l'étage de séparation à membranes sont reliés entre eux par des conduites (20a, 20b), les conduites (20a, 20b) dans chaque bloc à membranes (1) étant reliées à une ou plusieurs conduites de raccordement (18) et/ou à une ou plusieurs entrées de gaz (3), de préférence, la conduite (20a) dans le bloc à membranes (1) respectif est reliée à une conduite de raccordement (18) ou à une entrée de gaz (3), et la conduite (20b) dans le bloc à membranes respectif est reliée à une conduite de raccordement (18) différente ou à une entrée de gaz (3) différente,
et
la première conduite (7) de gaz d'alimentation ainsi que la deuxième conduite (8) de gaz d'alimentation sont raccordées, indépendamment l'une de l'autre, en des points séparés dans l'espace, à une ou plusieurs conduites de raccordement (18) ou à une ou plusieurs conduites (20a, 20b) ou à une ou plusieurs entrée(s) de gaz (3), les points de raccordement étant agencés de telle sorte que deux, ou plus de deux, entrées de gaz (3) soient situées entre les points de raccordement de la première conduite d'alimentation en gaz (7) et de la deuxième conduite d'alimentation en gaz (8).

11. Installation selon l'une des revendications 1 à 10, **caractérisée en ce que** des mesures constructives sont mises en œuvre dans une ou plusieurs conduites de distribution (4) et/ou une ou plusieurs conduites de raccordement (18) et/ou une ou plusieurs conduites (19a, 19b, 20a, 20b), aux points de contact potentiels des flux de gaz d'alimentation se rencontrant dans la conduite, pour réguler et/ou empêcher dans une large mesure le mélange des flux de gaz d'alimentation, de préférence choisies dans la liste comprenant : la réduction des sections transversales des conduites, l'extension des sections des conduites, l'introduction de mélangeurs statiques, l'utilisation de racleurs dans les conduites de gaz, et des combinaisons de ces mesures.

12. Installation selon l'une des revendications 1 à 11, **caractérisée**
**en ce que**
les conduites de gaz rétentat (9), de préférence toutes les conduites de gaz rétentat (9), des unités (2) de séparation à membranes d'un bloc à membranes (1) de l'étage de séparation à membranes sont amenées à un tube collecteur (11) de gaz rétentat, le tube collecteur (11) de gaz rétentat étant relié à au moins une première conduite (12) d'évacuation de gaz rétentat, de préférence au moins deux conduites (12) et (13) d'évacuation de gaz rétentat,
et/ou
les conduites (10) de gaz perméat, de préférence toutes les conduites (10) de gaz perméat, des unités (2) de séparation à membranes d'un bloc à membranes (1) de l'étage de séparation à membranes sont acheminées vers un tuyau collecteur (14) de gaz perméat, le tuyau collecteur de gaz perméat étant relié à au moins une première conduite (15) d'évacuation de gaz perméat, de préférence à au moins deux conduites (15) et (16) d'évacuation de gaz perméat.

13. Installation selon l'une des revendications 1 à 11, **caractérisée**
**en ce que**
elle comprend des conduites (32) de raccordement de rétentat entre les sorties (30) de gaz rétentat des unités (2) de séparation à membranes d'un bloc à membranes (1) de l'étage de séparation à membranes, au moins une conduite (32) de raccordement de rétentat ou au moins une sortie (30) de gaz rétentat étant en outre reliée à au moins une conduite d'évacuation (12) de gaz rétentat, de préférence, dans un bloc à membranes (1) de l'étage de séparation à membranes, une ou plusieurs conduites (32) de raccordement de rétentat et/ou une ou plusieurs sortie/sorties (30) de gaz rétentat étant reliées indépendamment les unes des autres à une conduite (12) ou (13) d'évacuation de gaz rétentat,
et/ou
elle comprend des conduites (33) de raccordement de perméat entre les sorties (31) de gaz perméat des unités (2) de séparation à membranes d'un bloc à membranes (1) de l'étage de séparation à membranes, au moins une conduite (33) de raccordement de perméat ou au moins une sortie (31) de gaz perméat étant en outre reliée à au moins une conduite (15) d'évacuation de gaz perméat, de préférence, dans un bloc à membranes (1) de l'étage de séparation à membranes, une ou plusieurs conduites (33) de raccordement de perméat et/ou une ou plusieurs sortie/sorties (31) de gaz perméat étant reliées indépendamment les unes des autres à une conduite (15) ou (16) d'évacuation de gaz rétentat.

14. Installation selon l'une des revendications 1 à 13, **caractérisée**
**en ce que**
elle comprend deux étages A et B de séparation à membranes selon la revendication 1, une première conduite (7) de gaz d'alimentation et une deuxième conduite (8) de gaz d'alimentation étant reliées au système de distribution de gaz du premier étage A de séparation à membranes, comme décrit dans l'une des revendications 1 à 10, et le premier étage A de séparation à membranes est conçu de telle sorte que deux flux de rétentat différents l'un de l'autre sont obtenus dans une première conduite (12) d'évacuation de gaz rétentat et une deuxième conduite (13) d'évacuation de gaz rétentat, et/ou deux flux de perméat différents l'un de l'autre sont obtenus dans une première conduite (15) d'évacuation de gaz perméat et une deuxième conduite (16) d'évacuation de gaz perméat, et la première conduite (12) d'évacuation de gaz rétentat et la deuxième conduite (13) d'évacuation de gaz rétentat ou la première conduite (15) d'évacuation de gaz perméat et la deuxième conduite (16) d'évacuation de gaz perméat sont reliées au système de distribution de gaz du deuxième étage B de séparation à membranes, comme décrit dans l'une des revendications 1 à 10.

15. Installation selon l'une des revendications 1 à 13, **caractérisée**
**en ce que**
elle comprend trois étages A, B et C de séparation à membranes selon la revendication 1, une première conduite (7) de gaz d'alimentation et une deuxième conduite (8) de gaz d'alimentation étant reliées au système de distribution de gaz du premier étage A de séparation à membranes, comme décrit dans l'une des revendications 1 à 10, et
le premier étage A de séparation à membranes étant conçu de telle sorte que deux flux de rétentat différents l'un de l'autre sont obtenus dans une première conduite (12) d'évacuation de gaz rétentat et une deuxième conduite d'évacuation (13) de gaz rétentat et deux flux de perméat différents l'un de l'autre sont obtenus dans une première conduite (15) d'évacuation de gaz perméat et une deuxième conduite (16) d'évacuation de gaz perméat, et
la première conduite (12) d'évacuation de gaz rétentat et la deuxième conduite (13) d'évacuation de gaz rétentat sont reliées au système de distribution de gaz du deuxième étage B de séparation à membranes, comme décrit dans l'une des revendications 1 à 10, et
la première conduite (15) d'évacuation de gaz perméat et la deuxième conduite (16) d'évacuation de gaz perméat sont reliées au système de distribution de gaz du troisième étage C de séparation à membranes, comme décrit dans l'une des revendications 1 à 10.

16. Procédé de purification simultanée de deux ou plusieurs flux de gaz, dont la composition diffère à chaque fois, **caractérisé en ce que** la séparation des gaz est effectuée dans une installation selon l'une des revendications 1 à 15.

17. Procédé selon la revendication 16,
**caractérisé**
**en ce qu'**il comprend les étapes suivantes
i) fournir un premier flux de gaz d'alimentation,
ii) fournir un deuxième flux de gaz d'alimentation dont la composition diffère de celle du premier flux de gaz d'alimentation,
iii) alimenter un étage de séparation à membranes avec le premier et le deuxième flux de gaz d'alimentation, dans lequel
• l'étage de séparation à membranes comprend un bloc (1) de séparation à membranes ou plusieurs blocs (1) de séparation à membranes, et le bloc (1) de séparation à membranes ou les blocs (1) de séparation à membranes comprend/comprennent chacun plusieurs unités (2) de séparation à membranes connectées en parallèle,
et dans lequel
• l'étage de séparation à membranes présente un système de distribution de gaz qui comprend des conduites de raccordement (18), qui relient entre elles les entrées de gaz (3) de deux unités (2) de séparation à membranes voisines d'un bloc à membranes (1), et/ou des conduites de distribution (4) qui contiennent plusieurs embranchements (5) qui sont reliés aux entrées de gaz (3) des différentes unités (2) de séparation à membranes d'un bloc à membranes (1) au moyen de conduites d'acheminement (6) séparées, un ou plusieurs embranchements (5) pouvant en outre présenter une possibilité de raccordement pour une conduite de gaz d'alimentation, de sorte qu'une conduite de gaz d'alimentation et une conduite d'acheminement (6) sont aptes à être raccordées simultanément à la conduite de distribution (4) au moyen du ou des embranchements (5),
et dans lequel
• l'étage de séparation à membranes, dans la mesure où il comprend plusieurs blocs à membranes (1), comprend des conduites, de préférence des conduites (19a, 19b, 20a, 20b), qui relient entre eux les blocs à membranes (1) de l'étage de séparation à membranes,
et
le premier et le deuxième flux de gaz d'alimentation étant acheminés, indépendamment l'un de l'autre, en des points séparés dans l'espace, respectivement vers une conduite de distribution (4) ou une conduite de raccordement (18) ou un embranchement (5) ou, le cas échéant, vers une conduite reliant entre eux les blocs à membranes (1) de l'étage de séparation à membranes, de préférence une conduite (19a, 19b, 20a, 20b), ou à une entrée de gaz (3), les points de raccordement du premier et du deuxième flux de gaz d'alimentation étant agencés de telle sorte que deux, ou plus de deux, embranchements (5) et/ou deux, ou plus de deux, entrées de gaz (3) soient agencés entre les points de raccordement,
iv) alimenter les entrées de gaz (3) des unités (2) de séparation à membranes de l'étage de séparation à membranes en premier et deuxième flux de gaz d'alimentation au moyen du système de distribution de gaz,
v) séparer dans les unités (2) de séparation à membranes les mélanges de gaz acheminés par les entrées de gaz (3) des unités (2) de séparation à membranes, au moyen de membranes de séparation de gaz en respectivement un flux de gaz rétentat et un flux de gaz perméat.

18. Procédé selon la revendication 17,
**caractérisé**
**en ce que** le premier et le deuxième flux de gaz d'alimentation sont amenés aux entrées de gaz (3) des unités (2) de séparation à membranes du premier étage de séparation à membranes au moyen d'un système de distribution de gaz,
**en ce que** le premier flux de gaz d'alimentation et le deuxième flux de gaz d'alimentation soient acheminés à l'intérieur d'un bloc à membranes (1) ou de plusieurs blocs à membranes (1) du premier étage de séparation à membranes, de préférence dans une ou plusieurs conduites de distribution (4) et/ou une ou plusieurs conduites de raccordement (18) et/ou à l'intérieur de la ou des conduites qui relient entre eux les blocs à membranes (1) du premier étage de séparation à membranes, de préférence la ou les conduites (19a, 19b, 20a, 20b),
et/ou
**en ce que** dans un bloc à membranes (1), de préférence dans plusieurs blocs à membranes (1), de manière particulièrement préférée dans tous les blocs à membranes (1) de l'étage de séparation à membranes, au moins deux unités (2) de séparation à membranes différentes sont alimentées en flux de gaz, dont la composition diffère.

19. Procédé selon la revendication 17 ou la revendication 18,
**caractérisé en ce que**
l'étage de séparation à membranes contient un bloc à membranes (1) ou plusieurs blocs à membranes (1), qui comprennent chacun une conduite de distribution (4) avec plusieurs embranchements (5) et des conduites d'acheminement (6), une conduite d'acheminement (6) reliant chaque embranchement (5) à une entrée de gaz (3) d'une unité (2) de séparation à membranes,
et
le premier flux de gaz d'alimentation et le deuxième flux de gaz d'alimentation sont acheminés séparément et indépendamment l'un de l'autre vers la ou les conduites de distribution (4), de préférence vers les extrémités opposées de la ou des conduites de distribution (4).

20. Procédé selon l'une des revendications 17 ou 18, **caractérisé en ce que**
l'étage de séparation à membranes comprend un bloc à membranes (1) ou plusieurs blocs à membranes (1), qui comprend ou comprennent chacun plusieurs conduites de raccordement (18) qui relient l'entrée de gaz (3) d'une unité (2) de séparation à membranes à la ou aux entrée(s) de gaz (3) de la ou des unité(s) (2) de séparation à membranes voisine(s) dans le bloc à membranes (1),
et
le premier flux de gaz d'alimentation et le deuxième flux de gaz d'alimentation, séparés l'un de l'autre et indépendants l'un de l'autre, sont respectivement acheminés vers une entrée de gaz d'une unité (2) de séparation à membranes ou vers plusieurs entrées de gaz (3) d'unités (2) de séparation à membranes et/ou vers une conduite de raccordement (18) ou plusieurs conduites de raccordement (18).

21. Procédé selon l'une des revendications 17 à 20,
**caractérisé en ce que**
un, deux ou trois flux de gaz supplémentaires, de composition différente du premier et du deuxième flux de gaz d'alimentation, sont acheminés vers le système de distribution de gaz par l'intermédiaire de la ou des conduites de gaz d'alimentation trois (21), trois (21) et quatre, ou trois (21), quatre et cinq.

22. Procédé selon la revendication 21,
**caractérisé en ce que**
le flux de gaz d'alimentation trois (21), ou les flux de gaz d'alimentation trois (21) et quatre, ou les flux de gaz d'alimentation trois (21), quatre et cinq, est/sont acheminé(s) respectivement
• vers une ou plusieurs conduites de distribution (4), de préférence entre les raccords de la première conduite (7) de gaz d'alimentation et de la deuxième conduite (8) de gaz d'alimentation,
et/ou
• vers une ou plusieurs conduites de raccordement (18), de préférence entre les raccordements de la première conduite (7) de gaz d'alimentation et de la deuxième conduite (8) de gaz d'alimentation,
et/ou
• vers une entrée de gaz (3) ou plusieurs entrées de gaz (3), de préférence dans un bloc à membranes (1) comprenant des conduites de raccordement (18), ces entrées de gaz (3) étant de préférence distinctes des entrées de gaz (3) auxquelles le premier flux de gaz d'alimentation ou le deuxième flux de gaz d'alimentation est acheminé,
et/ou
• vers une entrée de gaz (3) ou plusieurs entrées de gaz (3) et une ou plusieurs conduites de raccordement (18), ces entrées de gaz (3) étant de préférence distinctes des entrées de gaz (3) et des conduites de raccordement (18) vers lesquelles le premier flux de gaz d'alimentation ou le deuxième flux de gaz d'alimentation est acheminé.

23. Procédé selon la revendication 22,
**caractérisé**
**en ce que** plusieurs blocs à membranes (1) de l'étage de séparation à membranes sont combinés en un circuit en anneau, deux flux de gaz d'alimentation étant de préférence acheminés vers chaque bloc à membranes (1).

24. Procédé selon l'une des revendications 17 à 22,
**caractérisé en ce que**
plusieurs blocs à membranes (1) de l'étage de séparation à membranes sont reliés en parallèle.

25. Procédé selon la revendication 24,
**caractérisé en ce que**
la distribution de gaz par bloc à membranes (1) comprend une conduite de distribution (4) avec plusieurs embranchements (5) et des conduites d'acheminement (6), une conduite d'acheminement (6) reliant un embranchement (5) respectif à une entrée de gaz (3) respective d'une unité (2) de séparation à membranes,
et
les conduites de distribution (4) des blocs à membranes (1) respectifs de l'étage de séparation à membranes sont reliées entre elles par des conduites (19a, 19b),
et
le premier flux de gaz d'alimentation et le deuxième flux de gaz d'alimentation sont acheminés séparément et indépendamment l'un de l'autre vers une ou plusieurs conduites de distribution (4) et/ou conduites (19a, 19b).

26. Procédé selon la revendication 24,
**caractérisé en ce que**
le système de distribution de gaz dans chaque bloc à membranes (1) comprend des conduites de raccordement (18) qui relient l'entrée de gaz (3) d'une unité (2) de séparation à membranes à la ou aux entrée(s) de gaz (3) de la ou des unité(s) (2) de séparation à membranes voisine(s) dans le bloc à membranes (1), et
les blocs à membranes (1) de l'étage de séparation à membranes sont reliés entre eux par des conduites (20a, 20b), les conduites (20a, 20b) dans le bloc à membranes respectif étant reliées à une ou plusieurs conduites de raccordement (18) ou à une ou plusieurs entrées de gaz (3), de préférence, la conduite (20a) dans le bloc à membranes respectif est reliée à une conduite de raccordement (18) ou à une entrée de gaz (3) et la conduite (20b) dans le bloc à membranes respectif est reliée à une conduite de raccordement (18) distincte ou à une entrée de gaz (3) distincte, et
le premier flux de gaz d'alimentation ainsi que le deuxième flux de gaz d'alimentation, séparés l'un de l'autre et indépendants l'un de l'autre, sont amenés à une entrée de gaz (3) ou à plusieurs entrées de gaz (3) d'unités (2) de séparation à membranes et/ou à une ou plusieurs conduites de raccordement (18) des blocs de membranes respectifs (1) de l'étage de séparation à membranes et/ou à une ou plusieurs conduites (20a, 20b), à condition que le premier flux de gaz d'alimentation et le deuxième flux de gaz d'alimentation ne soient pas acheminés simultanément vers les mêmes entrées de gaz (3) ou conduites de raccordement (18) ou acheminés simultanément vers une ou plusieurs entrées de gaz (3) identiques et simultanément vers plusieurs entrées de gaz (3) ou conduites de raccordement (18) différentes.

27. Procédé selon l'une des revendications 17 à 26, **caractérisée en ce que** des mesures constructives sont mises en œuvre dans une ou plusieurs conduites de distribution (4) et/ou une ou plusieurs conduites de raccordement (18) et/ou une ou plusieurs conduites (19a, 19b, 20a, 20b), des mesures constructives sont mises en œuvre aux points de contact potentiels des flux de gaz d'alimentation se rencontrant dans la conduite, afin de réguler et/ou d'empêcher dans une large mesure le mélange des flux de gaz d'alimentation, de préférence choisies dans la liste comprenant : la réduction des sections transversales des conduites, l'extension des sections transversales des conduites, l'introduction de mélangeurs statiques, l'utilisation de racleurs dans les conduites de gaz, et des combinaisons de ces mesures.

28. Procédé selon l'une des revendications 17 à 27, **caractérisé**
**en ce qu'**il comprend en outre les étapes suivantes
vi) regrouper les flux de gaz rétentat des unités (2) de séparation à membranes d'un bloc à membranes (1) en un ou plusieurs flux de gaz rétentat,
et/ou
vii) réunir les flux de perméat des unités (2) de séparation à membranes d'un bloc à membranes (1) en un ou plusieurs flux de gaz perméat.

29. Procédé selon la revendication 28,
**caractérisé en ce que**
les flux de rétentat, des unités (2) de séparation à membranes d'un bloc à membranes (1) de l'étage de séparation à membranes sont amenés à un tube collecteur (11) de gaz rétentat et y sont soit regroupés en un flux de gaz rétentat et amenés à une évacuation (12) de gaz rétentat, soit divisés en au moins deux flux de gaz rétentat 1 et 2 et amenés à au moins deux évacuations (12) et (13) de gaz rétentat,
et/ou
les flux de perméat des unités (2) de séparation à membranes d'un bloc à membranes (1) de l'étage de séparation à membranes sont amenés à un tube collecteur (14) de gaz perméat et y sont soit regroupés en un flux de gaz perméat et amenés à une conduite (15) d'évacuation de gaz perméat, soit y sont divisés en au moins deux flux de gaz perméat 1 et 2 et amenés à au moins deux conduites (15) et (16) d'évacuation de gaz perméat.

30. Procédé selon la revendication 28,
**caractérisé en ce que**
les flux de gaz rétentat des unités (2) de séparation à membranes d'un bloc à membranes (1) de l'étage de séparation à membranes sont regroupés en un flux de gaz rétentat au moyen de conduites (32) de raccordement de rétentat entre les sorties (30) de gaz rétentat des unités (2) de séparation à membranes d'un bloc à membranes (1) de l'étage de séparation à membranes et sont amenés à une évacuation (12) de gaz rétentat ou répartis en au moins deux flux 1 et 2 de gaz rétentat et acheminés vers au moins deux conduites (12) et (13) d'évacuation de gaz rétentat,
et/ou
les flux de gaz perméat des unités (2) de séparation à membranes d'un bloc à membranes (1) de l'étage de séparation à membranes sont regroupés en un flux de gaz perméat au moyen de conduites (33) de raccordement de perméat entre les sorties (31) de gaz perméat des unités (2) de séparation à membranes d'un bloc à membranes (1) de l'étage de séparation à membranes et amenés à une conduite (15) d'évacuation de gaz perméat ou répartis en au moins deux flux de gaz perméat 1 et 2 et acheminés vers au moins deux conduites (15) de gaz perméat et (16).

31. Procédé selon l'une des revendications 17 à 30,
**caractérisé en ce que**
il est mis en œuvre dans une installation qui comprend deux étages A et B de séparation à membranes selon la revendication 14,
le premier flux de gaz d'alimentation et le deuxième flux de gaz d'alimentation, qui diffèrent par leur composition, étant amenés à l'étage A de séparation à membranes comme décrit dans l'une des revendications 17 à 27,
le premier étage A de séparation à membranes séparant le premier flux de gaz d'alimentation et le deuxième flux de gaz d'alimentation en un premier flux de gaz rétentat et un deuxième flux de gaz rétentat, qui diffèrent par leur composition, et/ou en un premier flux de gaz perméat et un deuxième flux de gaz perméat, qui diffèrent par leur composition,
les deux flux de rétentat ou les deux flux de perméat du premier étage A de séparation à membranes étant amenés au deuxième étage B de séparation à membranes sous forme de deux flux d'alimentation dont la composition diffère, et
le deuxième étage B de séparation à membranes séparant les deux flux de rétentat ou de perméat de l'étage A de séparation à membranes en un troisième flux de gaz rétentat et un quatrième flux de gaz rétentat, qui diffèrent par leur composition, et/ou en un troisième flux de gaz perméat et un quatrième flux de gaz perméat, qui diffèrent par leur composition.

32. Procédé selon l'une des revendications 17 à 30, **caractérisé en ce que**
il est mis en œuvre dans une installation qui comprend trois étages A, B et C de séparation à membranes selon la revendication 15,
le premier flux de gaz d'alimentation et le deuxième flux de gaz d'alimentation, qui diffèrent par leur composition, étant amenés à l'étage A de séparation à membranes comme décrit dans l'une des revendications 17 à 27,
le premier étage A de séparation à membranes séparant le premier flux de gaz d'alimentation et le deuxième flux de gaz d'alimentation en un premier flux de gaz rétentat et un deuxième flux de gaz rétentat, qui se distinguent par leur composition, et en un premier flux de gaz perméat et un deuxième flux de gaz perméat, qui se distinguent par leur composition,
les deux flux de rétentat du premier étage A de séparation à membranes étant acheminés vers le deuxième étage B de séparation à membranes sous forme de deux flux d'alimentation dont la composition diffère,
le deuxième étage B de séparation à membranes séparant les deux flux de gaz rétentat de l'étage A de séparation à membranes en un troisième flux de gaz rétentat et un quatrième flux de gaz rétentat, qui diffèrent par leur composition,
les deux flux de gaz perméat du premier étage A de séparation à membranes étant amenés au troisième étage C de séparation à membranes sous forme de deux flux d'alimentation, qui diffèrent par leur composition,
le troisième étage C de séparation à membranes séparant les deux flux de gaz perméat de l'étage A de séparation à membranes en un cinquième flux de gaz perméat et un sixième flux de gaz perméat, qui diffèrent par leur composition.
